# EUROPEAN PATENT SPECIFICATION

(11) **EP 0 584 257 B1**
(45) Date of publication and mention of the grant of the patent: **04.08.2004**
(21) Application number: 92912984.9
(22) Date of filing: 15.05.1992
(51) Int. Cl.: G06F 1/08, G06F 1/26, G06F 1/32, G06F 5/00, G06F 12/16, G06F 3/023, G06F 3/033, G06F 3/06, G06F 13/24

(54) **POWER MANAGEMENT CAPABILITY FOR A MICROPROCESSOR HAVING BACKWARD COMPATIBILITY**
LEISTUNGSMANAGEMENTSFUNKTION FÜR EINEN RÜCKWÄRTSKOMPATIBLEN MIKROPROZESSOR
FONCTION GESTION DE PUISSANCE POUR MICROPROCESSEUR PERMETTANT DES COMPATIBILITES ANTERIEURES

(30) Priority: 17.05.1991 US 705039; 17.05.1991 US 703026; 30.08.1991 US 752342; 03.04.1992 US 865048; 03.04.1992 US 866787
(43) Date of publication of application: 02.03.1994
(60) Divisional application: 03019100.1
(73) Proprietor: Packard Bell NEC, Inc., Woodland Hills, CA 91367 (US)
(72) Inventor: FOSTER, Mark J., Acton, Massachusetts 01718 (US); FAKHRUDDIN, Saifudden, Stevensville, Michigan 49127 (US); WALKER, James, L., Benton Harbor, MI 49022 (US); MENDELOW, Matthew, B., Saint Joseph, MI 49085 (US); SUN, Jiming, Saint Joseph, MI 49058 (US); BRAHMAN, Rodman, S., Saint Joseph, MI 49085 (US); KRAU, Michael, P., Benton Harbor, MI 49022 (US); WILLOUGHBY, Brian, D., Stevensville, MI 49127 (US); MADDIX, Michael, D., Saint Joseph, MI 49085 (US); BELT, Steven L., Pflugerville, Tx 78660 (US); HOVEY, Scott A., Richardson, Tx 75082 (US); RUTHENBECK, Mark, A., Stevensville, MI 49127 (US); MART, Gregory, Allen, Saint Joseph, MI 49085 (US); VANDERHEYDEN, Randy J., Palo Alto, Ca 94303 (US); GRABON, Robert, J., Berrien Springs, MI 49103 (US); PANDYA, Chandrakant H., Austin, Texas 78741 (US); TERRY-GRAY, Neysa, K., Baroda, MI 49101 (US)
(74) Representative: Lieck, Hans-Peter, Dipl.-Ing.
(86) International application number: PCT/US1992/004169
(87) International publication number: WO 1992/021081

(56) References cited:
- EP-A- 0 041 406
- EP-A- 0 171 747
- EP-A- 0 230 351
- EP-A- 0 381 021
- EP-A- 0 405 925
- EP-A- 0 416 257
- EP-A- 0 419 909
- EP-A- 0 435 082
- WO-A-89/03109
- WO-A-89/06012
- GB-A- 2 219 420
- GB-A- 2 235 797
- JP-A- 53 022 345
- US-A- 4 317 180
- US-A- 4 381 552
- US-A- 4 458 307
- US-A- 4 506 323
- US-A- 4 523 295
- US-A- 4 564 751
- US-A- 4 689 761
- US-A- 4 694 393
- US-A- 4 763 333
- US-A- 4 823 292
- US-A- 4 868 832
- US-A- 4 870 570
- US-A- 4 933 785
- US-A- 4 945 335
- US-A- 5 021 983
- US-A- 5 068 652
- US-A- 5 077 551
- US-A- 5 129 091
- PATENT ABSTRACTS OF JAPAN vol. 009, no. 296 (P-407), 22 November 1985 & JP 60 132220 A (SANYO DENKI KK), 15 July 1985,
- PATENT ABSTRACTS OF JAPAN vol. 014, no. 167 (P-1031), 30 March 1990 & JP 02 022715 A (NIPPON DENKI FUIIRUDO SERVICE KK), 25 January 1990,
- IBM TECHNICAL DISCLOSURE BULLETIN, vol. 28, no. 7, December 1985, page 3187/3188 XP002023994 "SUSPENDING AND RESUMING THE EXECUTION OF AN EXPERT SYSTEM"
- IBM TECHNICAL DISCLOSURE BULLETIN, vol. 32, no. 8B, 1 January 1990, page 449/450 XP000082092 "ENHANCED MOUSE MODE FOR KEYBOARD/MOUSE CONTROLLER"
- IBM TECHNICAL DISCLOSURE BULLETIN, vol. 27, no. 4a, September 1984, NEW YORK US, pages 2138-2139, XP000674053 "Multiplexed Keyboard Control Signalling"
- IBM TECHNICAL DISCLOSURE BULLETIN, vol. 29, no. 6, November 1986, NEW YORK US, pages 2641-2643, XP002031227 "Method for Warning Users of a Low Battery Condition on a Battery-Powered Computer"
- PATENT ABSTRACTS OF JAPAN vol. 014, no. 076 (P-1005), 13 February 1990 & JP 01 292433 A (CANON INC), 24 November 1989,
- PATENT ABSTRACTS OF JAPAN vol. 013, no. 557 (P-974), 12 December 1989 & JP 01 232408 A (SHARP CORP), 18 September 1989,
- ELECTRONIC ENGINEERING, vol. 62, no. 763, 1 July 1990, pages 43, 45-46, XP000138234 GABLE M: "DESIGNING A LAPTOP COMPUTER WITH POWER MANAGEMENT FEATURES"
- PATENT ABSTRACTS OF JAPAN vol. 015, no. 344 (P-1245), 30 August 1991 & JP 03 129546 A (NIPPON TELEGR & TELEPH CORP), 3 June 1991,
- Microprocessor Systems Design, PWS-Kent Publishing Company, 1987, ALAN CLEMENTS, pages 246-247, 117, 353.

## Description

### TECHNICAL FIELD

This invention relates generally to a computer system having suspend/resume capability in a protected mode according to the preamble of claim 1.

### BACKGROUND ART

There are existing microprocessors which have the capability to operate in both a protected mode and an unprotected mode. In the unprotected mode, a program running in the microprocessor has access to all operational capabilities of the microprocessor, whereas in one or more protected modes the program has different degrees of accessibility to the operational capabilities of the microprocessor. While computer systems based on protected mode microprocessors have been adequate for most purposes, they have not been satisfactory in all respects.

A further consideration is that some operating systems maintain time and date information separate from the time and date information maintained in hardware, and while the hardware will automatically keep its time and date accurate during a suspend, the time and date in the operating system may become static at the point suspend is entered.

A further consideration is that, while the system is in the suspend mode, a user may remove a floppy disk which was present in a floppy disk drive of the system at the time it was powered down, and may even replace it with a different disk. When the interrupted application program is resumed at the end of the suspend mode, there is the danger that it will not realize that the original disk has been replaced with a new disk, and attempt to write data to the new disk with the assumption that it is really the original disk, thereby destroying information on the new disk which the user did not wish to lose.

It may be desirable for a battery-operated system to automatically enter suspend mode when the system is not being actively used in order to conserve battery power, but this can be annoying to the user, and is not absolutely necessary where the system is temporarily operating on AC power.

While separate switches can be used to turn system power on and off and to place the system in suspend mode, this adds to the cost of the hardware and presents the risk that the user may inadvertently actuate the power-off button and thus lose the current operational state of the system in a situation where the user basically intends to always enter and leave a suspend mode without losing the existing state of the system.

A further problem is that a user may wish to leave his system for a brief period of time without exiting the application program or turning the system off, and yet want to prevent others from using the keyboard (or other input device) to make alterations or to examine information in the computer system.

A further factor is that conventional floppy disk drives often have internal registers which can be written but cannot be read. If such a disk drive is turned off in order to save power during a suspend mode, the contents of the internal register must be restored when the disk drive is turned back on at the end of suspend mode. However, it is not possible to read the register before suspend mode is entered in order to determine its contents. The desire of users to have a computer system which is compatible with pre-exiting disk drives makes it impractical to simply design a new drive in which all the registers are readable.

When implementing suspend mode, maintaining power to the main memory is commonly viewed as necessary in order to avoid losing the current state of the application program which has been temporarily interrupted, but the maximum duration of the suspend interval is less than it might otherwise be as a result of the fact that a battery powering the system will lose power faster when it has to maintain the main memory than when it does not.

Commercially available hard disk drives can often be selectively programmed in different ways. For example, there are hard disk drives which can be programmed to a multiple mode setting which allows data transfer to occur in multiple sector blocks with only one interrupt at the end of the block. Also, there are drives which can be given a predetermined time value and, whenever this time period elapses without an access to the drive, the drive automatically stops its motor, and does not start the motor again until a further access occurs. Moreover, there are hard disk drives which can be configured for a specific number of tracks per disk, sectors per track and number of heads. In a commercially available drive, these features are initialized by sending commands/data to the drive, but the drive usually does not provide any way for the system to subsequently obtain from the drive an indication of how these features have been set. It is assumed that the operating system already knows how it has set these features.

In order to use a hard disk of this type with a system having suspend/resume capability, and since the electronic circuitry in the drive will forget its current status during the suspend operation because of the fact that power to the drive circuitry is turned off, it is important that the exact status of the hard disk drive prior to the suspend operation be stored before the suspend, and that this status be restored in the hard disk drive when operation subsequently resumes. Otherwise, the hard disk drive will operate differently after the suspend operation than it did before the suspend operation, which in turn may cause the application program to operate differently and/or improperly, which would obviously defeat the entire purpose of the suspend/resume capability.

Consequently, it is important for the hardware of a computer system (including the firmware in read only memory) to be designed so that it maintains externally of the hard disk drive a record of the specific settings to which the drive has been programmed. Thus, in a traditional system of the IBM compatible type, the firmware program commonly referred to as the basic input/output system (BIOS) would maintain this external record of the disk settings. So long as the operating system communicated with the disk drive only through the routines of the BIOS, the BIOS could maintain this record with no difficulty whatsoever. However, there are commercially available operating systems such as OS/2 and UNIX, which bypass the BIOS routines and directly set parameters in the hard disk drive. When the BIOS is bypassed, it obviously cannot maintain an accurate record of the specific settings programmed in the hard disk drive. Consequently, a system which implements suspend/resume capability and uses a conventional hard disk drive cannot guarantee proper operation with certain pre-existing programs such as OS/2 and UNIX. On the other hand, it is desirable to avoid the design of a new hard disk drive which would permit proper operation of OS/2 and UNIX in a system with suspend/resume capability, but which is incompatible with existing interface and cabling standards.

If a user inadvertently closes the lid without remembering to turn off the power, the system can continue to operate and will run down the battery. One solution to this problem is to provide a lid switch which, in response to movement of the lid to the closed position, shuts off power to the system. However, this can be disadvantageous because, if the user unintentionally bumps the lid and causes it to close, the contents of the volatile semiconductor memory in the computer will be lost, and thus the user may lose important data or program information which he or she did not'wish to lose.

An alternative known approach is to respond to the close of the lid by producing an audible beep rather than shutting off power to the system. This permits the user to reopen the lid and continue operation without any loss of data or program information. Nevertheless, if the user does not hear the beep or forgets to open the lid following the beep, the battery may run down and cause the contents of the semiconductor memory to be lost.

When the known system enters the standby mode, it is very visible to the user that the standby mode has been entered, because the computer turns the display off and halts program execution. Further, if the user presses a key or a push-button switch in order to exit standby mode and return to normal operation, a noticeable time interval usually elapses before the system is again running normally, which can be very annoying to a user.

EP-A-0230351 discloses a power management system including a CPU which has only a single, i. e. normal, operational state when the computer system is running in a normal power condition.

In GB-A-2235797 normal, sleep and slow power states are mentioned, which relate to reduced power states of the CPU as determined by the power management system and thus do not relate to operational states defined by the CPU during a normal power condition.

From Electronic Engineering, vol. 62, no. 763, 1 July 1990, pages 43, 45 to 46, XP000138234 Gable M: "Designing a laptop computer with power management features" a power management system for a laptop is known, with specifically an Intel type 286-386 microprocessor being mentioned. Such microprocessors include a protected mode of operation defined solely by the CPU to be backwards compatible with application programs based upon the DOS operating system. This reference does not mention power management for a CPU operating in a mode of operation other than a normal mode of operation.

One object of the present invention is to provide a system which is configured around a protected mode processor and is capable of properly carrying out a suspend and resume even when a restricted mode of operation is in effect.

A further object is to provide a system which can ensure that time and date information in the active operating system is accurate following a suspend and resume.

A further object is to provide a system which can carry out a suspend and resume operation while reducing the risk the error due to the removal or exchange of a floppy disk present in a floppy disk drive of the system at the time of the suspend.

A further object is to provide a system which has respective sets of configuration parameters for use when the system is respectively operating under AC and DC power, and an arrangement for automatically switching between these respective configurations when the system is switched between AC power and DC power.

A further object is to provide a suspend/resume system having a single button which is deactuated to place the system in either a suspend mode or a power off mode, the system having an internal arrangement which specifies the effect of this button.

A further object is to provide a system which uses a conventional floppy disk drive without physical modification and which is capable of properly reconfiguring the floppy disk drive following a suspend and resume operation.

A further object is provide a system capable of carrying out a suspend and resume operation without maintaining power to the main system memory.

A further object of the present invention to provide a method and apparatus facilitating use of a hard disk drive in a computer system with suspend/resume capability so as to maintain compatibility with pre-existing programs, while simultaneously maintaining compatibility with existing interface and cabling standards.

A further object of the present invention is to provide such a system in which the disk drive facilitates save and restore of its current status.

A further object of the invention to provide such an apparatus which involves little or no redesign of the circuitry of a hard disk drive and associated cabling, so that the disk drive has a cost comparable to that of pre-existing drives.

A further object of the invention is therefore to provide an arrangement for causing a system to enter and subsequently exit suspend mode in response to closing and subsequent opening of a lid.

A further object of the present invention to provide a computer system having a further mode which provides a level of power reduction over a normal operational mode but which is effectively imperceptible to the user.

These objects are attained by a computer system according to claim 1.

### BRIEF DESCRIPTION OF THE DRAWINGS

Preferred embodiments of the present invention will be described in detail hereinafter with reference to the accompanying drawings, in which:
Figure 1 is a block diagram of a computer system which embodies features of the present invention;
Figure 2 is a state diagram for a state machine which is a component of the system of Figure 1;
Figure 3 is a diagram showing the organization of a main memory which is a component of the system of Figure 13;
Figures 4-14 are flowcharts showing respective portions of a program executed by a main processor of the computer system of Figure 1;
Figures 15 and 16 are diagrams representing the organization of respective memories used in an auxiliary processor which is a component of the system of Figure 1;
Figures 17-20 are flowcharts showing respective portions of a program executed by the auxiliary processor;
Figure 21 is a flowchart of pertinent portions of a program executed by a microprocessor in a hard disk drive of Figure 1;
Figure 22 is a flowchart of an alternative embodiment of the program represented by the flowchart of Figure 21;
Figure 23 is a flowchart of another alternative embodiment of the program of Figure 21;
Figure 24 is a block diagram of a computer system embodying the present invention;
Figures 25 and 26 are flowcharts of selected program segments executed by an auxiliary processor of the system of Figure 24;
Figures 27-31 are flowcharts of selected program segments executed by a main processor of the system of Figure 24;

### DETAILED DESCRIPTION

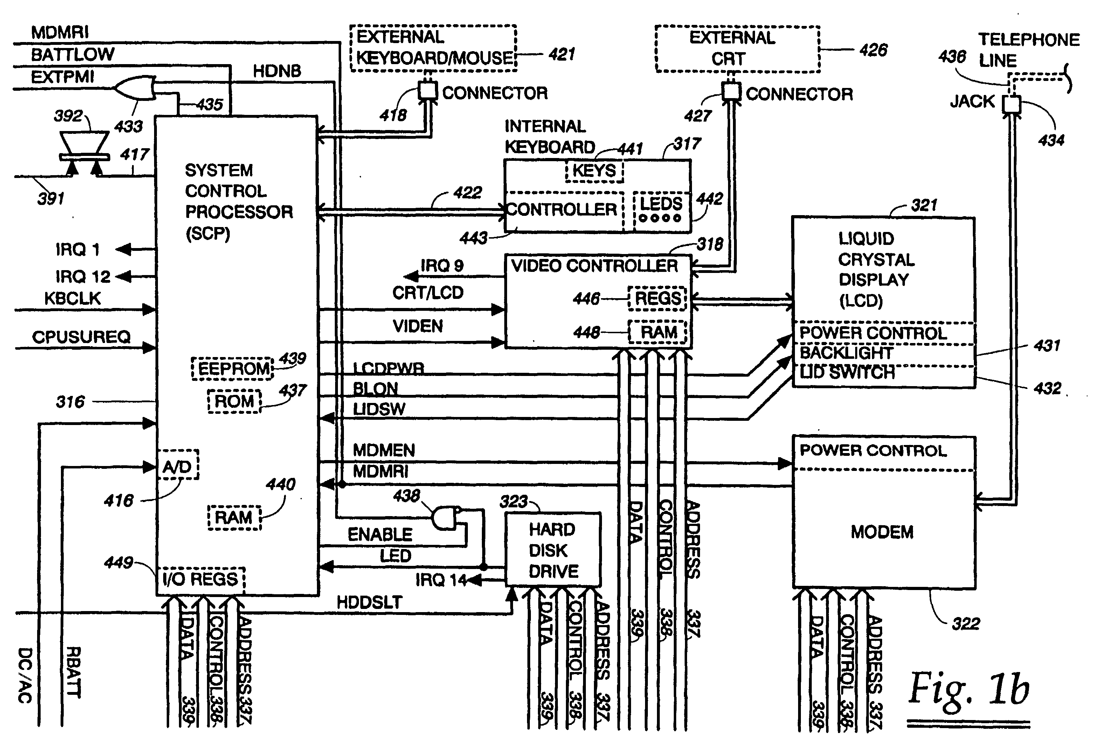

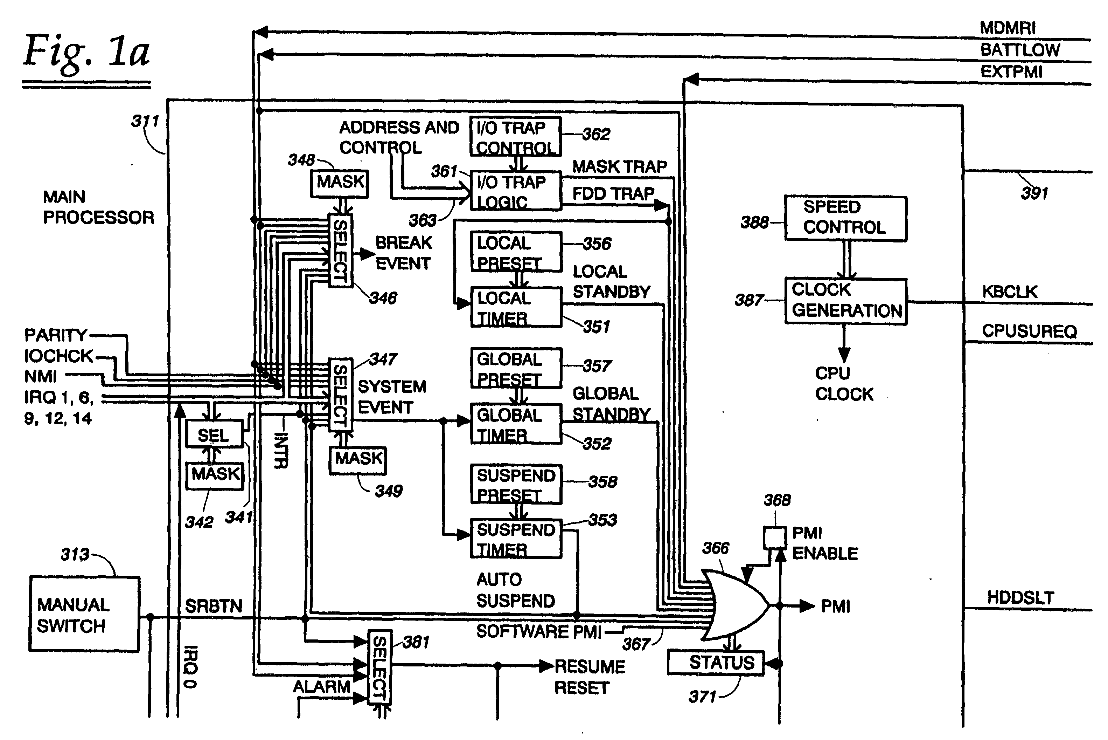

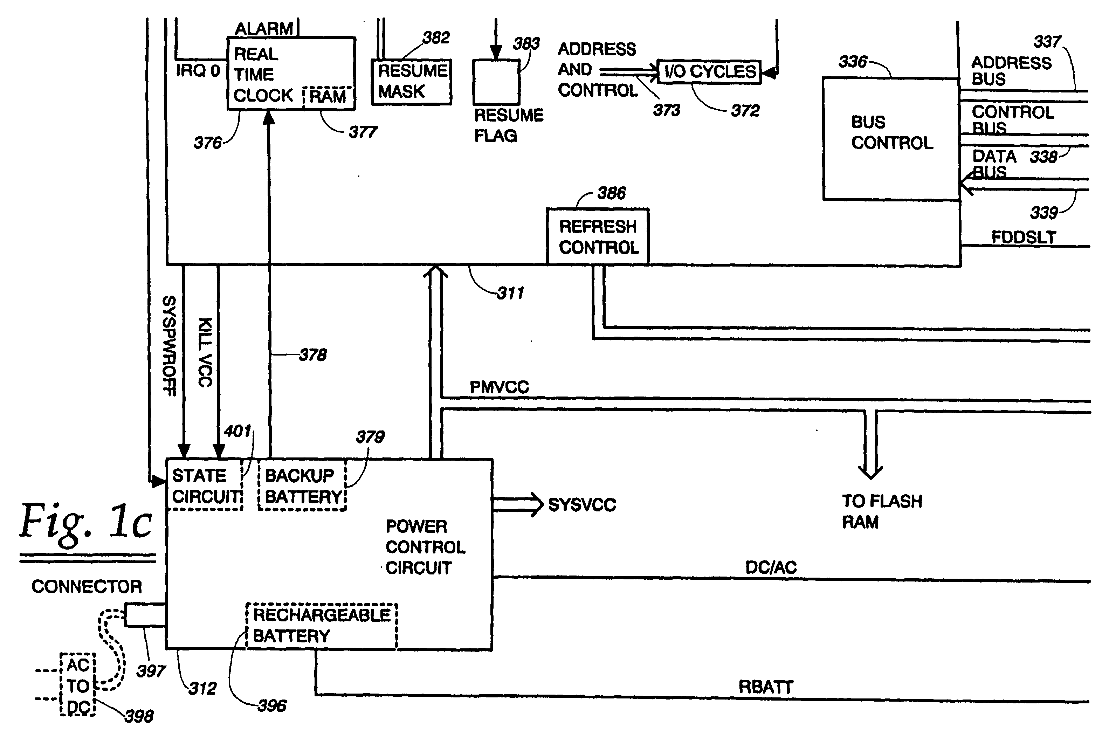

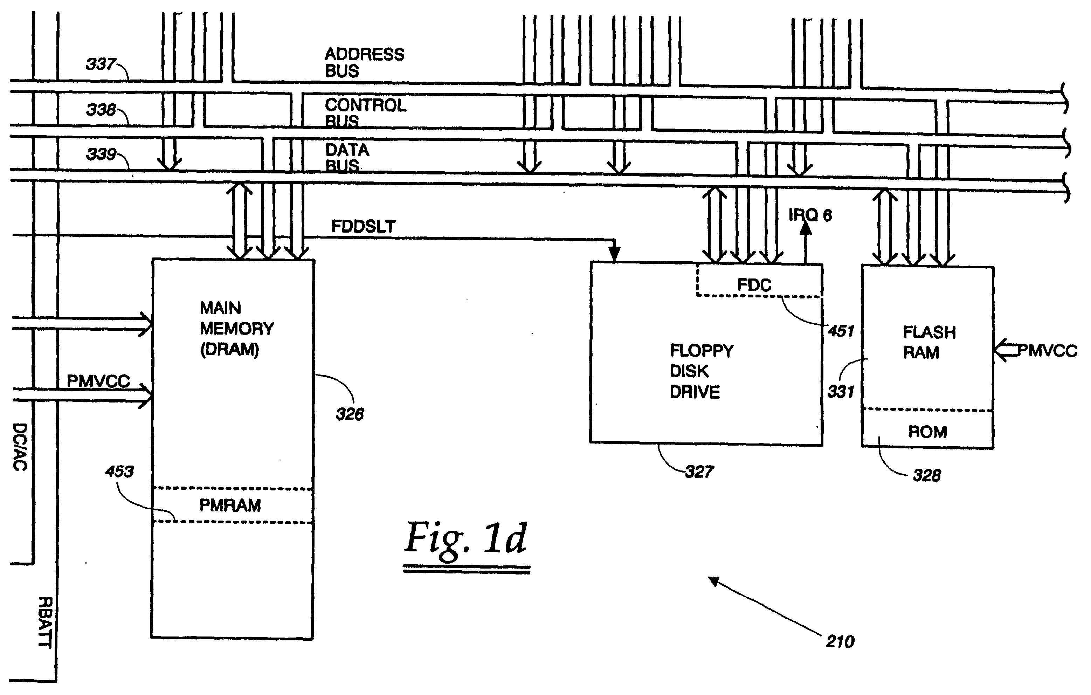

Figures 1 is a block diagram of a "notebook" type laptop computer system 310 which embodies features of the present invention. The computer system 310 includes a main processor 311, a power control circuit 312, a manually operable power control switch 313, a system control processor (SCP) 316, an internal keyboard 317, a video controller circuit 318, a monochrome liquid crystal display (LCD) unit 321, a modem 322, a hard disk drive (HDD) 323, a main memory 326 implemented with dynamic random access memory (DRAM) chips, a floppy disk drive (FDD) 327, a.read only memory (ROM) 328, and a flash RAM 331.

A microprocessor suitable for use in the system 310 of Figure 1 is the Intel 386-SL, which was developed by Intel Corporation of Santa Clara, California under a license from the present Applicant. It will be recognized that other functionally equivalent microprocessors may be developed and could also be used for the main processor 311. Since detailed information regarding the Intel 386-SL is available from Intel, the entire internal architecture thereof has not been shown and described in detail here. The processor 311 has an unrestricted mode and at least one restricted or "protected" mode. In Figure 1, only features which are important to an understanding of the present invention are depicted and described.

More specifically, the processor 311 includes a bus control circuit 336, which controls an address bus 337, a control bus 338 and a bidirectional data bus 339 coupling the processor 311 to other major components of the system. The processor 311 also includes an interrupt selector 341 having respective inputs to which are coupled six interrupt signals IRQ 0, 1, 6, 9, 12 and 14. An IRQ mask register 342 can be loaded by software with a mask having six bits which each correspond to a respective one of the six interrupt lines. When each mask bit is a binary "1", the selector 341 actuates its single INTR output line whenever the associated interrupt line is actuated, whereas if the mask bit is a binary "0", the selector 341 ignores the associated interrupt line.

A break event selector 346 and a system event selector 347 each have a plurality of inputs, and different signals are coupled to respective inputs of both of the selectors 346 and 347. These signals include the six IRQ interrupt signals, and the INTR signal from the interrupt selector 341. The other signals include a modem ring indicator signal MDMRI generated by the modem 322, a battery low warning signal BATTLOW generated by the SCP 316, a parity signal PARITY which can be controlled by a device such as the main memory 326 which carries out parity checking, an input/output (I/O) channel check signal IOCHCK which can be controlled by I/O devices, a non-maskable interrupt NMI which has a higher priority than the IRQ interrupt signals, the output signal SRBTN from the manual switch 313, and an AUTO SUSPEND signal which will be described in more detail later. Associated with each of the selectors 346 and 347 is a respective mask register 348 or 349 which is loaded by software, and each of the selectors 346 and 347 in the associated mask register 348 or 349 functions in a manner similar to that described above for the selector 341 and associated mask register 342. The break event selector 346 produces a BREAK EVENT output signal, and the system event selector 347 produces a SYSTEM EVENT output signal.

The processor 311 includes three hardware timers 351-353, in particular a local timer 351, a global timer 352, and a suspend timer 353. Associated with each timer is a respective preset register 356-358, which is controlled by software and can be set to enable or disable the associated timer. Further, each preset register includes a numerical value which defines the time interval which the associated timer is to measure. The SYSTEM EVENT signal is connected to each of the timers 352 and 353, and each time this signal is actuated it causes each of these timers which is enabled to restart the timing of its specified time interval. When a user is actively using the system, the SYSTEM EVENT signal will be actuated so frequently that the timers 352 and 353 will typically not be able to time out the full specified time interval. On the other hand, if the user walks away from the system for a period of time, the SYSTEM EVENT signal may remain deactuated for a long period of time, in which case the timers 352 and 353 may time out. When the timer 352 times out, it actuates an output signal GLOBAL STANDBY, and when the timer 353 times out it actuates the signal AUTO SUSPEND. Although the timer 353 is a hardware timer provided to time a suspend interval, in the preferred embodiment this hardware timer is kept disabled, and the suspend interval is timed by software in the SCP in a manner described in more detail later. The local timer 351 operates in a similar manner to the timers 352 and 353 and produces an output signal LOCAL STANDBY if it times out, but the signal used to restart the timer 351 is a different signal FDD TRAP, which is discussed below.

The processor 311 includes an I/O trap logic circuit 361 which receives address and control information at 363 from the bus control unit 336, and which is controlled by an I/O trap control register 362. The register 362 is set by software and, in the preferred embodiment, defines a range of I/O addresses assigned to control registers in the floppy disk drive 327, and the I/O address assigned to the system event mask register 349. Whenever the I/O trap logic 361 detects that one of these addresses is being accessed, it actuates its FDD TRAP output signal if the floppy drive is being accessed and its MASK TRAP signal if the mask register is being accessed, the FDD TRAP signal having the effect of restarting the local timer 351, as mentioned above.

The BATTLOW signal, the FDD TRAP signal, the MASK TRAP signal, the LOCAL STANDBY signal, the GLOBAL STANDBY signal, the AUTO SUSPEND signal and the SRBTN signal are all connected to respective inputs of an OR gate 366. A further input of the gate 366 is connected to an external power management interrupt signal EXTPMI from the SCP 316, and another input is connected at 367 to a power management interrupt signal which can be selectively actuated by software. A flip-flop 368 disables the output of the gate 366 when it is set, and can be controlled by software. When any one of the inputs to the gate 366 is actuated, the gate 366 generates at its output a power management interrupt signal PMI.

In response to actuation of the PMI signal, the PMI enable flip-flop is automatically set, and a status register 371 is automatically loaded with an image of the logical states of the inputs to the gate 366, so that software can subsequently examine the register 371 and identify one or more of the inputs to gate 366 which were responsible for generating the PMI interrupt signal. In addition, a circuit 372 receives address and control information at 373 from the bus control unit 336, and is effectively a first-in/first-out (FIFO) memory which stores the last several I/O bus cycles performed by bus control 336. In response to actuation of the PMI signal, the circuit 372 stops storing this information, and thus contains a static indication of the most recent I/O cycles.

The processor 311 also includes a real time clock (RTC) circuit 376, which includes a small amount of RAM 337 which is accessible to software. The RAM 337 contains the date, the time-of-day, and a certain amount of system configuration information. When the computer system 310 is completely turned off, the real time clock circuit 376 nevertheless receives a small amount of power at 378 from a back-up battery 379 in the power control circuit 312, so that the real time clock circuit 376 can keep the date and time information in RAM 337 accurate. The interrupt signal IRQ0 is generated by the real time clock circuit 376, and in particular is actuated in a periodic manner, so that an operating system or application program which maintains its own time or date can keep that time and date updated. The real time clock circuit 376 can also be programmed by software to actuate an ALARM output at a specified date and time.

The ALARM signal is connected to one input of a resume selector 381, the other three inputs of which are connected to the SRBTN signal from manual switch 313, the BATTLOW signal from SCP 316, and the modem ring indicator signal MDMRI from the modem 332. A resume mask register 382 which can be set by software is used to selectively mask the ALARM signal, the MDMRI signal, or the BATTLOW signal. It is not possible for the mask register 382 to directly mask the SRBTN signal from the switch 313. However, if the BATTLOW signal is actuated and is not masked by the mask register 382, it will mask all three of the signals SRBTN, ALARM and MDMRI. Summarizing, if the BATTLOW signal is masked or is not masked but is deactuated, the selector 381 will produce a RESUME RESET signal at its output in response to actuation of the signal SRBTN, and also in response to actuation of either of the signals ALARM and MDMRI when not masked by the register 382. The RESUME RESET signal is a special reset of the processor 311, which will be discussed again later. The processor 311 includes a hardware resume flag 383, which is forcibly set by the RESUME RESET signal and is forcibly cleared by other types of reset signals. The RESUME flag 383 can be tested and cleared by software.

The processor 311 also includes a refresh control circuit 386, which controls the refresh of the DRAM chips in the main memory 326. The refresh control circuit 386 can be set to refresh the memory chips at different rates, the power consumption of DRAM chips being lower for lower refresh rates than for higher refresh rates.

The processor 311 also includes a clock generation circuit 387 which generates a CPU clock signal, and a keyboard clock signal KBCLK which is supplied to an interrupt input of the SCP 316. A speed control register 388 can be set by software to select one of a range of frequencies for the CPU clock signal, or to completely stop the CPU clock signal. Power consumption within the processor 311 is dependent on its clock speed, and in particular is lower for lower clock speeds.

The processor 311 outputs a signal 391 which is connected to a conventional piezo speaker 392 and, when actuated, can cause the speaker 392 to beep. In addition, the processor generates a signal CPUSUREQ which is connected to the SCP and is described in more detail later. Further, the processor generates two signals FDDSLT and HDDSLT which, when deactuated, turn off or at least reduce power to the floppy disk drive 327 and hard disk drive 323, respectively. The processor also generates two control signals SYSPWROFF and KILLVCC which are connected to the power control circuit 312 and are described in more detail below.

As mentioned above, the power control circuit 312 includes a back-up battery 379. In addition, the power control circuit 312 has a rechargeable battery 396, and has a connector 397 to which can be releasably connected a conventional external AC to DC convertor 398 adapted to be plugged into a standard wall socket. When the convertor 398 is present and supplying power to the power control circuit 312, the power from the convertor 98 is used by the circuit 312 to provide power needed throughout the entire system 310, and to simultaneously recharge the rechargeable battery 396. When no convertor 398 is connected to the connector 397, power required throughout the system 310 when the system is on is drawn from the rechargeable battery 396. In the event no convertor 398 is present and the rechargeable battery 396 either becomes discharged or is removed for replacement, the back-up battery 379 is used to supply enough power to maintain the system in at least a low power mode.

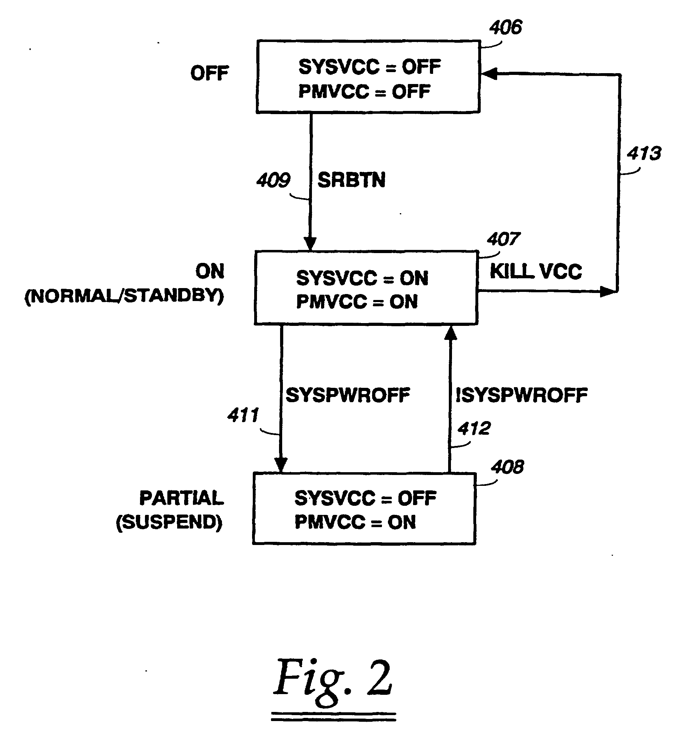

The power control circuit 312 has a power output PMVCC on which it supplies power to the processor 311, main memory 326, and flash RAM 331, and has a power output SYSVCC on which it supplies power to other system components. The supply of power to these two power outputs is controlled by a state circuit 401. Figure 2 is a state diagram showing the basic operation of the state circuit 401 of the power control circuit 312. The state diagram includes three states 406-408. The state 406 represents a situation where the computer system 310 of Figure 1 is entirely off. In this state, SYSVCC and PMVCC are both off, and only the real time clock circuit 376 in the processor 311 and the state circuit 401 in the power control circuit 312 are receiving power. The second state 407 corresponds to normal operational modes of the computer system 310, and also corresponds generally to a global standby mode in which certain system components are placed in a low power mode and the processor 311 stops operating in order to conserve power, as described in more detail later. In this state SYSVCC and PMVCC are both on, the real time clock circuit drawing its power from PMVCC rather than from the battery 379. The third state 408 corresponds generally to a suspend mode. In state 408, the power output PMVCC is turned on, but the power output SYSVCC is turned off in order to conserve power.

Starting from a condition in which the system is off and the state circuit 401 is in state 406, when a user manually actuates the switch 313 in order to turn the system on, the state machine 401 proceeds at 409 to state 407, where it turns on both SYSVCC and PMVCC. If at some point in time the processor 311 intends to enter a suspend mode, it will actuate the signal SYSPWROFF to the state circuit 401, which will cause the state circuit 401 to transition at 411 to state 408, where it keeps PMVCC on but turns off SYSVCC. Since SYSVCC is used to supply power to virtually all components other than the processor 311, memory 326 and RAM 331, the power consumption of components normally powered by SYSVCC is reduced to zero. Meanwhile, PMVCC maintains the information in main memory 326 during the suspend mode, and also provides power to the processor 311 and RAM 331 so that it will be able to wake up from the suspend mode. When the processor 311 does wake up from the suspend mode, it deactuates the signal SYSPWROFF, so that the state machine 401 transitions from state 408 back to state 407 and turns the supply SYSVCC back on, thereby repowering the peripheral components of the system so that they can be used again. If it is determined at some point that the system is to be turned completely off, then the processor 311 ultimately actuates the signal KILLVCC to the state machine 401, which causes the state machine to transition at 413 from state 407 back to state 406, where it turns off both SYSVCC and PMVCC.

The power control circuit 312 produces a signal DC/AC to the system control processor (SCP) 316, to indicate whether the system is running on AC power from the convertor 398 or on DC power from battery 396 (or battery 397). The terminal voltage of rechargeable battery 396 is also supplied in the form of an analog signal RBATT to the SCP 316, so that the SCP 316 can monitor the state of the battery charge. In particular, the SCP 316 has an analog-to-digital (A/D) convertor 416, which converts the analog terminal voltage from battery 396 into a digital signal that can be analyzed by the SCP 316. When the SCP determines that the voltage is too low, it actuates the above-mentioned BATTLOW signal to the main processor 311.

Turning to the SCP 316, the SCP in the preferred embodiment is based on an Intel 87C51GB processor, but it will be recognized that there are other commercially available processors which could be used for the SCP. The SCP generates a speaker control signal 417 which is connected to the speaker 392 and can be used to cause the speaker 392 to beep. In addition, the SCP generates the signals IRQ1 and IRQ12, which as mentioned above are connected to interrupt inputs of the main processor 311. Further, the SCP 316 is coupled to an external connector 418, to which can optionally be coupled a conventional external keyboard or mouse 421. The SCP 316 is also coupled at 422 to the internal keyboard 317. The SCP outputs to the video controller 318 a signal CRT/LCD, which indicates whether the video controller 318 should consider the active display unit to be the liquid crystal display unit 321 or a conventional external CRT 426 which can be optionally wired to a connector 427 coupled to the video controller 318. The SCP 316 sends the video controller 318 a signal VIDEN which, when disabled, causes the video controller 318 to turn itself off or to at least reduce its power consumption.

The SCP sends to the liquid crystal display unit 321 a signal LCDPWR, which turns on and off the power to the liquid crystal display in the unit 321. The display includes a backlight 431 which illuminates the liquid crystal display. The display unit 321 is provided on a lid of the laptop computer which, in a conventional manner, can be moved between positions covering and exposing the keys of the internal keyboard 317, and a lid switch 432 is provided to indicate whether the lid is open or closed. The SCP 316 generates a signal BLON which turns on and off the backlight 431 of the display unit 321, and receives from the lid switch 432 a signal LIDSW which indicates whether or not the switch is actuated and thus whether or not the lid is open or closed.

The SCP 316 also generates a signal MDMEN which causes a power control section of the modem 322 to shut off power to the modem 322, or to at least place the modem in a low power consumption state. The SCP 316 receives from the modem 322 the previously-mentioned modem ring indicator signal MDMRI, which is actuated when an incoming telephone call reaches the modem through a telephone jack 434 to which the modem 322 is coupled, the jack 434 of the system 310 being adapted to be optionally coupled to a standard telephone line 436.

The hard disk drive 323 produces an output signal LED which is used in a conventional manner to control a conventional and not-illustrated light emitting diode in order to provide the computer user with a visual indication of the activity of the hard disk drive. This LED signal is connected to the SCP and to one input of a two-input AND gate 438, the hard disk not busy output HDNB of which is connected to an input of an OR gate 433 and indicates that the hard disk is not busy. The other input of the gate 438 is coupled to an ENABLE output signal of the SCP 316, and thus the SCP can selectively enable and disable the gate 438. The SCP also produces an output signal at 435 which is connected to a second input of the OR gate 433, and the output of the OR gate 433 serves as the previously-mentioned EXTPMI signal to the main processor 311. The hard disk drive 323 also generates the interrupt signal IRQ14, which as mentioned above is coupled to the main processor 311.

The internal keyboard 317 includes a set of keys 441 which form a standard laptop computer keyboard, four light emitting diodes (LEDs) 442 which are visible to the system user and provide typical status information, and a controller circuit 443 which interfaces the keys 441 and LEDs 442 to the SCP 316.

The video controller 318 includes control registers 446, and a video RAM 448 which is coupled to the buses 337-339 and is a 128 KB memory arranged as 64K by 16 bits.

The SCP 316 includes an electrically programmable read only memory (EEPROM) 439, in which it stores configuration information, a password, an extended set-up information, as discussed in more detail later. Further, the SCP includes a ROM 437 which stores a program executed by the SCP, and a RAM 440 in which the SCP can store and retrieve information during system operation. The SCP also includes several I/O registers, which can be used to pass data between the main processor 311 and the SCP 316.

The flash RAM 331 is a conventional semiconductor device which can be electrically modified, but is not volatile and will retain the information stored in it when power to it is turned off. The flash RAM 331 is 128 KB, and contains the basic input/output system (BIOS) program, as well as factory configuration settings. The ROM 328 contains a program which is normally not used, but which can be used to control the system while the flash RAM 331 is reloaded in the event an unusual circumstance causes the contents of the flash RAM to be lost.

The conventional floppy disk drive 327 includes a floppy disk controller (FDC) circuit 451, which controls the floppy disk drive and can also generate the interrupt signal IRQ6 to the processor 311.

The main memory 326 includes a portion PMRAM 453. The bus control unit 336 of processor 311 automatically prevents software from accessing the PMRAM section 453 of the main memory 326, except in two specific situations. First, the service routine for the power management interrupt PMI is stored in the PMRAM section 463 of the main memory 326, and in response to a PMI the bus control unit 336 automatically permits access to the PMRAM 453 so that the state of the processor 311 can be stored there and so that the service routine there for the PMI can be executed. Second, software running in the unrestricted mode of the processor 311 can selectively enable and disable the capability to access to the PMRAM 453, so that the PMRAM can be initialized.

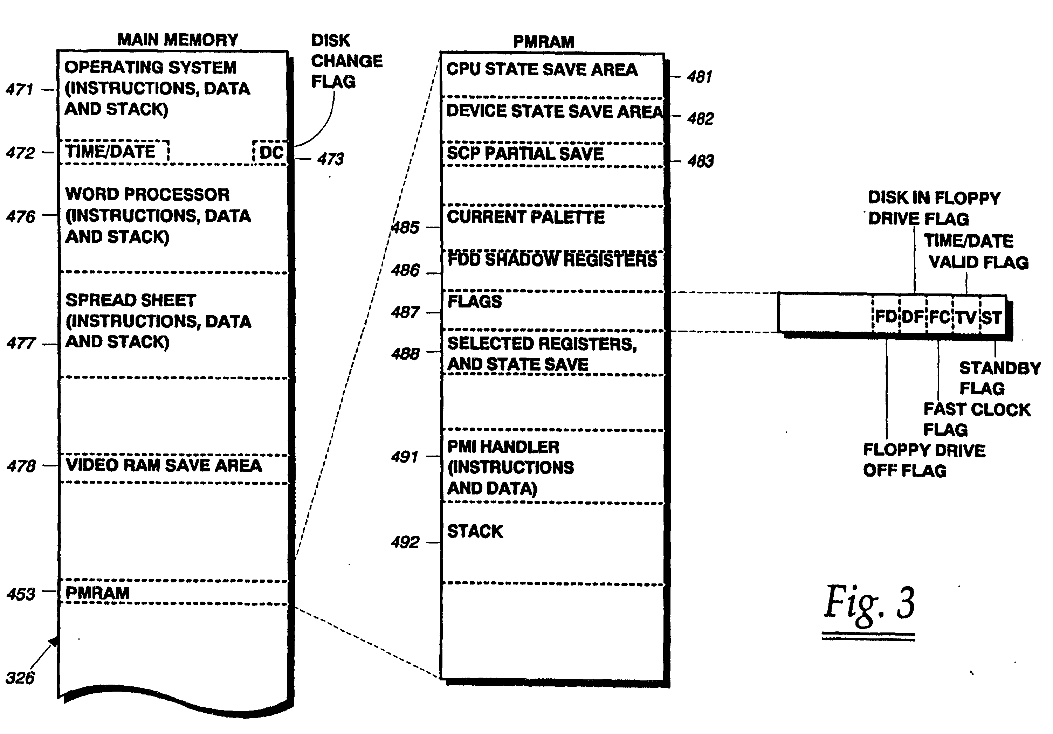

Figure 3 is a diagrammatic representation of some of the information stored in the main memory 326. The organization of this information shown in Figure 3 is exemplary, and it will be recognized that the format in which the information is stored could be reorganized without departing from the present invention. Further, there may be additional information which is stored in the main memory 326 but is not essential to an understanding of the present invention, and which is therefore not illustrated and described in detail.

A portion 471 of the main memory is used to store an operating system, for example Disk Operating System (DOS) available from Microsoft Corporation. The operating system maintains time and date information at 472, and also maintains a disk change (D/C) flag 473 which is used to indicate that a disk has been changed. Two additional portions 476 and 477 in the main memory each contain a respective application program, the portion 476 containing the stack, instructions and data for a word processor, and the portion 477 containing the stack, instructions and data for a spreadsheet. A further portion 478 of the main memory is used to store an image of the video RAM 448, as will be described in more detail later.

The PMRAM portion 453 of the main memory includes a state save portion 481, where the processing unit 311 automatically saves its state in response to a PMI interrupt. A further portion 482 is used to save information regarding other devices, and a portion 483 is used for a partial state save of the SCP 316 which will be discussed later. A portion 485 is used to record the current palette being used for the LCD 321, as will be described later, and a portion 486 serves as shadow registers which are used to maintain an image of all control registers within the floppy disk drive 327, as also described later. A byte 47 is used for several one-bit flags, including a fast clock (FC) flag which is set to indicate that the user has selected a fast clock speed for the processor 311, a floppy off (FO) flag which is set to indicate that the power to the floppy disk drive is off, a disk in floppy drive (DF) flag which can be set to indicate that a disk is present in the floppy disk drive, a time/date valid TV flag which is set if the current operating system supports time and date information, and a standby (ST) flag which is set under certain circumstances to indicate to the processor whether it is to enter standby mode or suspend mode when a particular event occurs.

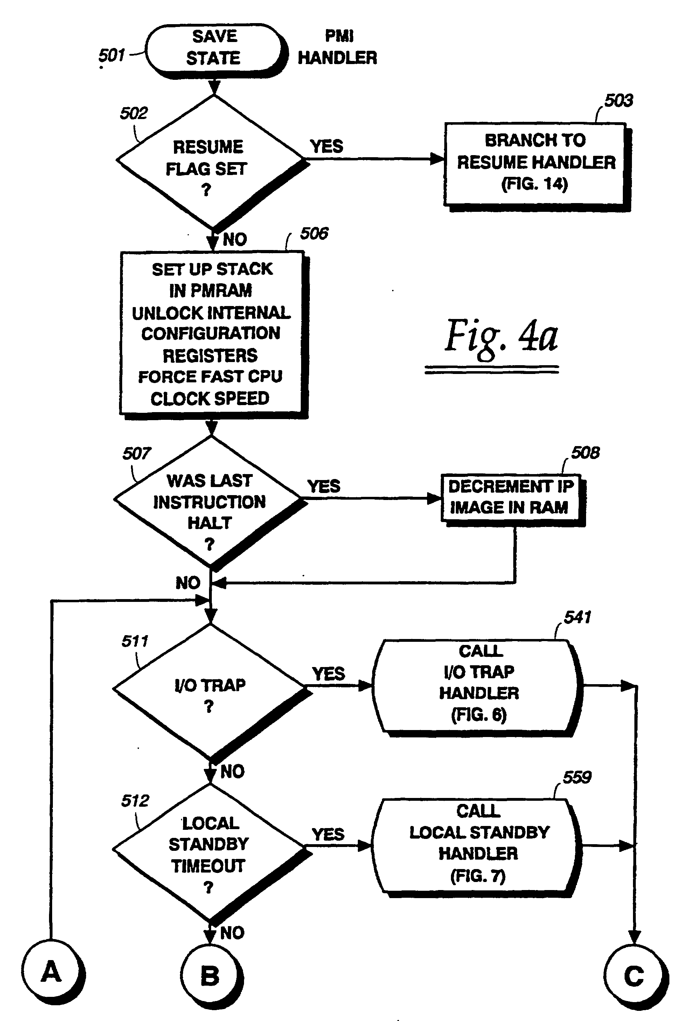

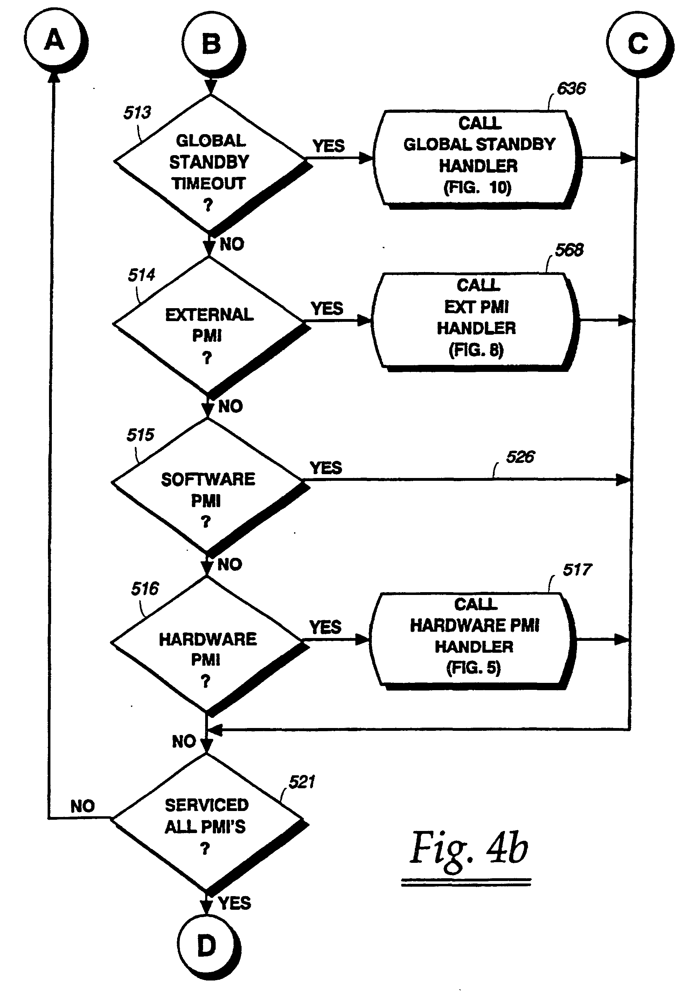

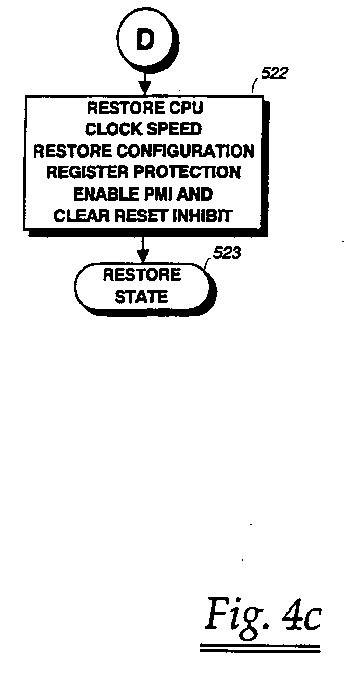

The software routine which handles the power management interrupt (PMI) is also stored in the PMRAM portion 453 of the main memory 326, as shown at 491 in Figure 3. A portion 492 of the PMRAM serves as a stack area for use by the PMI handler routine. Figures 4-14 are flowcharts showing the operation of the PMI handler routine and a reset handler routine.

Beginning with Figure 4, a PMI from any source causes the hardware of the processor 311 to automatically save its state in the state save area 481 of the PMRAM portion 453 of the main memory, as shown diagrammatically at 501 in Figure 4. Then, the processor 311 automatically begins execution of the PMI handler routine 491 in the PMRAM at a predetermined point, which is shown at 502 in Figure 4. Regardless of the source of the PMI, the first thing the PMI handler does is to check the resume flag 383 (Figure 1) in the processor 311 in order to see whether the processor 311 is in the process of resuming from a suspend state. If a resume is in progress, then at block 503 control is transferred to a resume handler, which will be discussed later.

In the case of any other PMI, control proceeds to block 506, where the processor sets itself up to use the stack 492 in the PMRAM, because the PMI handler routine must always be capable of proper operation, and has no way of knowing whether the current stack in the interrupted application program is a valid and usable stack. Then, the processor 311 unlocks certain internal configuration registers so that they can be altered, such as the control register 388 which can be used to change the speed of the CPU clock. Then, the processor changes the register 388 in order to force the CPU to run at a fast clock speed, so that the PMI routine will execute as fast as possible.

Control then proceeds to block 507, where the processor checks to see whether the last instruction executed before the PMI was a HALT instruction. If it was, then the image of the instruction pointer register saved at 481 in the PMRAM is decremented at 508, so that when the PMI handler is exited the instruction which is fetched and executed is the HALT instruction rather than the instruction which follows the HALT instruction, in order to be certain that the processor again enters the HALT mode. Then, control proceeds to block 511, where the processor begins a successive check of the six possible sources of a PMI, as represented by the six blocks 511-516. Each of these will be discussed in more detail in a moment.

After detecting and servicing the source of the PMI, control proceeds to block 521, where the processor checks to see whether one or more other sources of the PMI are pending. If so, control returns to block 511, so that the processor can again scan for the particular source of each PMI, and service it. When it is determined at block 521 that every pending PMI has been serviced, control proceeds to block 522, where the processor restores the speed control register 388 to select the CPU clock speed which was in effect at the time the PMI occurred. The FC flag shown in Figure 3 indicates to the processor whether this was a fast or slow clock speed. Then, the processor restores the protection level (if any) which was in effect for the internal configuration registers, including the speed control register 388. The processor can determine the level of protection which was in effect by examining the image of the CPU state which is present at 481 in the PMRAM. Then, the processor enables the PMI, and clears an internal bit automatically set within the processor 311 by the PMI to prevent the processor from responding to a reset during servicing of the PMI. Then, at 523, the processor executes an instruction which ends the PMI handler routine by restoring the internal state of the processor from the state save area 481, which of course causes the processor to resume execution of the interrupted application program.

As previously explained, a software instruction can generate a PMI as shown diagrammatically at 367 in Figure 1, but in the preferred embodiment this capability is used only to reenter the PMI handler when the system is in the process of resuming from a suspend mode, and in that case control is routed from block 502 to block 503 as discussed above, and should never proceed to block 515. Consequently, a software PMI should not normally be detected at block 515 in Figure 4. Nevertheless, since it is possible that some other program may execute a software instruction which generates a software PMI, block 515 will intercept this condition, but transfers control at 526 directly to block 521, thereby handling the software PMI without doing anything at all.

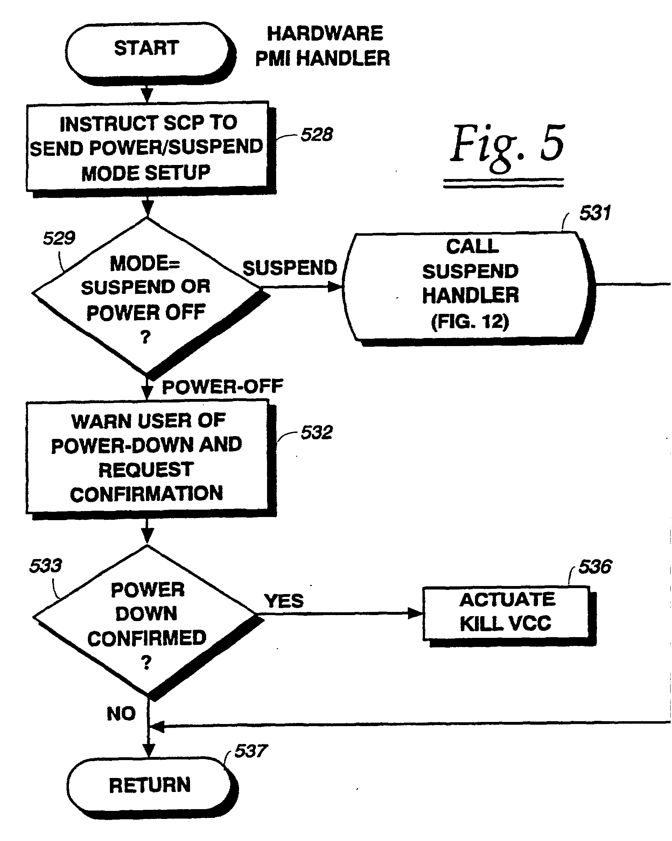

Block 516 checks for a hardware PMI, the sole source of which in the preferred embodiment is the manual switch shown at 313 in Figure 1. In particular, deactuation of this switch produces a PMI which is detected at block 516, and causes control to proceed to block 517, where a subroutine call is made to a hardware PMI handler routine, which is illustrated in Figure 5.

Referring to Figure 5, the processor begins at 528 by instructing the SCP 316 to send it a portion of the set-up information stored in EEPROM 439, in particular a bit which can be set by the user as part of the system configuration, and which specifies whether deactuation of the switch 313 is to cause the system 310 to completely turn itself off, or to enter the suspend state in which it is capable of resuming the interrupted application program. Whenever the processor needs to send a command to the SCP while servicing a PMI instruction, it first actuates the CPUSUREQ signal to the SCP so that the SCP will stop sending information to the processor and thus the interface will be clear. Once the command is accepted, the processor may deactuate the CPUSUREQ signal. Control proceeds to block 529, where the processor checks the information received back from the SCP. If the user has specified that deactuation of the switch 313 is to place the system in suspend mode, the system proceeds to block 531, where it calls a suspend handler which will be described in detail later. On the other hand, if the user has specified that in response to deactuation of the switch 313 the system is to be turned off, control proceeds from block 529 to block 532, where the processor 511 causes the video circuitry to display a warning which reminds the user that power will be turned completely off and requesting confirmation to proceed. This is because turning power off will cause the loss of everything in the main memory 326, and it is thus important to be certain that the user is not assuming that the system will be entering suspend mode, where this information would be maintained. The user response is checked at block 533, and if the user confirms that power is to be turned off then control proceeds to block 536 where the processor actuates the KILLVCC line so that the power control circuit 312 turns SYSVCC and PMVCC off in the manner described above in association with Figure 2. On the other hand, if it is determined at block 533 from the user response that the user did not want the power turned off, then control proceeds to block 537, where a return is made from the hardware PMI handler without taking any action at all.

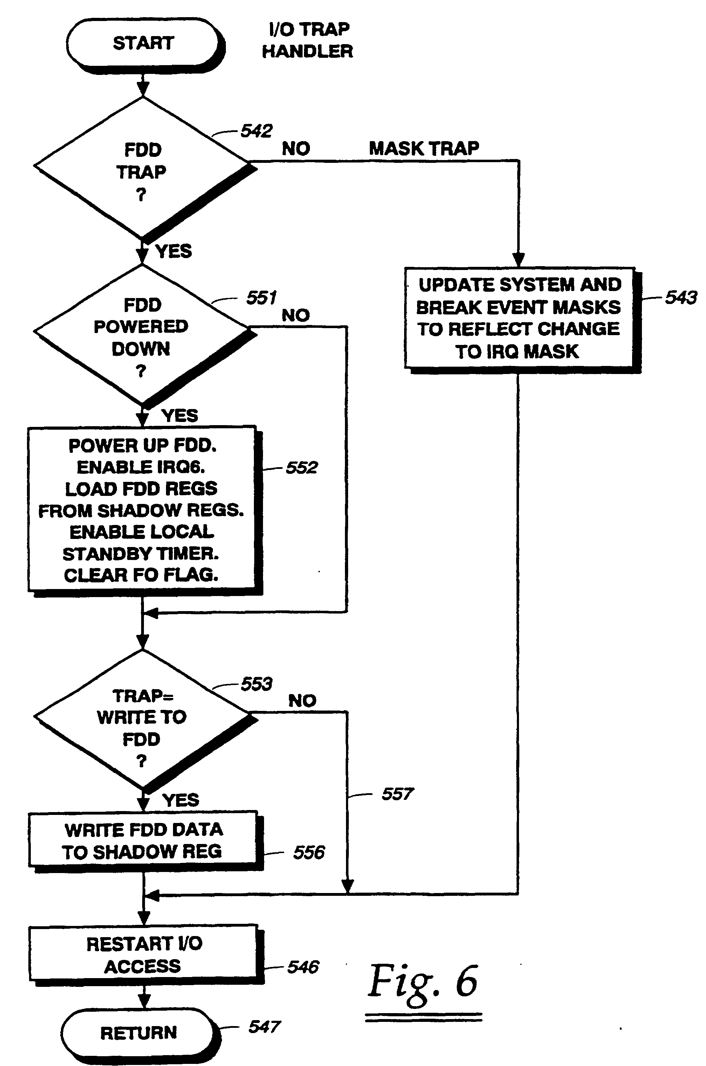

Referring again to Figure 4, if it is determined at 511 that the source of the PMI interrupt is an I/O trap condition, this means that one of the signals MASK TRAP or FDD TRAP shown in Figure 1 has been actuated and created the PMI. Block 511 therefore transfers control to block 541, where a subroutine call is made to an I/O trap handler routine, which is shown in Figure 6.

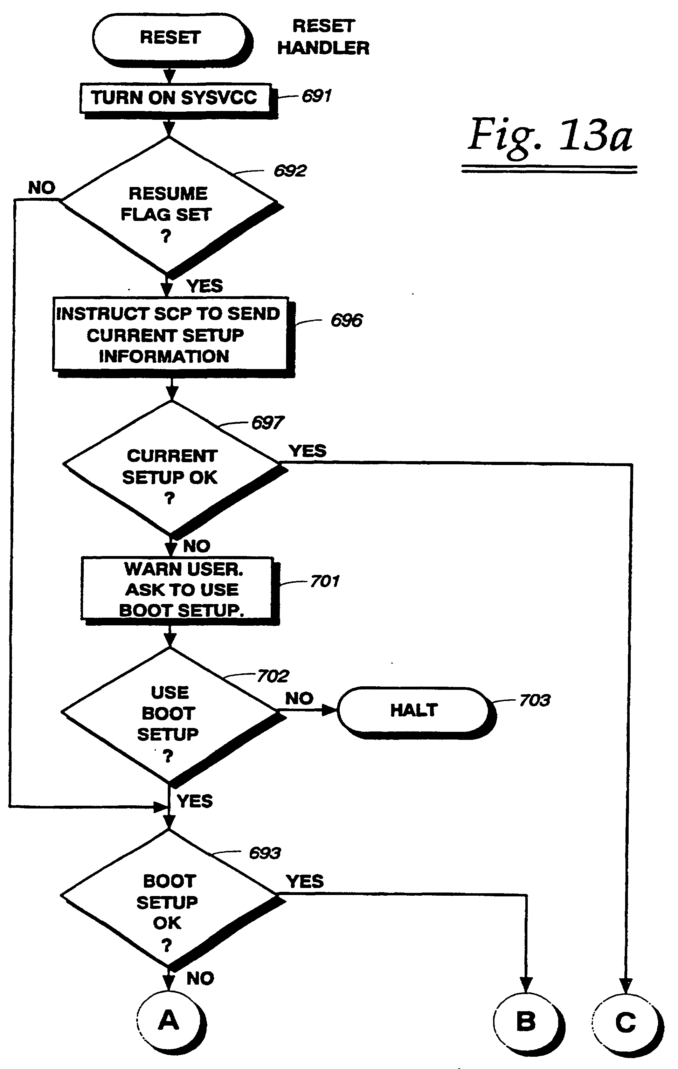

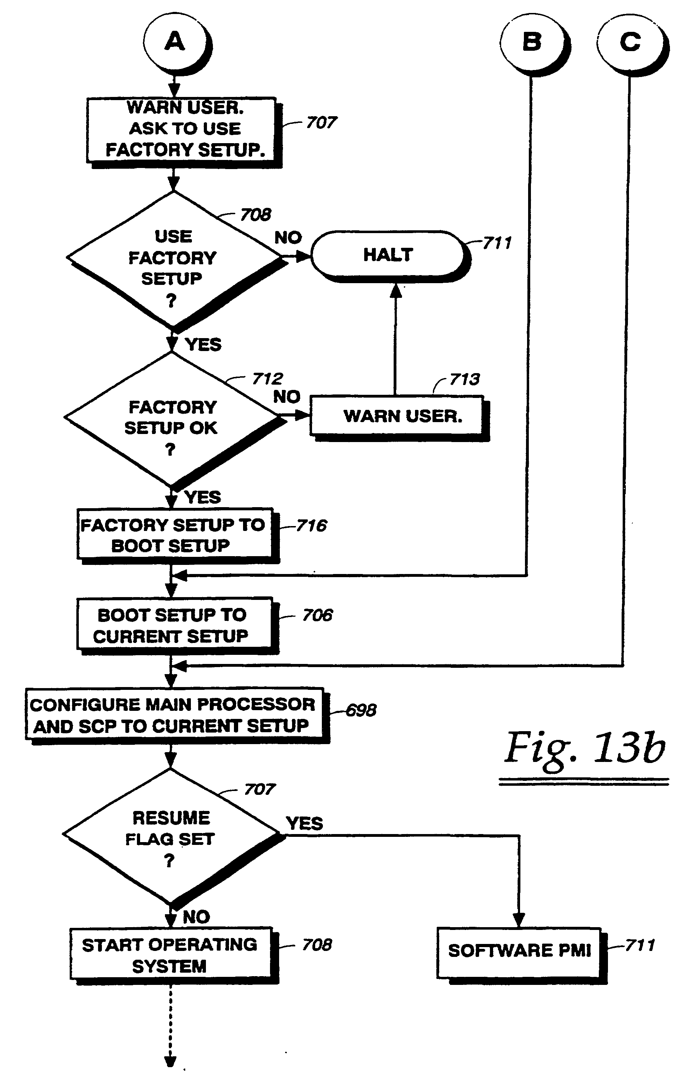

Referring to Figure 6, this routine begins at block 542 by checking the status register 371 (Figure 13) in order to determine whether the source of the interrupt was the FDD trap signal. If it was not, then it must have been the MASK TRAP signal, and control proceeds to block 543. The occurrence of the MASK TRAP signal means that the processor hardware has detected an access to the mask register 342 which controls the enabling and disabling of the various IRQ interrupt lines. If the purpose of the access to the MASK register 342 is to mask an IRQ interrupt, then at block 543 the system also updates the mask in system event mask register 349 to mask this IRQ interrupt. This avoids a system problem, because if the IRQ interrupt signal becomes actuated but is masked at 342, the normal interrupt servicing routine will not recognize the interrupt and thus the signal will remain actuated. If this IRQ interrupt is not masked at 349, then the continuously actuated signal will have the effect of preventing the SYSTEM EVENT line from changing, as a result of which the timers 352 and 353 will not be restarted and will time out even when the system is actually very active. Therefore, by conforming the mask register 349 to the mask register 342 at block 543, the disabled IRQ interrupt signal will be prevented from inhibiting the SYSTEM EVENT signal, and thus other active inputs to the selector 347 will be able to cause the SYSTEM EVENT signal to actively change in response to system activity so that the timers 352 and 353 are properly restarted by system activity.

After the processor sets the mask at block 543, control proceeds to block 546, where the processor restarts the I/O access to the mask register 342. In particular, the PMI trap interrupt intercepted the access to the mask register 342, and thus this mask register was not in fact actually changed. However, and as previously discussed, the I/O cycles which would have accessed this register have been captured at 372 (Figure 1), and thus in block 546 the processor uses this information to restart the I/O access to register 342 so that it properly completes. Then, at block 547, control is returned to the main routine of Figure 4.

On the other hand, if it was determined at block 542 that the PMI was caused by the FDD TRAP signal, then control proceeds to block 551. This means that an I/O access to a control register of the floppy disk drive 327 has been intercepted. As will be described later, the system turns the floppy disk drive 327 off if a specified period of time elapses without any system access to the floppy disk drive. Thus, it is possible that the intercepted access to the floppy disk drive was an attempt to access the floppy drive while it does not have any power. Accordingly, at block 551, the processor checks the FO flag (Figure 3) in order to determine whether the floppy disk drive is powered down. If it does have power, then block 552 is skipped. Otherwise, block 552 is entered in order to bring up the floppy disk drive.

In particular, the processor 11 actuates the FDDSLT line to restore normal power to the floppy disk drive 327, and enables interrupt IRQ 6 which is used by the floppy disk drive in a conventional manner during normal operation. Then, the processor loads control registers in the controller circuit 451 of the floppy disk drive 327 from the shadow registers 486 in the PMRAM. As will be described in a moment, the shadow registers contain an image of the internal state of the floppy disk drive just before its power was turned off. Then, the processor enables the local standby timer 351 (Figure 1), which as described in more detail later as the timer used to monitor the length of time since the last access to the floppy disk drive so that a decision can be made as to when it should be powered down. Finally, the processor clears the FO flag (Figure 3) to indicate that the floppy disk drive is currently up and running.

Control then proceeds from block 552 to block 553. As just mentioned, the shadow registers 486 (Figure 3) are an image of the control registers in the floppy disk drive 451. Every time any program stores anything in these control registers, the same information must be stored in the shadow registers 486 so that the shadow registers contain an accurate image of the actual registers in the floppy disk drive. Thus, at block 553, the processor checks to see whether the intercepted I/O access to the control registers of the floppy drive constitute a write of information into a register, as opposed to a read of information from the register. If it is determined that control information is being written into the floppy disk drive, then at 554 the same information is written into the shadow register area 486. On the other hand, if data is being read from the floppy disk drive, then block 556 is skipped at 557. In either case, control ultimately proceeds to block 546, where the I/O access to the floppy drive is restarted as discussed above so that the hardware completes the interrupted I/O access. Then, at 547, control returns to the routine of Figure 4.

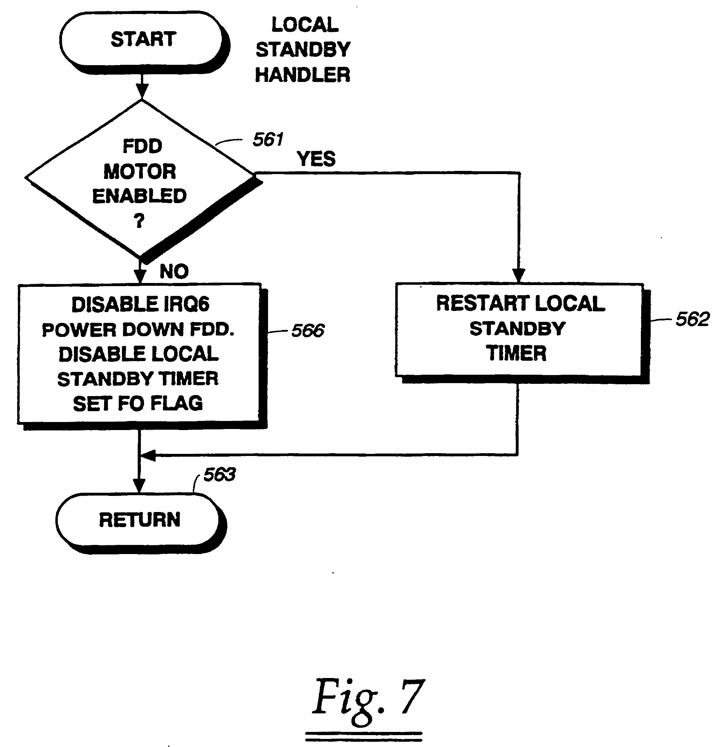

In Figure 4, if it is determined at block 512 that the local standby timer 351 has expired, then control proceeds to block 559, where a subroutine call is made to a local standby handler routine, which is shown in Figure 7. Referring to Figure 7, the fact that the local standby timer has timed out is an indication that the floppy disk drive has not been accessed for a specified period of time and is thus probably not currently in use and can be turned off in order to conserve power. However, it is first important to make sure that the floppy disk drive motor is not running, because power should preferably not be shut off while the motor is running. Therefore, at block 561, the processor reads a register in the floppy disk drive 327, which in a conventional manner includes an indication of whether the motor is currently enabled. If it is, control proceeds to block 562, where the processor simply restarts the local standby timer 351 at 562 and then returns at 563 to the routine of Figure 4. Typically, however, the motor will not be running, and control will thus usually proceed to block 566, where the floppy disk drive will be powered down in order to conserve power. In particular, the processor disables interrupt IRQ 6, which is used by the floppy drive, and then deactuates the FDDSLT signal so that the floppy disk drive turns itself off or at least enters a low power state. Then, the processor disables the local standby timer 351, and sets the FO flag (Figure 3) in order to indicate that power to the floppy drive is currently off. Then, the processor returns at 563 to the calling routine shown in Figure 4.

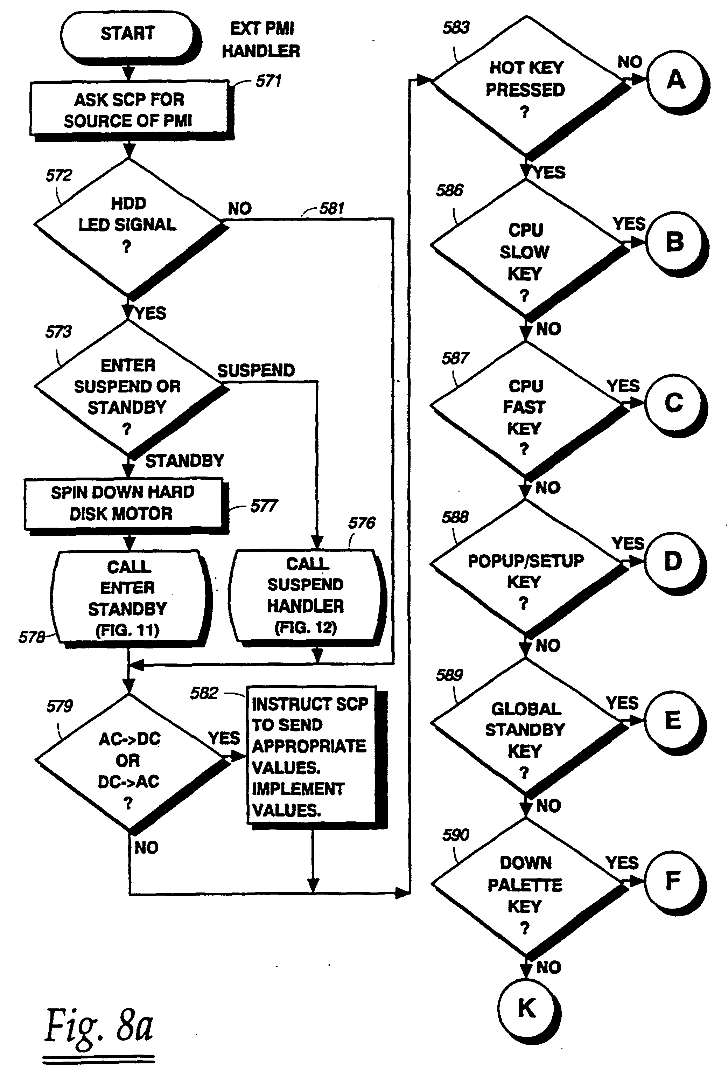

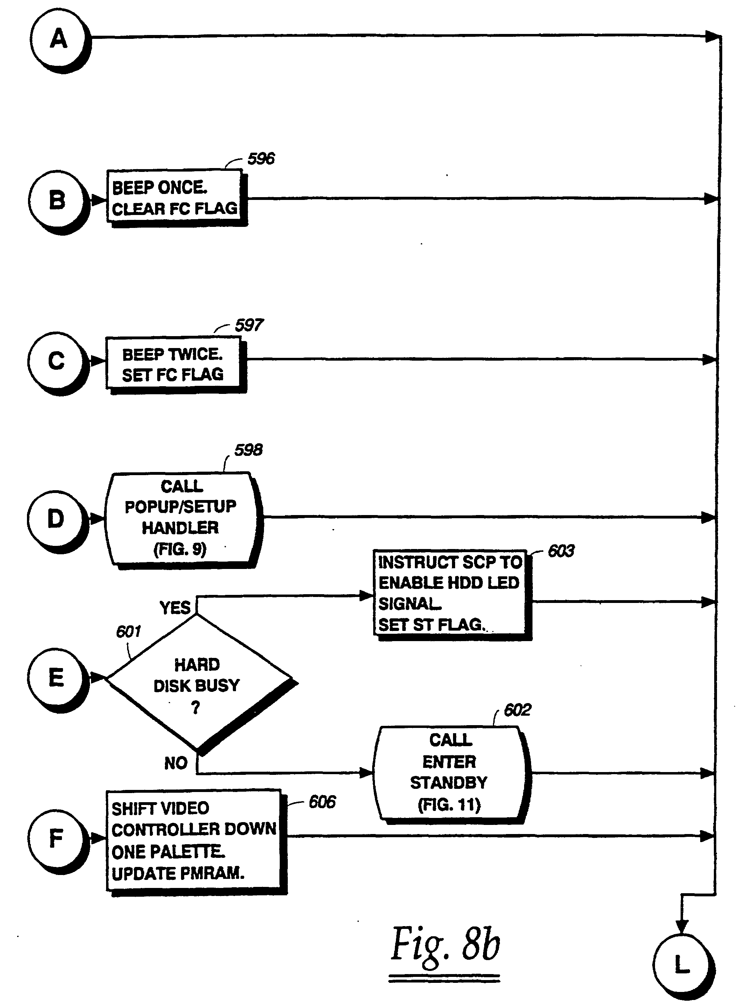

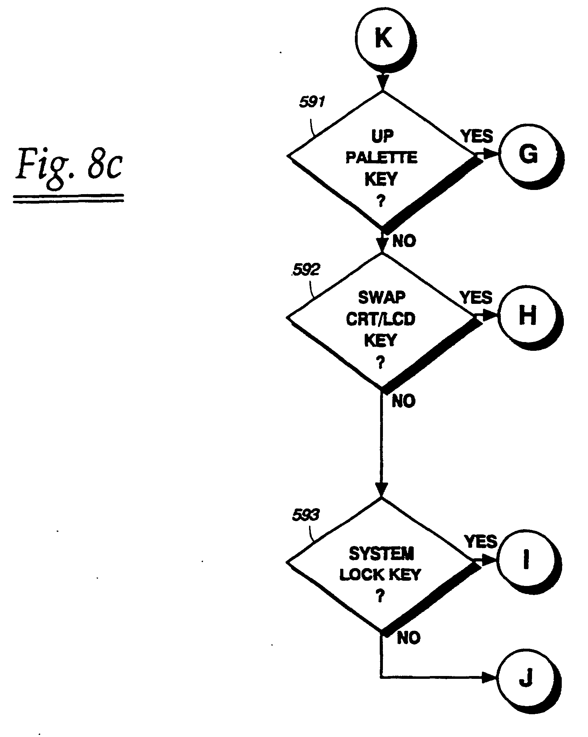

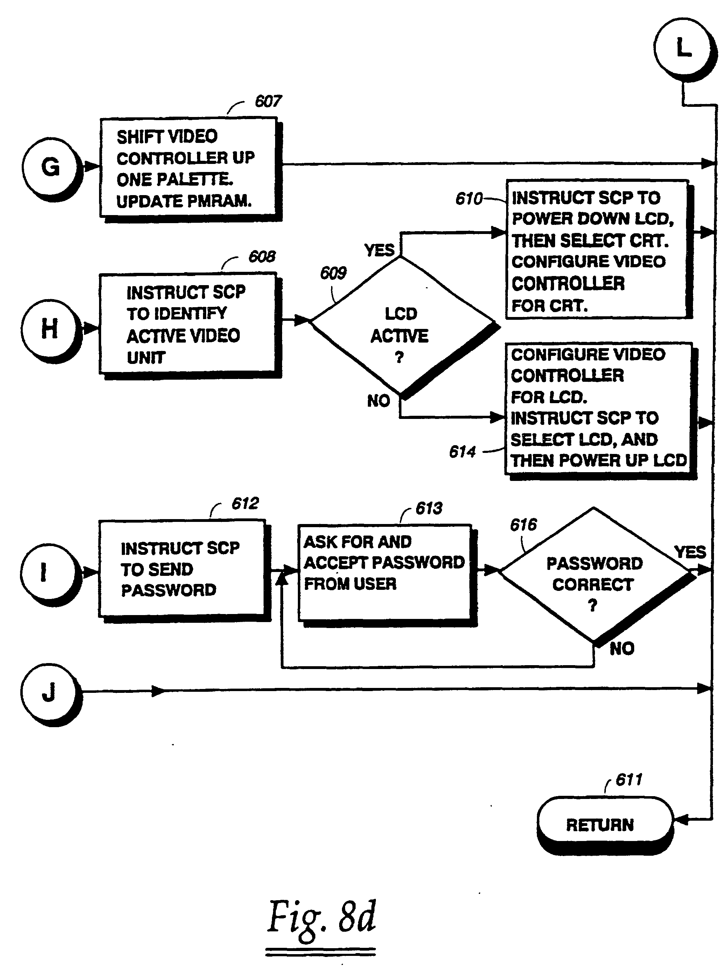

In Figure 4, it may be determined at block 514 that the source of the PMI was created by the SCP 316 using the line EXTPMI, in which case control proceeds to block 568, where a subroutine call is made to the EXTPMI handler routine shown in Figure 8. There are three possible reasons why the SCP may have initiated a PMI. Therefore, at 571 in Figure 8, the processor begins by asking the SCP 316 to send a byte indicating which of the three conditions was the reason for the PMI. Upon the receipt of this byte, the processor proceeds to block 572, where it checks for the first of these conditions.

In order to discuss this first condition, it is important to understand that, if the system has attempted to enter either the global standby mode or the suspend mode, and if it found that the hard disk drive 323 was still busy, then as described in more detail below and in the previously-mentioned copending application, the SCP will actuate the ENABLE line to the gate 438, and then return to the interrupted application program. Then, the instant the hard disk drive 323 finishes what it is doing and deactuates the LED line which controls its light emitting diode, the gate 438 will actuate the HDNB line to gate 433 which in turn will actuate the EXTPMI line.

Consequently, at block 572, the processor 311 checks the information received from the SCP in order to see whether the reason for the PMI was the signal from the hard disk. If it was, then control proceeds to 573, where the processor checks the ST flag (Figure 3) in order to determine whether it was previously attempting to enter suspend mode or global standby mode when it found that it had to wait for the hard disk. If the flag is not set because the system was attempting to enter the suspend mode, then control proceeds to block 576, where a subroutine call is made to the suspend handler routine, which will be described in more detail later. On the other hand, if it is determined at 573 that the system is attempting to enter global standby mode, then at 577 the processor instructs the hard disk 323 to spin down its motor, and control then proceeds to block 578 where a subroutine call is made to a routine which causes the processor to enter the global standby mode, as discussed in detail later. Upon termination of the suspend mode or the global standby mode, control proceeds from block 576 or 578 to block 579. Also, if it had been determined at block 572 that the source of the PMI was not a signal from the hard disk, then control would have proceeded at 581 directly to block 579. In 579, the processor checks for the second condition which may have caused the SCP 316 to initiate the PMI. In particular, the SCP monitors the DC/AC signal from the power control circuit, which indicates whether the system is currently receiving DC power from the battery 396 or is receiving AC power from the converter 398. When the SCP detects that a change has been made from AC power to DC power, or from DC power to AC power, it actuates the EXTPMI signal to the main processor. If it is determined at block 579 that this is the reason for the PMI, then control proceeds to block 582. A feature of the system is that the SCP maintains configuration data for use under AC power which is different from the configuration information it maintains for use under DC power. For example, when operating on AC power, power consumption is less of a concern, and thus the user may elect to keep the floppy disk drive 327 powered up all the time when operating under AC power, and to allow the system to automatically power it down when not in use as described above only when operating under DC power. Accordingly, at block 582, the main processor instructs the SCP to send it appropriate configuration values, namely AC values if a switch has been made to AC mode and DC values if a switch has been made to DC mode. Then, the processor implements these values in the system configuration, for example by reloading the preset registers 356 and 357 with their AC preset values rather than their DC preset values. The processor sends two timer preset values back to the SCP for use in a suspend timer and a backlight timer maintained by the SCP, as described later. Control then proceeds to block 583. Control also proceeds directly from block 579 to block 583 if it is determined at block 579 that the source of the PMI was not a change between AC and DC power.

In block 583, the processor checks for the third of the conditions which would cause the SCP to initiate a PMI. In particular, some of the keys 441 of the internal keyboard 317 can be pressed simultaneously, and the SCP is capable of detecting these special multi-key or hot key combinations. When the processor detects one of several special multi-key combinations, it actuates the EXTPMI line to the main processor, so that any program in progress is immediately interrupted, a special function is carried out, and then the program in progress is resumed. If it is found at 583 that one of the special multi-key or hot key combinations has been pressed, control proceeds to block 586, which is the first in a sequence of eight blocks 586-593 checking for each of the special multi-key combinations which can cause the SCP to initiate a PMI. This information is in a coded field in the byte sent by the SCP at 571 to indicate the reason for the PMI.

In block 586, the processor checks to see if the multi-key or hot key combination was one which indicates that the user wants the CPU to run at a slow clock speed. In a situation where the user is operating on battery power and is running a program which does not require fast processor speed, intentionally reducing the processor speed will reduce power consumption and thus permit the user to operate the system longer before the battery requires recharging. Thus, in block 596, the processor actuates line 391 (Figure 1) to cause the speaker 392 to beep once, and then clears the FC flag (Figure 3) in order to indicate that the selected CPU speed is a slow speed. The processor does not immediately change the clock speed because, as mentioned above in association with blocks 506 and 522 in Figure 4, the PMI handler routine always executes at a fast clock speed. The slower speed selected in block 596 by clearing the FC flag will be implemented in block 522 as the processor prepares to leave the PMI handler routine. On the other hand, if the hot key is not a request for slow CPU operation, then control proceeds from block 586 to block 587, where a check is made to see if the hot key is a request for fast CPU operation. If it is, control proceeds to block 597, where the processor causes the speaker 392 to beep twice and then sets the FC flag in order to indicate that a fast processor speed is desired.

If it is determined in block 587 that the hot key is not a request for a fast processor speed, then control proceeds to block 588, where a check is made to see if the hot key is a request for a pop-up/set-up screen, which permits the user to change system set-up information in the middle of an application program. If this is the hot key pressed, then control proceeds to block 598, where a subroutine call is made to a pop-up/set-up handler routine. This handler routine will be described after the other hot keys shown in Figure 8 have been described.

If the actuated hot key is not the pop-up/set-up key, then control proceeds to block 589, where a check is made to see if the hot key pressed is a user request that the system enter the global standby mode. A user might want to enter global standby mode when he knows that he will not be using the system for a short period of time and wants to conserve power, but does not want to enter full suspend mode. If it is found that the user has requested intentional entry to global standby, then control proceeds from block 589 to block 601, where the processor reads a status register in the hard disk drive 323 in order to see if the hard disk drive 323 is busy. If the hard disk drive is not busy, then control proceeds directly to block 602, where a subroutine call is made to a routine which guides the system into standby mode, this routine being described in detail later.

On the other hand, if the hard disk is busy, then the entry to standby mode must wait until the hard disk is not busy. Therefore, control would proceed from block 601 to block 603, where the processor instructs the SCP to actuate the ENABLE signal in order to enable the gate 438, as previously mentioned. The processor also sets the ST flag (Figure 3) in order to indicate that, when the hard disk is no longer busy, the system should enter global standby mode rather than suspend mode, in particular as already discussed above in association with block 572 of Figure 8. Thus, after block 603, the PMI handler routine will continue and will eventually return control to the interrupted application program, and then when the hard disk drive 323 ultimately finishes what it is doing and deactuates its LED control line, a further PMI will be generated and will cause the system to eventually reach previously-described blocks 572, 573, 577 and 578 in order to enter the standby mode.

If it is determined at block 589 that the hot key pressed is not the request to intentionally enter the global standby mode, the processor proceeds to block 590, where a check is made to see if the hot key is a request by the user for a change in the palette used for the LCD 321 (Figure 1). In this regard, the LCD 321 in the preferred embodiment is a monochrome display rather than a color display, and the flash RAM 331 contains 16 predefined palettes which represent respective variations of the gray scale capabilities of the monochrome LCD 321. Since most application programs are written to operate with color displays, the screens they produce can sometimes be somewhat difficult to read when presented on a monochrome display. However, the screens may be easier to read with some gray scale palettes than with others.

The present system permits a user to quickly run through an adjustment of palettes while within an application program, where he can immediately see the effect of each palette. In pre-existing systems, it was typically necessary to exit the application program, adjust the palette selection in the set-up data, and then re-enter the application program to see the effect of the new palette, which is obviously tedious and time consuming when there are several possible palettes which need to be tried. Thus, if it is determined at 590 that the user wants to shift down one palette in the table of 16 palettes, control is transferred to block 606, where the processor retrieves an identification of the current palette stored at 485 in the PMRAM, obtains the next lower palette from the table of 16 palettes in the flash RAM 331, configures the registers 446 of the video controller 318 to implement this new palette, and records an identification of this new palette at 485 in the PMRAM.

If it is determined at 590 that the hot key is not a request to shift down a palette, control proceeds to block 591 where a check is made to see if the request is to shift up one palette. If so, control proceeds to block 607, where the processor carries out a sequence similar to that in block 606 except that it shifts up one palette in the table rather than down one palette. If it is determined at block 591 that the actuated hot key is not a request to shift up a palette, then control proceeds to block 592, where a check is made to see if the hot key pressed is a request that the current display device be swapped, in particular from the LCD 321 to an external CRT 426 if the LCD is currently active, or from the external CRT to the LCD if the CRT is active. If the user has requested this change, then control proceeds from block 592 to block 608, where the processor instructs the SCP to identify the active video unit. The response from the SCP is examined at 609, and if the LCD is active control proceeds to block 610, where the processor instructs the SCP to deactuate the line LCDPWR to power down the LCD, and to set the CRT/LCD line to select the CRT. Then, the processor configures the video controller for operation with the CRT. On the other hand, if the CRT is found to be active at 609, then control proceeds to 614, where the processor configures the video controller for operation with the LCD, and then instructs the SCP to set the CRT/LCD line to.select the LCD, and to actuate the LCDPWR line to power up the LCD.

If it is determined at block 592 that the actuated hot key is not a request for a display swap, then control proceeds to block 593, where a check is made to see if the hot key pressed is a request to temporarily lock up the system. If it is not, then control proceeds to block 611, which is the common return from the EXTPMI handler to the calling routine of Figure 4. Otherwise, control proceeds from block 593 to block 612, where the processor 311 instructs the SCP 316 to send a system password which is stored in the EEPROM 439 of the SCP. Then, at block 613, the processor uses the display to ask the user to enter a password, waits for a line of information, and accepts the line of information entered by the user on the keyboard. Then, at block 616, the system compares the passwords from the user and the SCP, in order to see whether they are the same. If they are not, the system continues to loop through blocks 613 and 616. Otherwise, control proceeds from block 616 to the return at 611. By using this hot key, the user can essentially leave his system when it is up and running while preventing another from using it while he is gone, because the system will not respond unless the correct password is entered. When the user returns, he enters the correct password, and then can return to whatever he was doing.

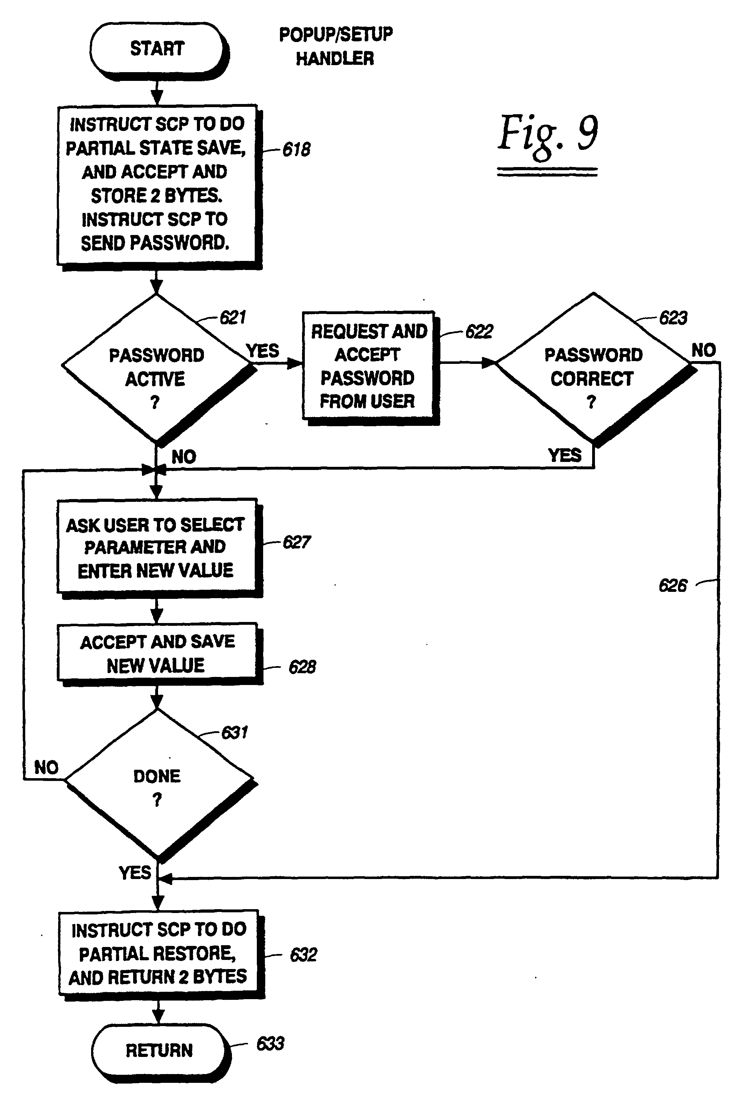

Referring back to block 598 in Figure 8, the pop-up/set-up handler is shown in Figure 9, and will now be described. Execution begins at block 618 in Figure 9, where the processor instructs the SCP to do a partial state save, in response to which the SCP sends the processor two bytes containing mode information. For example, the mode information indicates whether the interrupted application program currently has the keyboard disabled. Obviously, the keyboard needs to be enabled where the PMI handler needs to obtain input from the user through the keyboard, and thus this mode information is saved so that the SCP can change its mode of operation to meet the needs of PMI handler, and after meeting these needs the original mode information is restored as described below so that the system will be returned to the interrupted application program in the same mode it was in when the application program was interrupted. After receiving the two bytes of mode information at 618 from the SCP, the processor stores them at 483 (Figure 3) in the capital PMRAM. Then, the processor instructs the SCP to send the current password. If it is determined at block 621 that the password is active, the user enters the password and it is checked at blocks 622 and 623 in a manner similar to that described above in association with blocks 613 and 616 of Figure 8. If the user enters a password which is not correct, then the portion of the handler which permits the user to change set-up information is skipped at 626. However, if the password is found to be correct at 623, or is found not to be active at 621, control proceeds to block 627, where the user is presented with a menu or menu system which permit the user to specify a set-up parameter to be changed and to then enter a new value for that parameter. At block 628, the processor accepts and saves this parameter. The types of parameters which can be entered include an AC value and a DC value for the preset time period for each of the timers 351 and 352, an AC value and a DC value for the suspend timer and backlight timer which are implemented in the software of the SCP (as described later), a user indication of whether the mask for the resume mask register 382 should permit a resume reset in response to an ALARM signal from the real time clock 376 or a modem ring signal MDMRI from the modem, a user indication of whether deactuation of the manual switch 313 should place the system in a suspend condition or a power-off condition, a user indication of whether the LCD or an external CRT should be used as the active display, and a user specification of a new password. Other set-up information which is conventional and not pertinent to the present invention can also be entered. As each item is entered, the processor 311 sends it to the SCP 316 with a command instructing the SCP to store the information in the EEPROM 439. At 631, the processor can loop to continue to accepting information at 627 and 628 so long as the user wants to change set-up values. When the user is done, control proceeds to block 632, where the processor 311 instructs the SCP 316 to accept and restore the two mode bytes which the SCP sent to the processor 311 at block 618, and then follows the command with the two bytes. Then, at 633, a return is made to the calling routine.

Referring once more to Figure 4, if it is determined at block 513 that the source of the PMI is a time out of the global standby timer 352 (Figure 1), control proceeds from 513 to block 636. Time out of this timer means that there has been little or no activity in the system for a predetermined period of time, and therefore the system is going to automatically transition to a global standby mode in which the processor 311 places the number of system components in a reduced power mode and then halts itself in order to conserve power, or to the suspend mode.

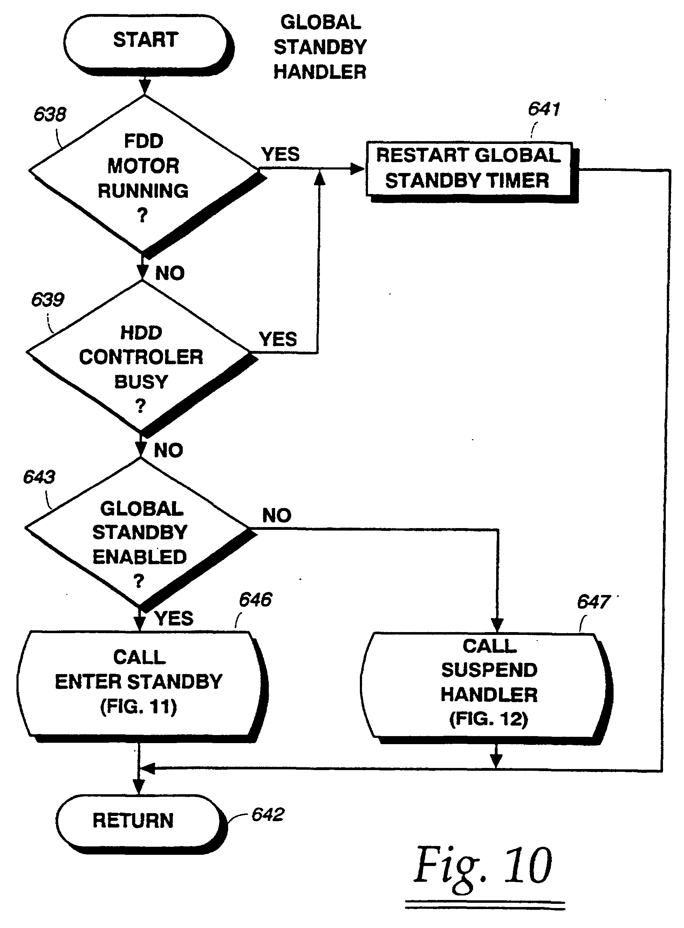

At block 636, a subroutine call is made to a global standby handler routine, which is shown in Figure 10. A condition for entering global standby mode is that the floppy disk drive 327 and the hard disk drive 323 be quiescent. Therefore, the processor reads status information from the floppy disk drive and the hard disk drive in a conventional manner, and checks this information at 638 and 639 of Figure 10 in order to determine whether the floppy disk drive motor is running or the hard disk drive controller circuitry is busy. If the motor is running or the circuitry is busy, then control proceeds to block 641, where the global standby timer 352 is restarted, and then at 642 a return is made to the calling routine without any entry to the standby mode or suspend mode.

More typically, the floppy disk drive and the hard disk drive will not be busy, and thus control will proceed through blocks 638 and 639 to block 643, where the processor 311 checks the set-up information in the SCP in order to see whether the user has specified that time out of the global timer 352 is to be interpreted to mean that the system enters standby mode, or proceeds directly suspend mode. In particular, if the user has specified a standby preset, then a timeout of timer 352 means the system will enter standby mode. On the other hand, if the user has not specified a standby preset but has specified a suspend preset after which the system is to enter suspend mode, then the suspend preset is used for timer 352, and when it expires the system enters suspend mode. If the system is to go to suspend mode, then control proceeds to block 647, where a subroutine call is made to the suspend handler which places the system in suspend mode, as described in more detail later. On the other hand, the more common determination at 643 is that the user intends the system to go to standby mode, and thus control would proceed to block 646, where a subroutine calls is made to the previously-mentioned routine which guides the system into global standby mode. This routine will now be described in association with Figure 11.

In Figure 11, the system begins by sending commands to the SCP which instruct it to deactuate the LCDPWR line in order to power down the LCD display if the display is not already powered down, to deactuate the VIDEN line in order to power down the video controller, to deactuate the BLON line in order to power down the backlight for the LCD display, and to deactuate the MDMEN line in order to turn off the modem 322. Then, the processor 311 deactuates the FDDSLT line in order to power down the floppy disk drive. Then, the processor either sets or clears the TV flag (Figure 3) in order to indicate whether or not the operating system 471 (Figure 3) supports time and date information. Then, the processor 311 sends a command to the hard disk drive 323 which tells it spin down its motor, and sends a command to the SCP which advises the SCP that the processor 311 is entering the standby state, after which the processor 311 stops its clock. Thus, the processor 311 essentially stops operating. It remains in this state until some form of system activity causes the selector 346 to actuate the BREAK EVENT signal.

While the processor 311 is in this inactive state, the SCP 316 remains fully active, and in fact has the responsibility of waking up the main processor 311 in the event certain things occur. In particular, if a key on the keyboard 317 is pressed, then SCP will actuate interrupt signal IRQ1, as it normally does for a standard key press. The IRQ1 interrupt signal is connected to the selector 346, and will actuate the BREAK EVENT signal to wake up the processor 311. Also, the SCP 316 monitors the modem ring signal MDMRI from the modem 322, and will wake up the processor 311 in the event there is an incoming ring signal from a telephone line connected to the jack 434. Further, if the user has specified a suspend timer preset, the SCP will maintain a software timer starting from the point in time when the main processor 311 enters the standby mode. The basic philosophy is that, if the system has been in global standby mode for the specified time period with no activity sufficient to wake it up, it will automatically proceed to the suspend mode when the time interval expires in order to further conserve power. Of course, the user can specify that this timer is not to be active, in which case the system will simply remain in the standby mode. However, for purposes of explaining the present invention, it will be assumed that the user has enabled the suspend timer function, and that the SCP therefore maintains this timer in software. In the event this timer in the SCP expires, or in the event the SCP detects a modem ring signal, the SCP generates a false keystroke signal by actuating the interrupt signal IRQ1 in order to actuate the BREAK EVENT signal in the processor 311 and thus wake the processor up. Whereas in the case of a real keystroke the SCP sends the processor a coded representation of the particular key pressed, in the case of suspend timer expiration or a modem ring signal, the SCP sends one of two respective codes which do not correspond to any existing key on the keyboard and which the processor 311 is programmed to recognize as representing the timer expiration or the modem ring signal.

Thus, when the BREAK EVENT signal is eventually actuated in order to wake the processor up, the hardware of the processor 311 automatically restarts the CPU clock, and then the processor 311 proceeds at 652 with the software routine of Figure 11, in which it accepts and examines the code from the SCP. If it is determined at 653 that the code is an indication that the software suspend timer maintained by the SCP during standby has expired, then control proceeds to block 654, where a subroutine call is made to the routine which handles entry into the suspend mode, and thus the system proceeds automatically from standby mode into suspend mode. On the other hand, if it is determined at 653 that the BREAK EVENT signal was caused by any other condition, such as an actual keystroke on the keyboard or a modem ring indicator signal, then the processor 311 needs to return to the normal operational mode, and therefore proceeds to block 657.

In block 657, the processor 311 checks the TV flag (Figure 3), which it set before entering standby in order to provide an indication of whether the operating system maintains time and date information. If the flag is set to indicate that it does, then control proceeds to block 658, where the processor 311 extracts up-to-date time and date information from the real time clock circuit 376 (Figure 1), and updates the time/date information at 472 (Figure 3) in the operating system.

Control then proceeds to block 661, where the processor 11 checks the shadow register information at 486 (Figure 3) for the floppy disk drive, in order to determine the operational mode the floppy disk drive was in before the floppy disk drive was powered down for the standby state. The floppy disk drive can be operated in an ALWAYS ON mode in which it is never turned off except for standby and suspend, an AUTO ON mode in which it is left off when the system is powered up but will be turned on and then remain on if it is accessed at any point, and a FULL AUTO mode in which it is turned on and off as needed as a function of the extent to which it is being accessed, as already described above. With respect to the FULL AUTO mode, the I/O trap logic 361 and the local timer 351 are set to disable the FDD TRAP and the LOCAL STANDBY signals except when the floppy disk drive is being operated in the full-auto mode. If the floppy disk drive is not being operated in the FULL AUTO mode, then control proceeds from block 661 to block 662, where the processor 311 actuates the line FDDSLT in order to restore the power to the floppy disk drive 327, and restores the state of the floppy disk drive from the shadow registers stored at 486 (Figure 3) in the main memory. In either case, control proceeds to block 663, where the processor 311 instructs the SCP 316 to actuate the line MDMEN in order to restore power to the modem 322, and to actuate the line VIDEN in order to restore power to the video controller 318. The processor 311 then asks the SCP to identify whether the active video unit is the LCD 321 or an external CRT 426. If the reply from the SCP indicates that the active unit is the LCD, then control proceeds to block 667, where the processor 311 instructs the SCP to set the line CRT/LCD to select the LCD, and to actuate the signal BLON in order to turn on the backlight to the LCD. On the other hand, if the external CRT is the active unit, then control proceeds from block 666 to block 668, where the processor 311 instructs the SCP to set the line CRT/LCD to select the external CRT 426. In either case, control returns at 669 to the calling routine.

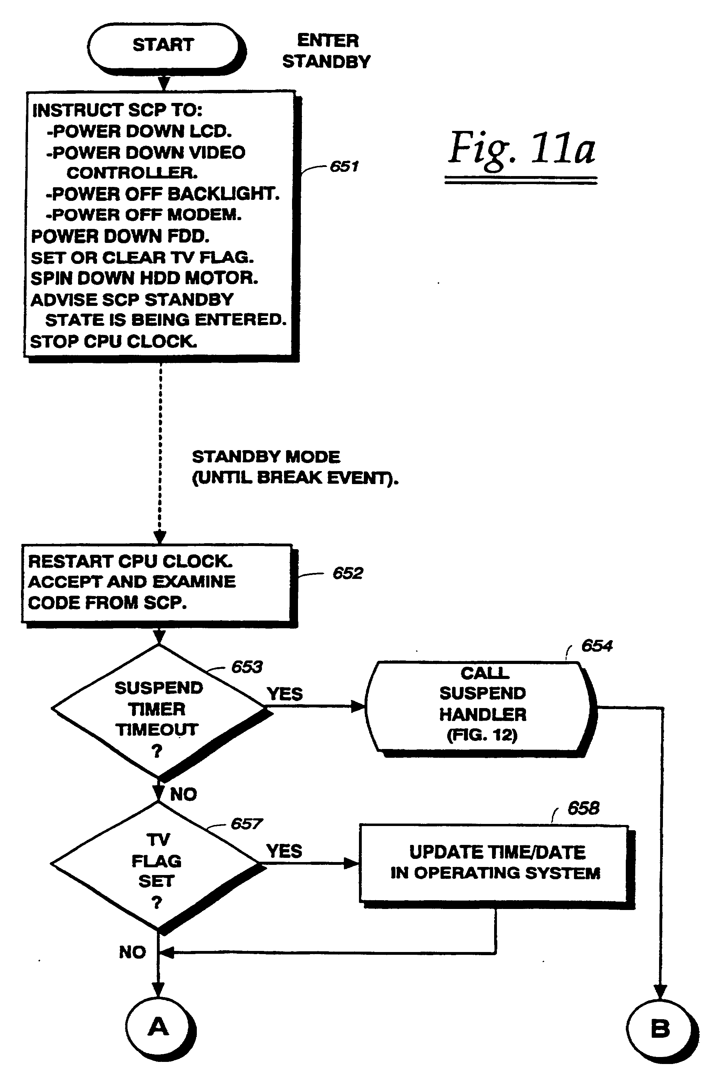

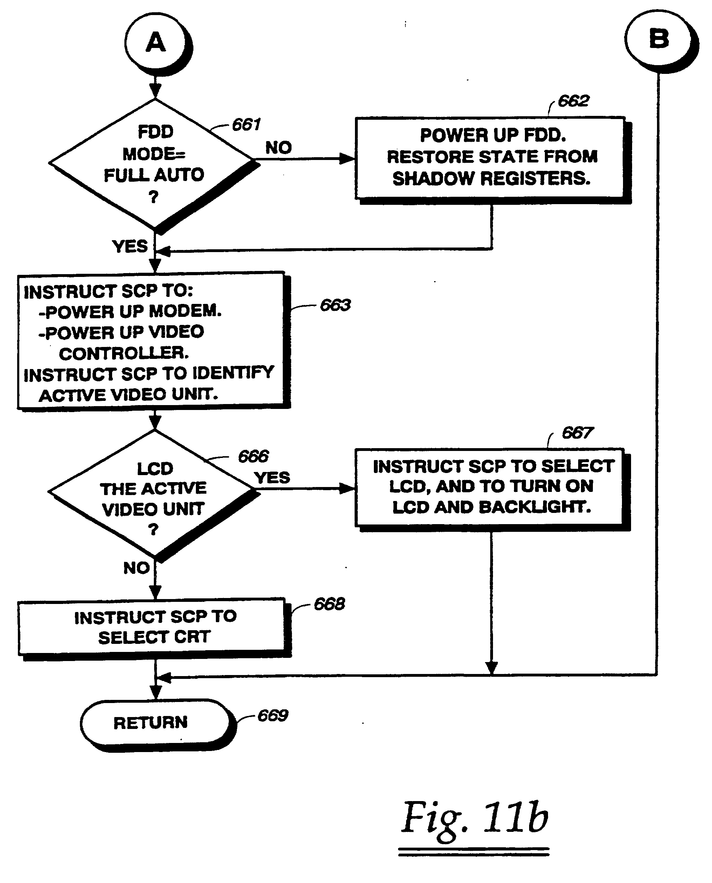

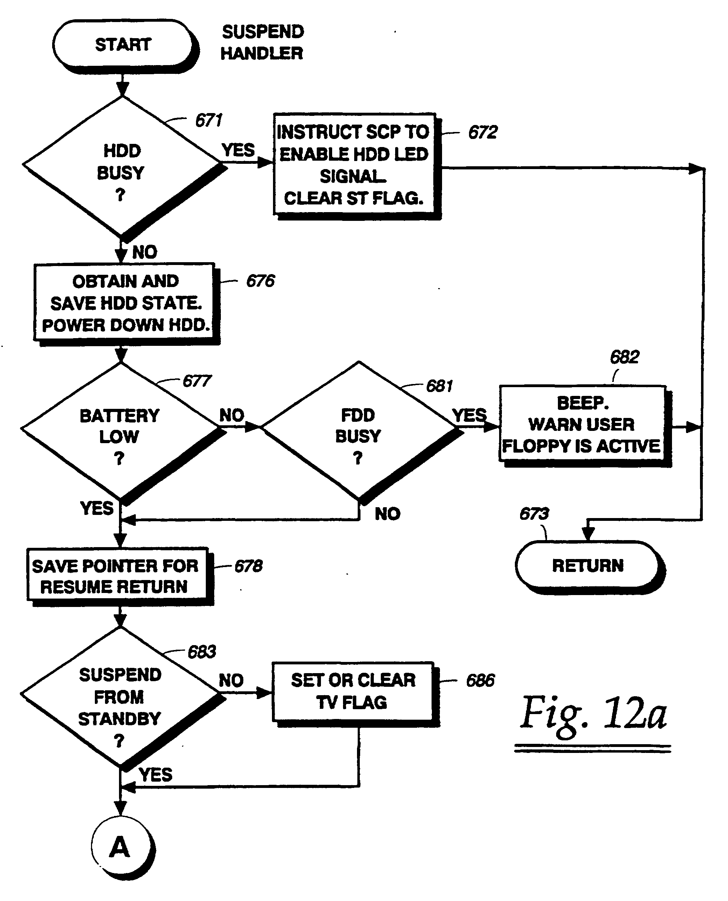

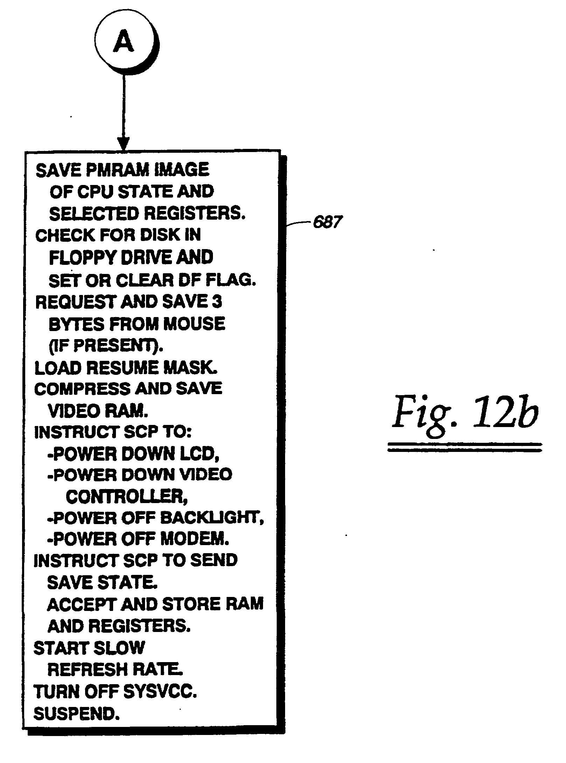

Subroutine calls to the suspend handler routine which guides the system into suspend mode have previously been mentioned in association with block 531 in Figure 5, block 576 in Figure 8, block 647 in Figure 10, and block 654 in Figure 11. The suspend handler routine will now be described in association with Figure 12. As previously mentioned, suspend mode is not entered while the hard disk is busy. Therefore, the processor 311 begins at 671 in Figure 12 by reading in a conventional manner certain status information from the hard disk drive 323 in order to determine whether it is busy. If it is, control proceeds to block 672, where the processor instructs the SCP to actuate the ENABLE signal to the gate 438, and then clears the ST flag (Figure 3) in order to indicate that, when the processor 311 is signalled that the hard disk is no longer busy, the processor will decide at block 573 in Figure 8 to enter the suspend mode at block 576 rather than the standby mode at block 578, as already described in association with Figure 8. From block 672, control proceeds to 673, where a return is made from the suspend handler routine without entry into the suspend mode.

On the other hand, if the hard disk is not busy at block 671, then control proceeds to block 676, where the processor 311 reads the current status of the hard disk drive 323 and saves it in the portion 482 of the PMRAM (Figure 3). The precise manner in which this occurs is discussed later. After this information has been obtained from the hard disk and stored in the memory, the processor 311 deactuates the line HDDSLT in order to place the hard disk drive in a reduced power mode.

Control then proceeds to block 677, where the processor checks the BATTLOW line from the SCP in order to determine the state of the battery power. If it is determined that the battery power is waning, then control proceeds directly to block 678, which is described in a moment and causes the system to proceed into suspend mode. On the other hand, if the battery power is sufficient, then control proceeds to block 681, where the processor checks to see if the floppy disk drive is busy. If it is, then control will proceed to block 682, where the processor 311 actuates line 391 (Figure 1) in order to cause the speaker 392 to beep, and warns the user on the display that the floppy disk drive is active. Then, at 673, control is returned to the calling routine without entry into the suspend mode. On the other hand, if it is determined at block 681 that the floppy disk drive is not busy, then control proceeds to block 678 to begin the final sequence of entry into the suspend mode.

In block 678, the processor 311 extracts from its stack 492 (Figure 3) an indication of the point from which the suspend handler routine was called, in particular in the form of the value of the instruction pointer which has been saved on the stack and which indicates the point to which program control is to be returned. The processor 311 saves this in the main memory for use during a subsequent resume, as described later. Then, at block 683, the processor 311 checks to see whether it is carrying out an automatic entry to suspend mode from standby mode, in particular through block 654 in Figure 11. If it is, then the processor 311 has already addressed whether or not the operating system supports time and date information as part of its entry into the standby mode. On the other hand, if it is not entering suspend mode directly from standby mode, it proceeds to block 686, where it either sets or clears the TV flag (Figure 3) in dependence on whether or not the current operating system supports time and date information. In either case, control then proceeds to block 687.

In block 687, the processor 311 takes the CPU state saved at 481 (Figure 3), and creates a copy of it at 488. This is because a further PMI interrupt will be intentionally induced during a resume from the suspend mode in a manner described later, at which point the hardware will necessarily overwrite the information saved at 481. Since this information is needed to resume the interrupted application program, a copy of it is temporarily saved at 488. In addition, the processor 311 saves at 488 some selected internal registers which are not automatically saved at 481 in response to a PMI. This is because the PMI handler routine can service most PMI interrupts without altering these selected registers, and thus in order to speed up handling of most PMI interrupts the processor 311 does not save the selected registers. On the other hand, these registers must be saved in order to enter suspend mode, because the portion of processor 311 which contains them will be powered down during suspend mode and the contents of these registers would thus be lost. Therefore, before entering suspend mode, they are saved at 488.

Continuing with block 687 in Figure 11, the processor reads status information from the floppy disk drive in order to determine whether a floppy disk is present in the floppy disk drive, and sets the DF flag (Figure 3) if a disk is present or clears the flag if a disk is not present. This is so that when operation resumes it will know if a disk should be present in the drive, because it is possible that a user might remove the disk while the system is in suspend mode or, worse yet, replace the disk with a different disk. If the interrupted application program were in the middle of writing data to the disk when the suspend occurred, it would have no way of knowing at resume that the disk had been changed, and might complete its task of writing data to the floppy disk drive without knowing that it was writing the data on to the wrong disk.

Then, still at block 687, the processor reads 3 bytes of status information in a conventional manner from the mouse 421 (if one is present), and stores the bytes at 482. An external keyboard, on the other hand, has no such status information which must be saved, but instead is always maintained in exactly the same configuration and mode as the internal keyboard. Then, the processor 311 configures and loads into mask register 382 (Figure 1) the resume mask which determines the events which will wake the processor up from the suspend mode. Then, the processor reads the video RAM 448 from the video controller 318, compresses the video information using a conventional data compression technique, and then stores the compressed data in the portion 478 (Figure 3) of the main memory. Then, the processor 311 sends a series of commands to the SCP which instruct the SCP to deactuate the line LCDPWR in order to power down the LCD display, to deactuate the line VIDEN in order to power down the video controller, to deactuate the line BLON to turn off the backlight for the LCD display, and to deactuate the line MDMEN in order to power down the modem. Then, the processor 311 sends the SCP a command which instructions the SCP to send the processor 311 the contents of its RAM 440 and certain internal registers. The processor 311 accepts this information from the SCP, and stores it at 482 (Figure 3) in the PMRAM. Then, the processor 311 sets the refresh control circuit 386 (Figure 1) to carry out extremely slow refresh to the main memory, and then deactuates the signal SYSPWROFF to the power control circuit 312 so that the power control circuit turns off the SYSVCC power to the SCP, keyboards, video controller, hard disk drive, LCD display, modem, floppy disk drive, and ROM 328. The power control circuit 312 is, of course, still supplying PMVCC power to the main memory 326, the processor 311, and flash RAM 331. Finally, the processor 311 executes a software instruction which causes it to enter suspend mode, as a result of which the processor 311 stops operating and internally turns off power to most of its circuits, with the exception of circuits such as the real time clock 376 which must continue to maintain time and date information, the resume control circuitry 381-383 which must be capable of detecting conditions causing operation to resume, and the refresh control circuit 386 which is maintaining the data in main memory 326.

If the user has specified that an ALARM signal from the real time clock 376 or a modem ring indicator signal MDMRI from the modem 322 is to be capable of waking up the processor, then the processor will have configured the resume mask 382 so that either of these events will produce a RESUME RESET signal. However, the most common cause for a resume is manual actuation of the switch 313 by a user.

The RESUME RESET signal sets the resume flag 383, whereas this flag is automatically reset by any other reset signal. Further, the RESUME RESET causes the processor 311 to internally restore power throughout its internal circuitry, and the processor automatically brings the refresh control circuitry 386 back to a normal state so that the main memory 326 can be accessed. In response to any type of reset, the processor 311 automatically goes to a predetermined location in the flash ram 331 and executes the first instruction of a reset handling routine stored there. This routine is shown in Figure 13. The processor 311 may begin by doing some internal diagnostics, but this is conventional and therefore not illustrated in Figure 13. For purposes of the present invention, the first significant step performed by the processor 311 is to deactuate SYSPWROFF in order to cause the power control circuit 312 to turn system power SYSVCC back on, so that the SCP, keyboard, video controller, LCD display, modem, hard disk drive and floppy disk drive again have access to a source of power.

Then, at 692, the processor checks the resume flag 383 (Figure 1). If it is set, then the processor will attempt to configure the system using the set-up information stored in the EEPROM 439 of the SCP. If it is not set, then the system is performing a cold boot and will attempt to configure itself using the set-up information stored in the RAM 377 of the real time clock circuit 376. More specifically, if the resume flag is set to indicate that the system is resuming from suspend mode, then control will proceed from block 692 to block 696, where the system will attempt configuration using the current set-up information stored in the EEPROM 439 of the SCP.

In particular, at block 696, the processor 311 instructs the SCP to send current set-up information to it. It performs a checksum on this information and compares it at 697 to a checksum value present in the set-up information itself in order to determine if the set-up information is. valid. If it is, then control proceeds directly to block 698, where the system will configure itself using this set-up information. On the other hand, if it is determined at block 697 that the current set-up information is not valid, then control proceeds to block 701, where the system warns the user that the current set-up information is not valid and asks for authorization to use the boot set-up information stored in the real time clock circuit 376. If the user refuses, then block 702 transfers control to block 703, where the system halts. The user would have the option of restarting the system with a conventional set-up disk in order to configure it in a desired manner. Typically, the user would approve use of the boot set-up information, and control would thus proceed from block 702 to block 693, where the processor 311 would run a checksum on the boot set-up information in the real time clock circuit 376 and compare the checksum to a checksum stored in the real time clock circuit 376. If the checksum was accurate, then control would proceed directly to block 706, where as described below the system would be configured using the boot set-up information. otherwise, control proceeds to block 707, where the processor 311 warns the user that the boot set-up information is not valid and asks for authorization to use the factory default set-up information stored in the flash RAM 331. If the user refuses permission, then at 708 control is transferred to block 711, where the system halts.

Otherwise, control proceeds to block 712, where the processor runs a checksum on the factory default set-up information in the flash RAM 331 and compares the result to a checksum stored in the flash RAM. If an error is detected, control proceeds to 713, where the user is warned that the system has no usable set-up information, and then the processor halts at 711. However, if the factory default set-up information is found to be accurate at block 712, then control proceeds to block 716, where the factory default set-up information is copied from the flash RAM to the RAM 377 in the real time clock circuit 376. Then, at block 706, the set-up information in the real time clock circuit 376 is sent to the SCP, and the SCP stores it in the EEPROM 439 for use as the current set-up information. Then, at block 698, the processor 311 configures the system according to the set-up information which is stored in the SCP.

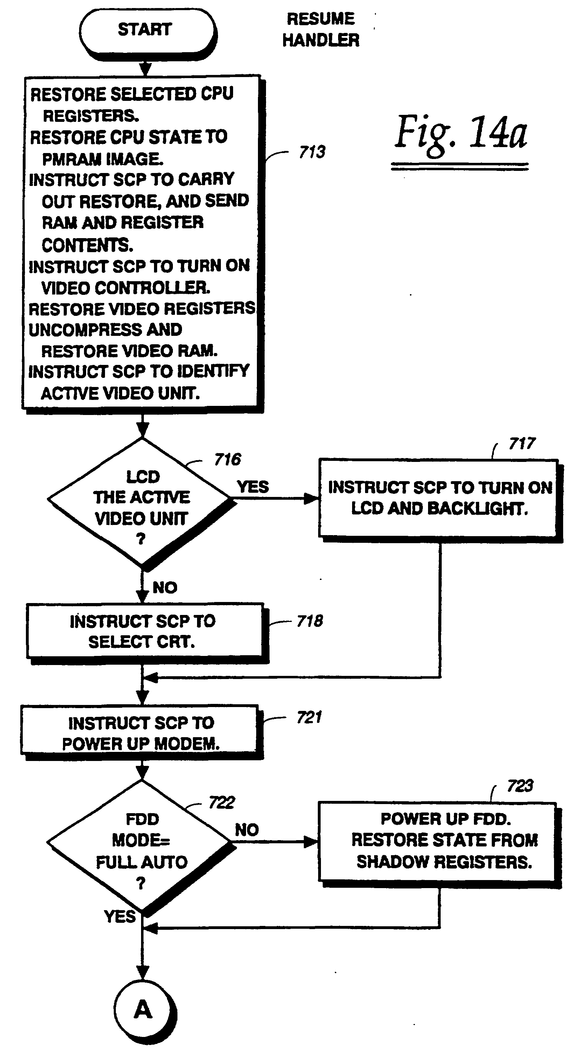

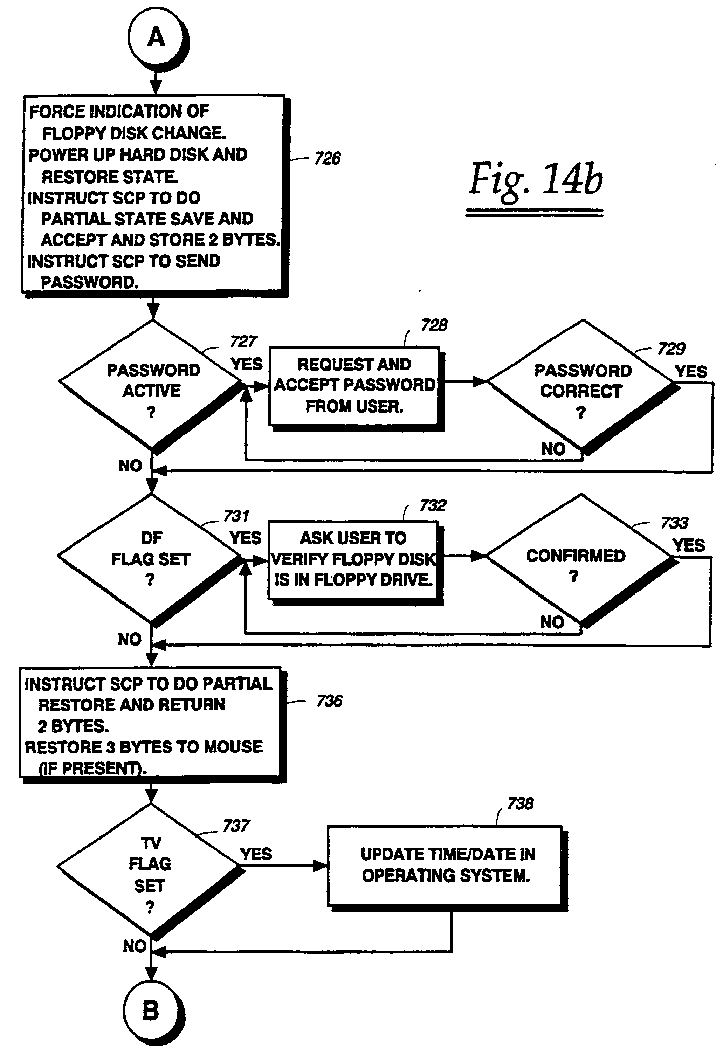

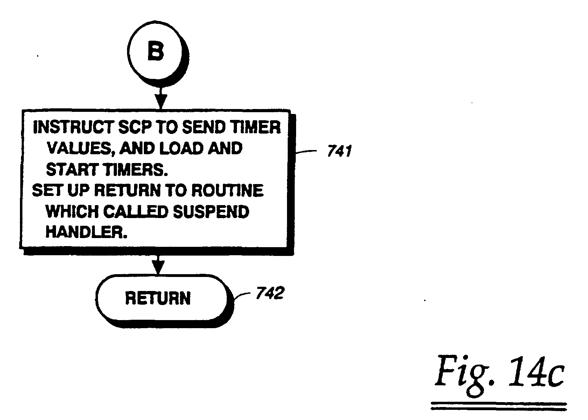

Then, at block 707, the processor again checks the resume flag 383 in order to determine if a resume is being performed. If it is not, then control proceeds to block 708, where the processor starts the operating system in a conventional manner. Otherwise, control proceeds from block 707 to block 711, where the processor 311 executes a software instruction which generates a PMI interrupt in order to invoke the previously-described PMI handler routine. Thus, the software PMI causes the processor to continue with the PMI handler routine shown in Figure 4. In particular, at previously-described block 502, the system checks the resume flag again in order to determine whether the PMI handler has been entered as a function of resuming from a suspend state, or for some other reason. Since in this case the flag will be set, control proceeds to block 503, where a branch is made to a resume handler routine which is shown in Figure 14.

At block 713 in the resume handler routine of Figure 14, the processor 311 begins by extracting from portion 488 (Figure 3) of the main memory the states of selected registers which it stored there, and restoring these values directly to the registers in the processor itself. Then, the processor transfers from the portion 488 to the portion 481 the states of the remaining processor registers, thereby overriding the information stored at 481 by the software PMI used to reenter the PMI handler, so that at the end of the resume handler the hardware will be able to find and restore these register states to the registers of the processor 311 when the PMI handler is terminated and the interrupted application program is resumed. Then, still at 713 in Figure 14, the processor instructs the SCP to carry out restoration of its state, and sends the SCP the contents of the SCP registers and RAM stored by the processor 311 in the main memory prior to entering suspend mode. Then, the processor instructs the SCP to actuate the VIDEN signal in order to turn on the video controller. Then, the processor restores the configuration of the video registers 446, and then uncompresses and restores the video RAM from the state of the video RAM saved at 478 in the main memory. Then, the processor 311 instructs the SCP to identify from the set-up information in EEPROM 439 the active video unit. Then, if the processor finds at block 716 that the LCD display is the active video unit selected by the user, it proceeds to block 717 where it instructs the SCP to actuate the LCDPWR signal in order to power up the LCD, and to actuate the BLON signal in order to turn on the backlight for the LCD display. On the other hand, if it is determined at 716 that the user has selected the external CRT 426 as the active video unit, control proceeds to block 718 where the processor instructs the SCP to set the CRT/LCD signal to select the CRT. In either case, at block 721 the processor then instructs the SCP to actuate the MDMEN line in order to power up the modem 322. Then, at block 722, the processor checks the shadow register information at 486 in order to determine if the floppy disk drive is being operated in FULL AUTO mode. In not, then at block 723 the processor actuates the FDDSLT line in order to power up the floppy disk drive, and sends the shadow registers stored at 486 to the floppy disk drive in order to restore the configuration of its control registers.

Control ultimately proceeds to block 726, where the processor sets the DC flag 473 (Figure 3) in order to force an indication to the operating system that a floppy disk change has occurred. This will force the operating system to reread certain standard tables from the disk to an image of the disk in memory, thereby ensuring that if a user has changed the disk while the system was in suspend mode, the image of these tables in memory will at least correspond to the tables of the disk which is actually present in the disk drive, as opposed to tables on a disk which is no longer present in the disk drive.

Then, still in block 726, the processor 311 actuates the line HDDSLT in order to power up the hard disk, and then sends the hard disk the information regarding the state of the hard disk which the processor obtained from the hard disk and stored before entering the suspend mode. This restores the hard disk to the state it was in before operation of the system was suspended. Then, the processor instructs the SCP to do a partial state save as previously discussed in association with block 618 of Figure 9. Then, the processor instructs the SCP to send it the current password, and then if it is determined at 727 that the password is an active password, the processor requests and accepts a password from the user at 728 and then compares the passwords at 729. If they do not compare, the processor remains at 728 and 729, in order to prevent an unauthorized user from using the system.

If they do compare, control proceeds to 731, where the processor checks the DF flag (Figure 3) in order to determine whether a disk was present in the floppy drive when the system was turned off. If a disk was present, then control proceeds to block 732, where the processor uses the active video unit to ask the user to verify that the same floppy disk is still in the floppy drive or has been reinserted in the floppy drive. A check is made at 733 to be sure that the user has confirmed that this floppy disk is present. If it is not, control remains at blocks 732 and 733. Once user confirmation is obtained, control proceeds to block 736, where the processor instructs the SCP to do a partial restore, and sends it the two bytes which were received at block 726. Also, if a mouse 421 is present, the processor takes from portion 482 of the main memory the 3 bytes obtained from the mouse before the suspend, and loads them back into the mouse in a conventional manner.

Then, at block 737, the processor checks the TV flag (Figure 3) in order to determine whether the operating system supports time and date information. If it does, then in block 738 the processor reads up-to-date time and date information from the real time clock 376 (Figure 1), and uses it to update the time and date information maintained at 472 (Figure 3) in the portion 471 of the main memory used for the operating system. Then, at 741, the processor instructs the SCP to send it the set-up information stored in the EEPROM 439 for the timers 351 and 352, and uses this information to configure the registers 356 and 357 for the timers 351 and 352 so that the timers start running (or to disable the timers if the timers will not be used). Then, at 741, the processor uses the pointer saved at block 678 in Figure 12 to modify its stack 492 so that, when it immediately thereafter does a subroutine return at 742, the processor 311 will return to the point from which the suspend handler subroutine was called before the processor entered the suspend mode, or in other words to one of the blocks 531, 576, 647 and 654 respectively appearing in Figures 5, 8, 10 and 11. Following the subroutine return, the system continues execution of the PMI handler routine from the point at which execution was placed on hold so that the system could enter and resume from the suspend mode. When execution of the PMI routine is eventually completed, the processor 311 will exit from the PMI handler at blocks 522 and 523 of Figure 4 in the manner previously described, so that execution of the interrupted application program resumes as though there had been no interruption at all.

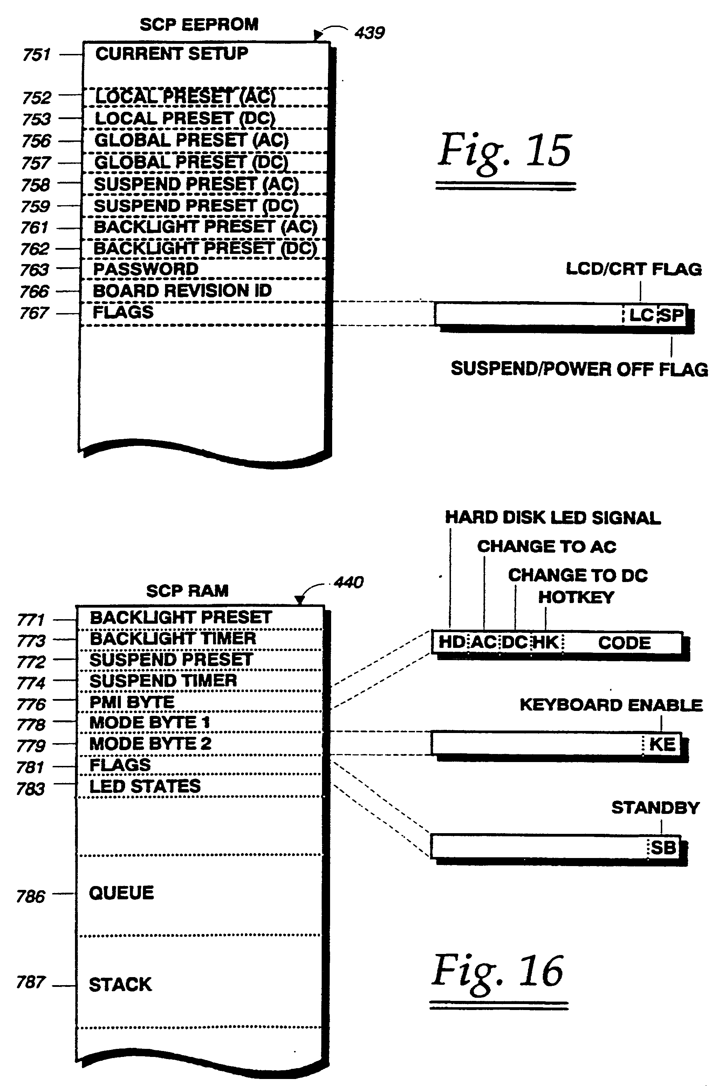

Turning now in more detail to the system control processor (SCP) 316, Figure 15 is a diagrammatic view of a portion of the information stored in the EEPROM 439 of the SCP. A portion 751 of this device is used to store current set-up information of the type commonly found in conventional and commercially available personal computers. In addition, portions 752 and 753 store two different values of a preset time for the local timer 351, one value being used when the system is operating on AC power and the other being used when the system is operating on DC power. Similarly, portions 756 and 757 store respective AC and DC values for use in the global standby timer 352, portions 758 and 759 store respective AC and DC values of a suspend timer preset for the suspend timer maintained in software by the SCP, and portions 761 and 762 contain respective AC and DC preset values for a backlight timer maintained by the SCP. A portion 763 contains the current system password, and a portion 766 contains a value representing a board revision number of the main circuit board on which the processor 311 and SCP 316 are mounted. A further portion 767 contains some flags, including an LC flag which indicates whether the LCD 321 or the external CRT 426 is presently the active display device, and an SP flag which indicates whether manual deactuation of the switch 313 is to place the system in suspend mode or the power off state.

Figure 16 is a diagrammatic view of the SCP RAM 440 and some of the information stored therein. In particular, a portion 771 stores a preset for the backlight timer. This is the value which is currently specified for use in operating the timer, and in particular is the AC back light preset stored at 761 in the EEPROM if the system is operating under AC power, and is the DC backlight preset stored at 762 if the system is operating under DC power. Similarly, the SCP RAM stores at 772 a suspend preset which is one of the AC and DC suspend presets stored at 758 and 759 in the EEPROM. The SCP RAM also includes locations 773 and 774 which respectively serve as the backlight timer and the suspend timer. Each timer is started by storing in the associated location the appropriate preset, which is a positive number representing the time interval to be timed. The number of each timer is then periodically decremented by software in a manner described later, and the timer expires when the value in the location reaches zero.

The SCP RAM 440 also includes a PMI byte 776. When the main processor asks the SCP to identify the source of an external PMI, the SCP sends the main processor the PMI byte 776. This byte includes an HD bit which is set to indicate that the hard disk LED signal was the source of the PMI, and AC bit which indicates that the power supply has just changed to AC power, a DC bit which indicates that the power supply has just changed to DC power, and a HK bit which indicates that a hot key multi-key combination has been pressed on the keyboard and was the reason for the PMI. In addition, the PMI byte includes a code which identifies the most recent hot key actuated on the keyboard.

The RAM also includes two mode bytes 778 and 779, which control modes in which the SCP and the keyboard operate. For purposes of understanding the present embodiment, a single bit from one of these bytes is shown, which is a keyboard enable (KE) flag. This KE flag indicates whether or not information is to be accepted from the keyboards. Certain application programs may temporarily cause this flag to be cleared in order to prevent the user from entering information on the keyboard.

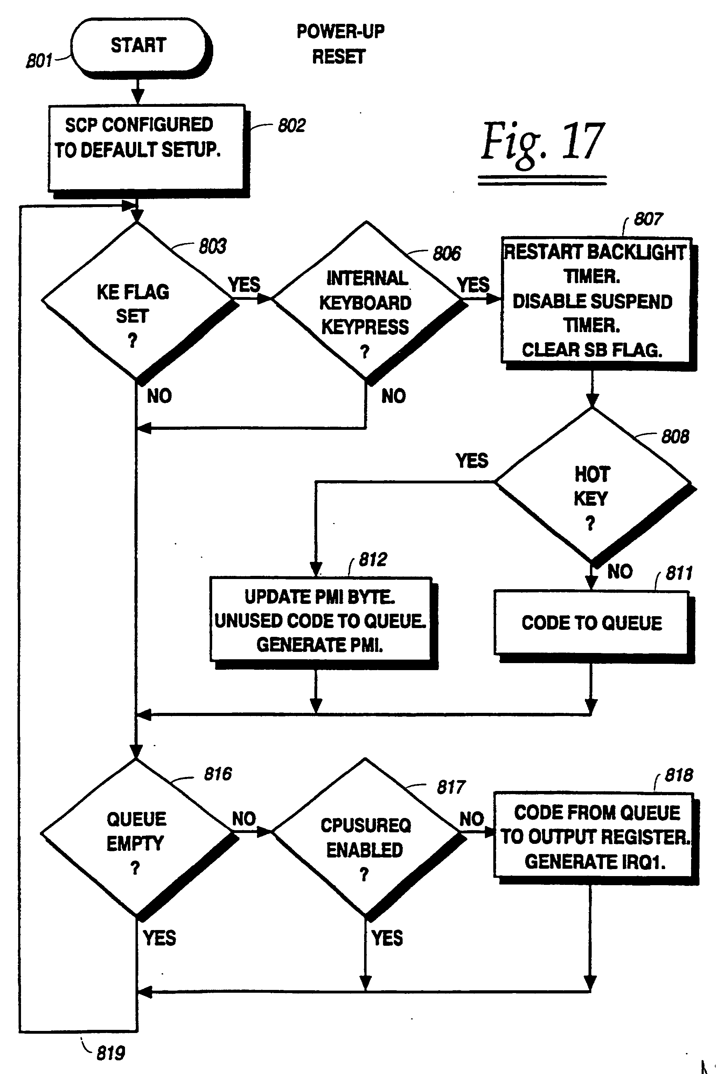

The RAM 440 also includes a portion 781 containing an additional flag, in particular a standby (SB) flag which is set to let the SCP know that the main processor is currently in standby mode. The RAM 440 also includes a portion 783 which has bits corresponding to each of the four LEDs 442 on the keyboard 317, and these bits each indicate whether the associated LED on the keyboard should presently be on or off for purposes of normal operation. The RAM 440 also includes a queue area 786, which is discussed below, and the usual stack area 787. Each time power to the SCP is turned on, including the situation where the system is resuming from the suspend mode, the hardware of the SCP automatically causes it to execute a program instruction stored at a predetermined location in the ROM 437, which is the first instruction of the firmware program which controls the SCP. Figures 17-20 are flowcharts of this firmware program. Following a power-up reset at 801, block 802 represents the first portion of the firmware program, in which the SCP configures itself to a default set-up. This includes turning power on to the video controller 318 and LCD 321, and turning on the backlight 431 for the LCD. This default configuration is carried out even if the system is resuming from a suspend mode which was entered while the active display unit was the external CRT 426 rather than the LCD 321. If the active display is in fact to be the external CRT 426, then it is up to the main processor 311 to send commands to the SCP to appropriately reconfigure it, in a manner described below.

After the SCP configures itself to a default set-up configuration, control proceeds from block 802 to block 803, where the SCP checks to see if the KE flag (Figure 16) is set to indicate that the keyboards are enabled and information can be accepted from them. If so, then control proceeds to block 806, where the SCP scans only the internal keyboard in order to determine if a key has been pressed. If one has, then control proceeds to block 807, where the SCP restarts the backlight timer 773 (Figure 16) by taking the current backlight preset stored at 771 and storing it in the backlight timer location at 773. Thus, so long as keys are being pressed the timer will be periodically restarted before it can expire and thus will keep the backlight on, whereas if the backlight timer expires the SCP will turn off the backlight in a manner described below in order to conserve power.

Then, still at block 807, the system forcibly disables the suspend timer 774, even if this timer is already disabled, for example by storing a negative number in location 774. The fact that a key has been pressed means that, if the main processor 311 did happen to be in the suspend mode, the SCP would be waking it up in order to pass it the keystroke, and thus the suspend timer necessarily needs to be stopped because the main processor will be exiting standby mode and it is no longer necessary to measure the period of time it has been in standby mode. For similar reasons, the SB flag (Figure 16) is forcibly cleared to indicate that the main processor is not in the standby mode.

Then, at block 808, a check is made to see if the key which has been pressed is a hot key, or in other words one of several specific predefined multi-key combinations. If not, then at 811 a code representing the particular key pressed is placed in the queue section 786 of the SCP RAM 440, from which it will be sent in due course to the main processor. On the other hand, if it is determined at 808 that the key which has been pressed is a hot key, then control proceeds to block 812, where the SCP updates the PMI byte 776 (Figure 16) by setting the HK bit to indicate that a hot key has been pressed and by placing in the code section of the PMI byte a unique code corresponding to the particular hot key. Then, the SCP places an unused code in the queue, which will have the effect of waking up the processor if it is in the standby mode but which in any case will be discarded by the processor 311 if it ultimately reaches the processor 311. Then, still in block 812, the SCP produces an output signal which actuates the EXTPMI line in order to produce a PMI in the main processor.

Control ultimately proceeds to block 816, where the SCP checks to see if the queue 786 is empty. If it is not, then it contains information waiting to be sent to the main processor, and control proceeds to block 817, where the SCP checks to see if the CPUSUREQ line from the main processor is actuated to indicate that the main processor is about to send a command to the SCP. If it is actuated, the SCP does not send information from the queue, in order to keep the interface to the main processor clear so that the interface will be available for any information which the SCP needs to send back to the main processor in response to the command, while also avoiding the possibility that information from the queue being sent to the main processor at about the same time that the main processor issues a command will be misinterpreted by the main processor as being a response to the command. If it is determined at 817 that the CPUSUREQ line is not actuated, then at block 818 the SCP takes a code from the queue and places it in an output register in the interface to the main processor, and then generates an IRQ 1 interrupt signal in order to indicate to the main processor that the output register contains information for the main processor. In the event the main processor happens to be in standby mode, the IRQ 1 interrupt signal will wake it up from the standby mode, as already described above in association with the discussion of the main processor. The processor then loops at 819 through blocks 803 and 818, which constitutes the main loop of the program in the SCP.

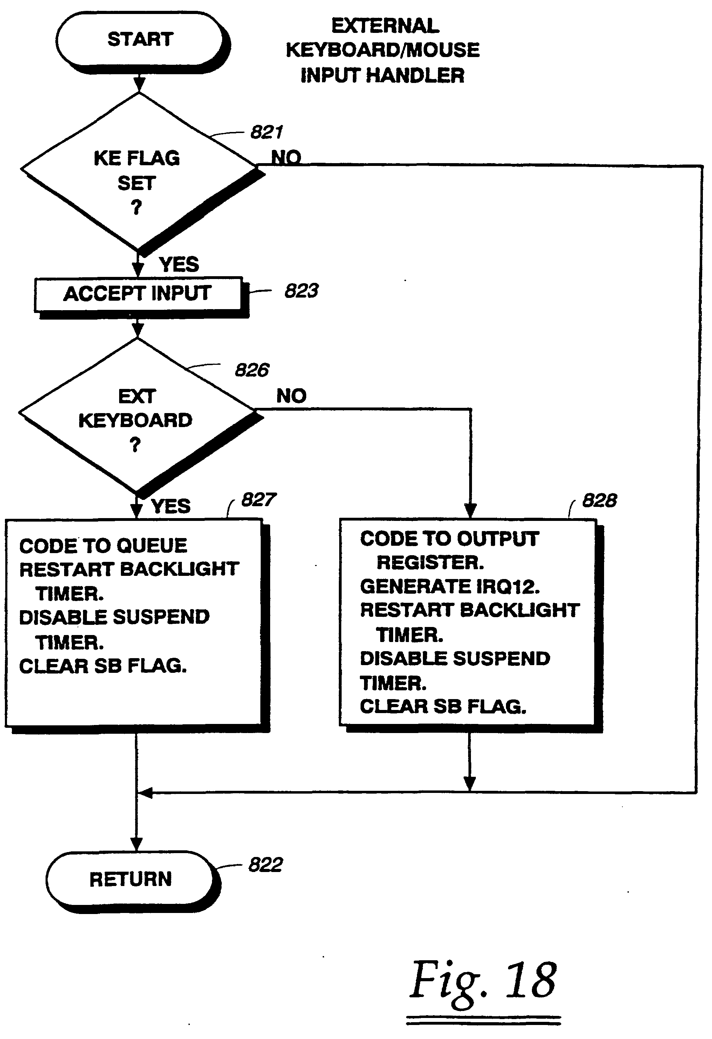

This main loop can be interrupted by different events, one of which is an attempt by an external keyboard or mouse 421 to send information to the SCP. In response to an interrupt caused by such an attempt to send information, the SCP executes the interrupt service routine shown in Figure 18. In this routine, the SCP first checks the KE flag at 821 in order to determine whether the user is currently allowed to input information. If the flag is not set, then control proceeds to 822, where a return is made from the interrupt handler without accepting the information. Typically, however, it will be determined at 821 that the information can be accepted, and therefore it will be accepted at block 823, and then at block 826 the system will determine whether it is dealing with an external keyboard or mouse, and if the device is a keyboard the SCP will proceed to block 827 where it places a code representing the actuated key in the queue 786. Hot keys are recognized only for the internal keyboard and not an external keyboard. If a hot key actuation were received from an external keyboard, it could be discarded. All valid codes are thus placed directly in the queue. Then, the SCP restarts the backlight timer, disables the suspend timer and clears the SB flag, for reasons similar to those discussed above in association with block 807, and then returns at 822 to the interrupted routine.

On the other hand, if it is determined at 826 that the external device is a mouse, control proceeds to block 828, where the code received from the mouse is placed in an output register, and then the SCP actuates interrupt line IRQ 12, which is reserved for use with a mouse and indicates to the processor that information from a mouse is being sent to the processor. Then, the SCP restarts the backlight timer, disables the suspend timer and clears the SB flag, and returns at 822.

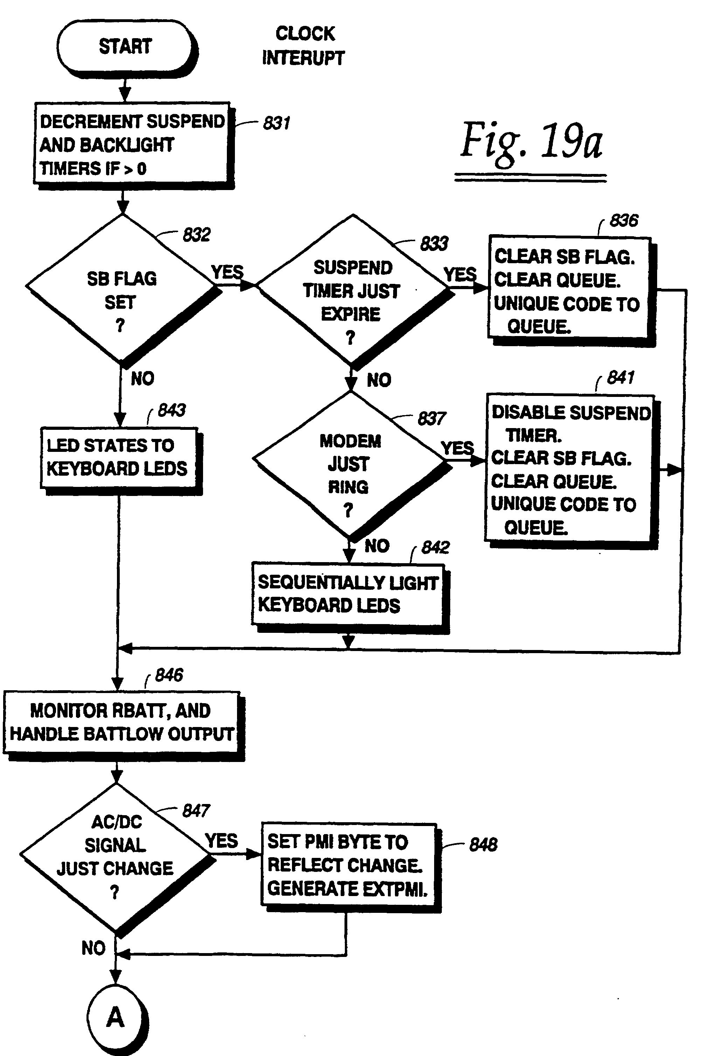

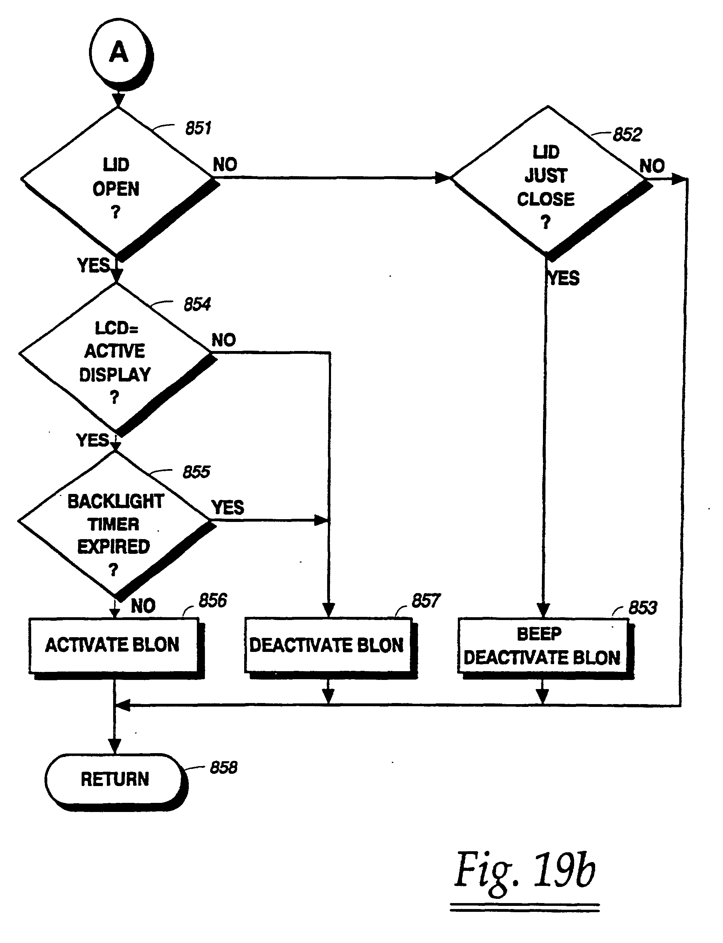

Another source of interrupts to the main routine shown in Figure 17 are pulses of the keyboard clock signal KBCLCK received from the clock generation circuitry in the main processor. This interrupt occurs at regular intervals and thus each occurrence of this interrupt represents the elapse of an amount of time equal to this interval. The occurrence of this interrupt is therefore used to keep track of time, as well as to perform some housekeeping functions. The firmware service routine for this interrupt is shown in Figure 19, where the SCP begins at 831 by decrementing the numbers in each of the timer locations 773 and 774 if they are greater than zero. As mentioned above, the expiration of each timer occurs when the positive value in it is decremented to a value of zero.

Then, at 832, the system checks to see if the SB flag is set, or in other words whether the main processor is currently in standby mode. If the main processor is in standby mode, then control proceeds to block 833, where the SCP checks to see if the suspend timer has just expired, or in other words whether the value in location 774 has just been changed from one to zero at block 831. If it has, then the system has remained inactive for a predetermined period of time while the main processor was in standby mode, and therefore the main processor is to be shifted to suspend mode in order to further conserve power until the user again begins using the system. Thus, at block 836, the SCP clears the SB flag in order to indicate that the main processor is no longer in standby mode, because the SCP is going to break the main processor out of standby mode so that the main processor can enter suspend mode. Then, the SCP clears the queue 786, so that the queue can be used to send the main processor a unique code which is not used by the keyboard and which indicates that the suspend timer has expired and that the main processor should transition from standby to suspend mode.

On the other hand, if it is determined at block 833 that the suspend timer has not yet expired, then at block 837 the SCP checks to see if the modem ring signal MDMRI from the modem 322 has just been actuated in order to indicate that there is an incoming call. If it has, then control proceeds to block 841, where the SCP turns off the suspend timer 774 and then takes the same actions described above in association with block 836, except that the unique code placed in the queue is a different unique code not used for the keyboard which will be interpreted by the main processor to mean that the modem ring signal has occurred.

If it is determined at 837 that no ring signal is being received from the modem, then control proceeds to block 842, where the four LEDs 442 on the keyboard are controlled in a manner which causes them to be sequentially lit, which serves as a visual indication to the user of the system that the main processor is in standby mode. In contrast, if it had been determined at block 832 that the SB flag was not set and that the main processor thus was not in standby mode, control would have proceeded directly to block 843, where the LED states stored at 783 in the SCP RAM would have been used to set the LEDs 442 in the keyboard 317 to their normal operational states.

In any event, control ultimately proceeds to block 846, where the SCP reads the value of the RBATT signal from the power control circuit 312 through the A/D converter 416, and then analyzes the state of the signal. The SCP preferably analyzes the rate of change of this signal over time, because an inherent characteristic of the rechargeable battery 396 is that its terminal voltage will drop very slowly while it has a strong charge, and will then begin dropping much more quickly a short period of time before the battery reaches a state where it would not have enough power to operate the system. Consequently, when it is determined that the rate of change of this signal has exceeded a predetermined reference value, the SCP actuates the BATTLOW signal to the main processor 311 as an indication that the battery power is getting low. However, it will be recognized that a detailed analysis of the RBATT signal is not necessary, and that the SCP could alternatively just determine whether the RBATT signal had dropped below a predefined voltage, and then actuate the BATTLOW signal to the main processor 311.

Thereafter, at block 847, the SCP checks the DC/AC signal from the power control circuit 312 in order to determine whether this signal has just changed from one state to another state. If it has, then control proceeds to block 848, where the SCP sets either the AC bit or DC bit in the PMI byte 776 to indicate the current source of system power is AC or DC. Then, the SCP outputs a signal at 435 which actuates the EXTPMI signal in order to generate a PMI in the main processor.

At block 851, the SCP checks the LIDSW switch from the lid switch 432 for the lid on which the LCD display 321 is mounted. If the lid is closed, then control proceeds to block 852, where the SCP checks to see if the lid has just been closed. If the lid was already closed then block 853 is skipped, but if the lid has just been closed control proceeds to block 853, where the SCP actuates line 417 to cause the speaker 392 to beep, and then deactuates the BLON line in order to turn the backlight 431 off. It should thus be noted that if the lid is closed during system operation the system does not automatically enter standby mode or suspend mode, but instead simply beeps to warn the user that the system is still active, and turns off the backlight for the LCD in order to conserve power.

If it was determined at block 851 that the lid is open, then at 854 the SCP checks to see if the LCD is currently the active display, and if it is checks at 855 to see if the backlight timer has expired, and if the backlight timer has not expired proceeds to block 856 where it ensures that the BLON signal is actuated in order to turn on the backlight 431. On the other hand, if the LCD display is not active or the backlight timer has expired, then at block 857 the SCP deactuates the BLON signal to turn off the backlight. Thus, if the user does not press any key for a predetermined period of time specified by the backlight preset at 771, the backlight is automatically turned off in order to conserve power, but will be automatically turned back on when the user again presses a key. After appropriately controlling the backlight, the SCP proceeds to 858, where control is returned to the calling routine.

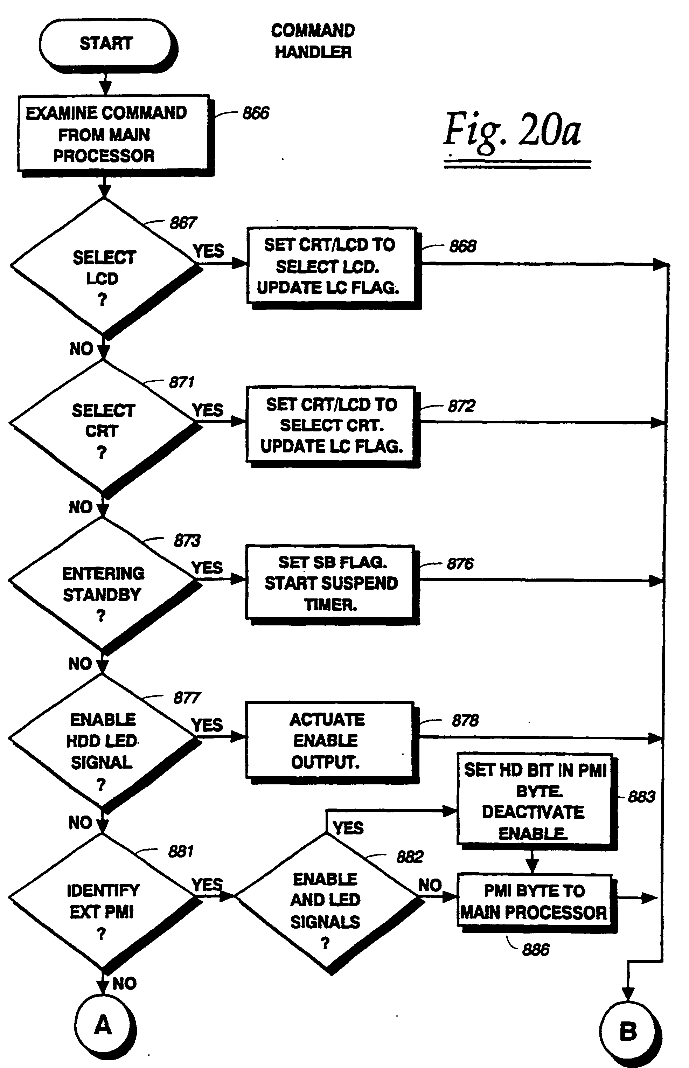

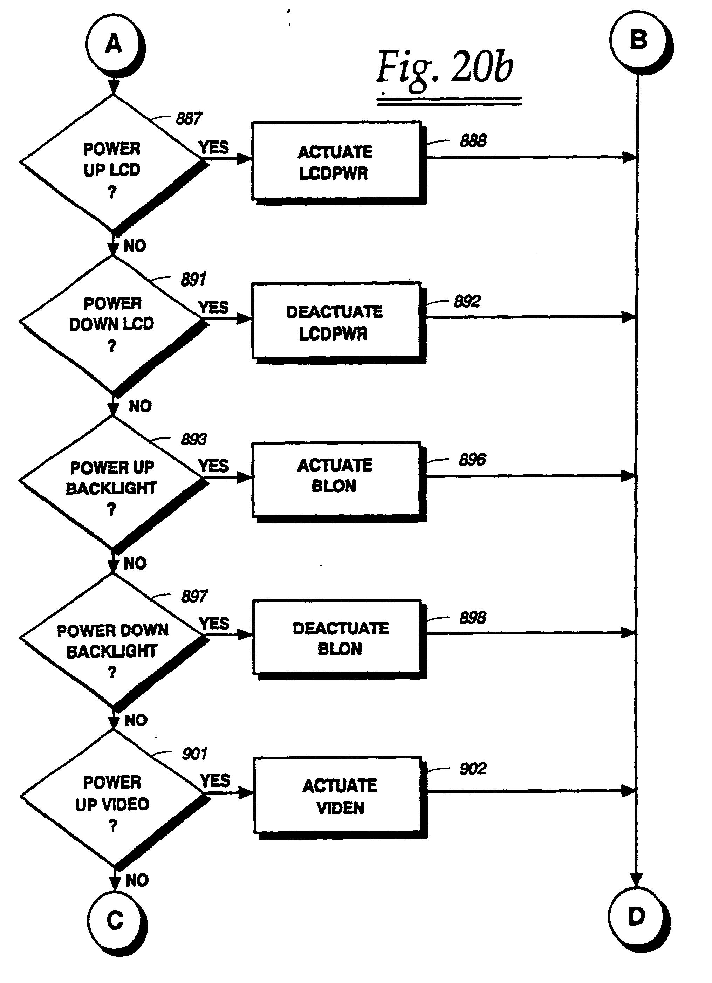

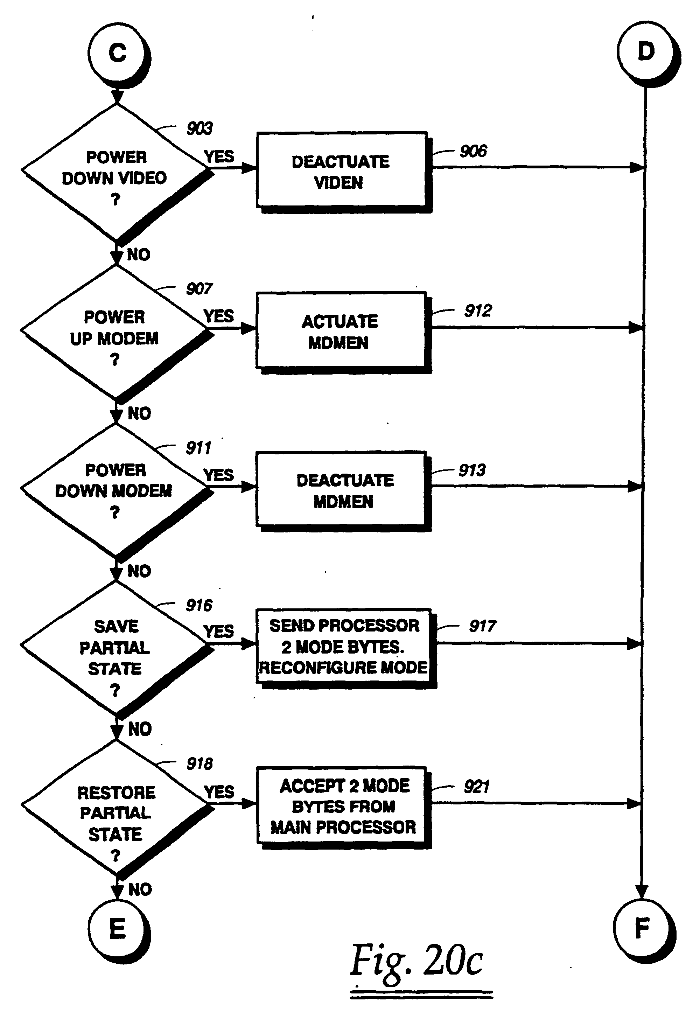

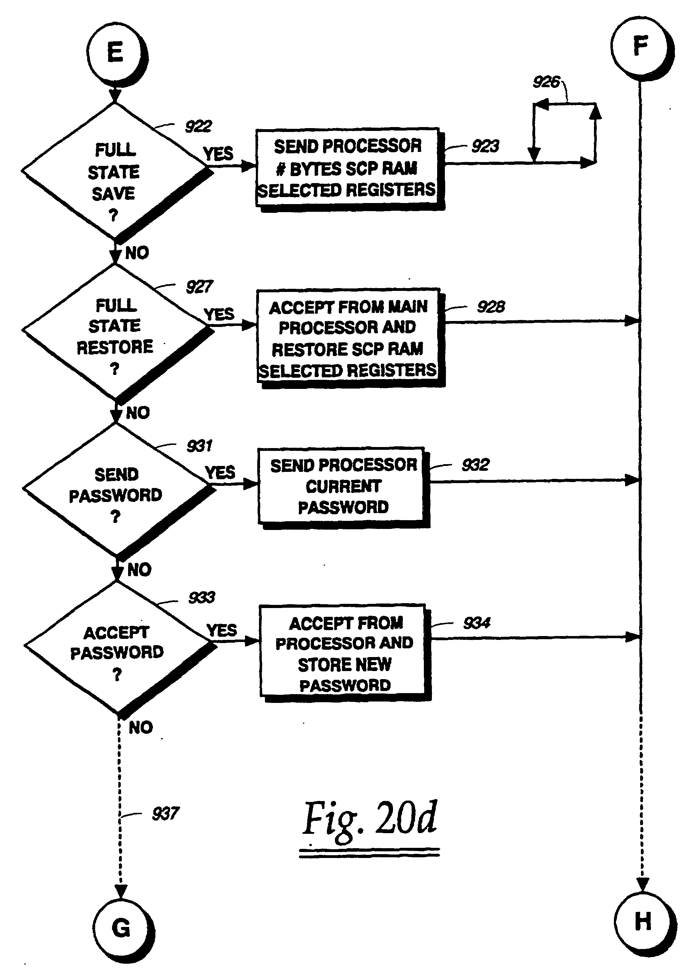

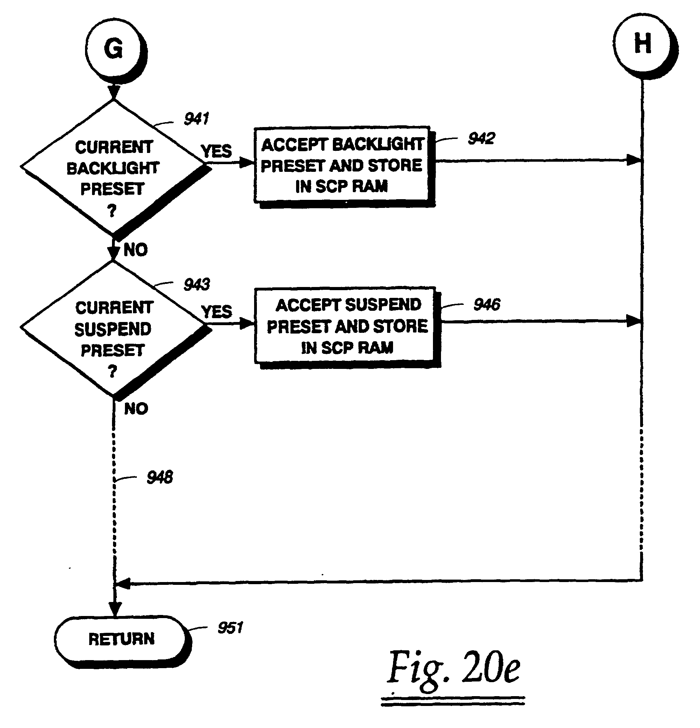

A further event which can interrupt the SCP from the main routine shown in Figure 17 occurs when the main processor sends a command to the SCP, the loading of this command into an interface register automatically generating an interrupt to the SCP. The interrupt routine which handles the command is shown in Figure 20. At 866 in Figure 20, the SCP examines the command which the main processor has sent it. At 867, if the command indicates that the SCP is to select the LCD as the active video display, control proceeds to block 868, where the SCP sets the CRT/LCD output to select the LCD 321, and then updates the LC flag (Figure 15) to reflect this setting. On the other hand, if it were determined at 867 that the command was not to select the LCD, but it was determined at 871 that the command was to select the external CRT 426 as the active display unit, then control would proceed to block 872, where the SCP would set the CRT/LCD line to select the CRT, and update the LC flag. Otherwise, control would proceed to block 873, where the SCP would check to see if the command was an indication that the main processor was entering standby mode, in which case the SCP would proceed to block 876, where it would set the SB flag to indicate that the main processor was in standby mode, and would take the preset value from location 772 (Figure 16) and place it in location 774 if it is a positive number, in order to start the suspend timer.

If it were determined at 877 that the command was to enable the LED signal from the hard disk, the SCP would actuate its ENABLE output to the gate 438 at block 878. otherwise, if it were determined at block 881 that the command was a request for the SCP to identify the reason for generation of a PMI through actuation of the EXTPMI signal, control would proceed to block 882, where it would check to see if the ENABLE signal to the gate 438 and the LED signal from the hard disk 323 were both actuated, in which case it would proceed to block 883 and set the HD bit in the PMI byte 776. In either case, at 886 it would send the PMI byte to the main processor. If the SCP proceeded directly from block 881 to block 887, and determined there that the command was to power up the LCD, then at block 888 it would actuate the LCDPWR line to the LCD 321. Otherwise, it would proceed to block 891, and if it determined there that the command was to power down the LCD, at block 892 it would deactuate the LCDPWR line to the LCD.

If the SCP proceeded directly from block 891 to block 893 and determined there that the command was to power up the backlight, it would proceed to block 896 and actuate the line BLON in order to turn on the backlight. Otherwise, it would proceed to block 897, and if it determined there that the command was to power down the backlight, it would proceed to block 898 where it would deactuate the BLON line in order to turn off the backlight.

In a similar manner, if the SCP proceeded from block 897 to block 901 or 903 and determined that the command was to power up or power down the video controller, it would proceed to one of blocks 902 and 906 and either actuate or deactuate the VIDEN signal in order to appropriately control the power to the video controller. Likewise, if the SCP proceeded to block 907 or 911 and determined that the command was to power up or power down the modem, it would proceed to one of the blocks 912 and 913 and actuate or deactuate the MDMEN signal in order to appropriately control the power to the modem.

If the processor proceeded through blocks 907 and 911 to block 916 and determined that the command was to do a partial state save, control would proceed to block 917, where the SCP would send the main processor the two mode bytes 778 and 779 (Figure 16), and then set the location 778 and 779 in the RAM 440 to a default configuration which would ensure that information could be sent from the keyboard through the SCP to the main processor, and thus for example the KE flag would be set to indicate that the keyboard is enabled. otherwise, the SCP would proceed to block 918, and if it determined there that the command was to do a partial restore of the SCP, it would accept two mode bytes from the main processor at 921 and place those mode bytes into locations 778 and 779 of the RAM 440.

If the SCP proceeded through blocks 916 and 918 to block 922, and determined there that the command was to effect a full state save of the SCP, it would proceed to block 923, where it would send the main processor a value representing the total number of bytes to be sent to the main processor, followed by the entire contents of the SCP RAM 440, and selected internal registers of the SCP. Then, the SCP would enter a continuous loop at 926 (for example by executing an instruction which performs an unconditional branch to itself), and wait for the main processor to turn off the power to the SCP as a part of the process of placing the system in the suspend mode.

If the SCP proceeded from block 922 to block 927, and determined that the command was to effect a full restoration of the state of the SCP, it would proceed to block 928, accept information from the main processor, and place this information in the SCP RAM and selected registers of the SCP.

If the SCP proceeded to block 931 and determined that the command was to send the main processor the current password, the SCP would proceed to block 932, and would take the password stored at 763 (Figure 15) in the EEPROM 439 and send it to the main processor. Otherwise, the SCP would proceed to block 933, and if it determined there that the command was to accept a new password from the main processor, it would proceed to block 934, where it would accept a new password from the main processor and store it in the location 763 of the EEPROM.

In a similar manner, each of the other items stored in the EEPROM 439 are capable of being sent to the main processor and updated by the main processor in response to respective commands. This is handled in a manner similar to that shown above for the password at blocks 931-934, and thus these separate commands are not all illustrated, but instead a broken line at 937 is provided to diagrammatically represent their existence. If the command is not any of these, then at 941 the SCP checks to see if the command is an instruction to accept a preset value for the backlight timer, in which case at 942 the SCP accepts the preset value and stores it at 771 in the SCP RAM 440. Similarly, if it is determined at 943 that the command is to accept a suspend timer preset, then at 946 the SCP accepts the suspend timer preset and stores it at 772 in the RAM 440.

There are other commands which are not pertinent to an understanding of the present embodiment and which are thus not illustrated and described in detail, but a broken line has been provided at 948 in order to diagrammatically represent their existence. Upon completing the execution of each command, control proceeds to block 951, which transfers control back to the calling routine.

Another alternate embodiment of the invention is best described in reference to Figure 14. In block 726, reinitialization of the hard disk drive requires several seconds to complete because the hard disk drive must be brought up to speed. In an alternate embodiment, reinitialization of the hard disk drive would be removed from block 726 except for asserting power to the hard disk drive, setting a flag indicating that hard disk accesses are not allowed, and starting a timer which will generate an interrupt two or three seconds later. At the timer interrupt, when the disk drive is up to speed, the disk initialization procedure is completed and the flag preventing hard disk drive access is cleared. Under this approach, all hard disk drive accesses must be trapped by the PMI handler, and the access flag must be checked before a hard disk drive access is allowed to proceed. This allows the processor to run the application program during the time required for the hard disk drive to get up to speed, rather than waiting for the hard disk drive to come up to speed before resuming execution of the application program. The net result is a much faster resumption from suspend mode for any application that does not require an immediate hard disk access upon resuming from suspend mode.

Turning now in more detail to the hard disk drive 323 of Figure 1, the hard disk drive includes a not-illustrated conventional microprocessor which controls the output lines LED and IRQ14, which is coupled to a not-illustrated ROM in drive 323 containing a program executed by the microprocessor and to a not-illustrated RAM in drive 323, which is interfaced to the busses 337-339 in order to communicate with the main processor 311, and which is interfaced to a conventional and not-illustrated physical drive located within disk drive 323. The physical drive includes conventional components such as one or more rotating magnetic platters, one or more movable read-write heads each engagable with a platter surface, a mechanism for moving each head relative to its platter, and the electrical support circuitry for each head. All of the signals which couple the hard disk drive to other parts of the system are part of an industry standard interface for hard disk drives, and thus the hard disk drive uses conventional cables and connectors. In fact, the hard disk drive 323 is a conventional hard disk drive, except that the program stored in its ROM and executed by the microprocessor includes some changes which are discussed in detail later.

The microprocessor of the hard disk maintains certain status information which can be passed to the main processor 311 on request, including a DRQ status bit which is set when the hard disk drive is carrying out a command and a BSY bit which can be repeatedly set and reset as a given command is carried out in order to provide handshaking information which facilitates transfer of data between the processor 311 and the hard disk drive 323. The DRQ bit is the bit tested at block 601 in Figure 8 and at 671 in Figure 12 in order to determine whether the hard disk drive is busy. The present invention involves changes to the program stored in the ROM of the hard disk drive, but aside from this the hard disk drive 323 is structurally conventional in all respects.

In order to facilitate an understanding of the operation of the hard disk drive, some additional detail is appropriate regarding a few of the flowchart blocks described above in association with Figures 12 and 14.

More specifically, in Figure 12, it has previously been explained that block 676 obtains and saves the internal state of the hard disk drive. In order to effect this, the processor 311 sends a SUSPEND command to the hard disk drive 323 in order to tell the hard disk drive that the system is going to enter the suspend state, subsequently sends a REQUEST command to the hard disk drive 323 in order to cause the hard disk drive 323 to send its internal state to the main processor 311 in the form of a 512 byte block of data, and then accepts the 512 byte block of data from the hard disk drive and saves it in the portion 482 of the PMRAM (Figure 3). Turning now to block 726 in Figure 14, it has previously been explained that the processor powers up the hard disk and restores its state. On a more specific level, after restoring power to the hard disk drive, the processor 311 sends the hard disk drive 323 a RESTORE command which tells the hard disk drive that the 512 byte block of data saved at block 676 in Figure 12 is about to be returned to the hard disk drive, and then sends the 512 byte block to the hard disk drive, the hard disk drive accepting the block and using the contents of the block to restore its registers and other volatile memory locations to the precise state which they had when entry to the suspend mode was initiated.

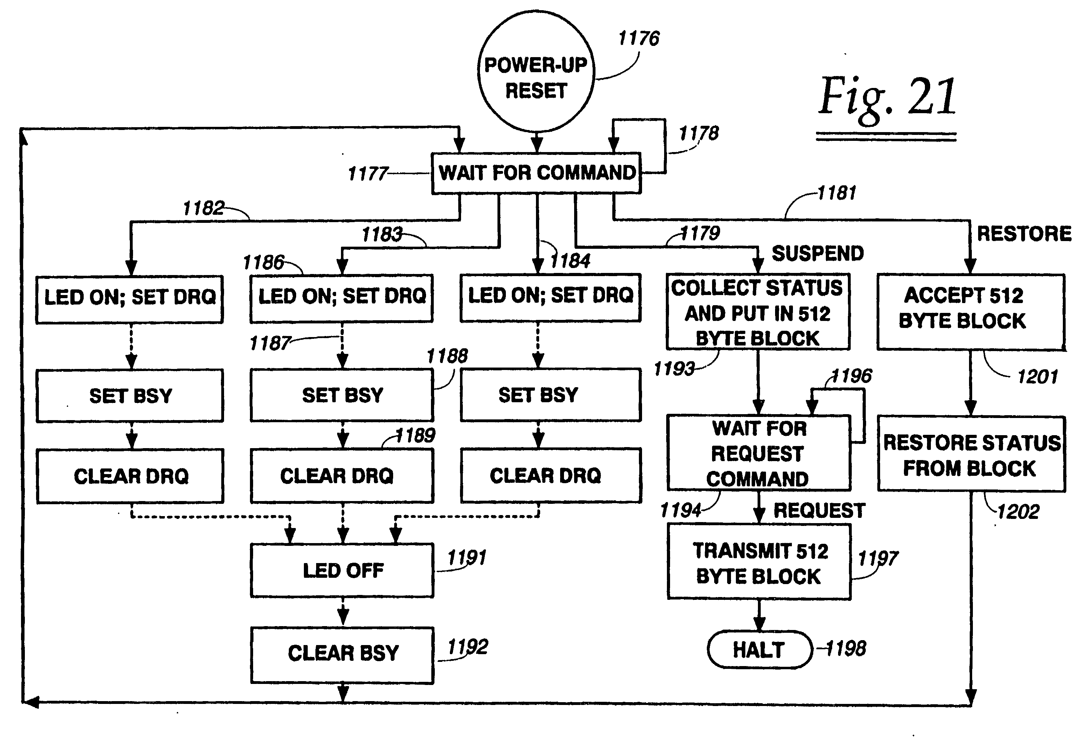

Figure 21 is a flowchart showing portions of the program which is stored in the ROM of the hard disk drive 323 and which is executed by the microprocessor of the hard disk drive. A power-up reset situation causes execution to start at 1176, and to proceed to 1177 where, as shown diagrammatically at 1178, the disk microprocessor waits for the processor 311 to send it a command. When a command is received, control proceeds to one of several different routines in dependence on the specific command. In particular, if the command is a SUSPEND command or a RESTORE command, control proceeds as shown respectively at 1179 and 1181, whereas other commands which are conventional cause control to proceed along respective paths designated at 1182, 1183 and 1184. For purposes of the present invention, it is sufficient to briefly describe one of these other commands, for example the command corresponding to a transfer at 1183 to block 1186. This might, for example, be a command instructing the hard disk drive 323 to accept a block of data from the processor 311 and to store this data on the hard disk of the physical drive section. At 1186, the microprocessor sets the LED line in order to turn its LED on, the LED providing visual indication that the hard disk drive is carrying out an operation. Then, the microprocessor sets the DRQ bit, so that if the processor 311 requests status information the DRQ bit will indicate that the hard disk drive is carrying out an operation. Then, as indicated diagrammatically by the broken line at 1187, the microprocessor carries out the specific steps necessary to carry out the command.

For example, in the case of a transfer of a block of data from the processor 311 to the hard disk in the physical drive section, the disk microprocessor can toggle the busy bit BSY to provide an indication of when it is ready to accept each byte, and the processor 311 can monitor the BSY bit and supply an additional byte each time the BSY bit is cleared. The microprocessor initially stores these received bytes in its RAM. After a predetermined number of bytes have been transferred, which may for example be equal to the number of bytes in a sector of the hard disk, the processor 311 may return to other processing while the disk microprocessor retrieves these bytes from the RAM and stores them on the hard disk in its physical drive section. Then, the disk microprocessor can send an IRQ14 signal in order to interrupt the processor 311, causing the processor 311 to send another portion of the data block which is to be stored. This is all represented diagrammatically in Figure 21 by the broken line 1187.

Toward the end of execution of the command, the disk microprocessor reaches a point at block 1188 where it sets the BSY bit for the last time, for example where it has accepted from the processor 311 the very last byte to be stored. It then proceeds to store this information on the hard disk in the physical drive section and to do any associated final housekeeping, and at some point during this process it clears the DRQ bit and, at block 1191, deactuates the LED line to turn the LED off. Thereafter, at 1192, the microprocessor clears the BSY bit. It is a requirement of the present invention that, at the completion of a command, the LED be turned off before the BSY bit is cleared, for the following reason.

As described above, when the system is attempting to enter the suspend mode, the processor 311 checks the DRQ bit (at 601 in Figure 8 and at 671 in Figure 12). If the drive microprocessor is in the middle of a command, for example at 1187 in Figure 21, the DRQ bit will be set, and thus the processor 311 will cause the LED line to be enabled and will then return control to the application program to wait for the hard disk drive 323 to complete what it is doing. It is important that the application program not be able to instruct the hard disk drive to start a new command. So long as the BSY bit is set, the application program which the processor 311 is executing will not try to send the hard disk drive 323 a new command. Further, as also described above, when the disk microprocessor turns off its LED using its LED line, the same signal will propagate through gates 438 and 433 to create another PMI interrupt which returns control of the processor 311 to the routine of Figure 4, at which point the application program no longer has control of the processor 311 and thus cannot tell the hard disk drive to begin a new command. Therefore, with reference to blocks 1191 and 1192 in Figure 21, keeping the BSY bit set at the end of the command until the LED is turned off ensures that the BSY bit will keep the application program from starting a new command until the deactuation of the LED occurs and creates an interrupt which shifts control of the processor 311 from the application program to the PMI handling routine, which can then proceed with the suspend operation.

At this point, the PMI handling routine would proceed to block 676 in Figure 12 where, as described above, the processor 311 sends the hard disk drive a SUSPEND command. In Figure 21, this causes the disk microprocessor to proceed at 1179 from block 1177 to block 1193, where it collects every facet of its current status and formulates in its RAM a 512 byte block of data which includes all of this status. The status may take up only a portion of the 512 available bytes, and the remaining bytes can in fact be "garbage". Then, at block 1194, the disk microprocessor waits for a request command from the processor 311, as shown diagrammatically at 1196. Eventually, the processor 311 sends the REQUEST command. In response to the REQUEST command, the disk microprocessor proceeds from block 1194 in Figure 21 to block 1197, where it transmits to the processor 311 the 512 byte block of data it formulated in its RAM. Then, at block 1198, the disk microprocessor halts, and waits for the processor 311 to shut off power to the hard disk drive 323 in the manner already described above.

When the processor 311 eventually exits from the suspend mode, it will turn the power to the hard disk drive 323 back on, as discussed above. In Figure 21, this produces a power-up reset event which forces the disk microprocessor to block 1176 in Figure 21, following which the microprocessor, typically after doing some initialization, proceeds to block 1177, where it waits at 1178 for a command from the processor 311. Meanwhile, the processor 311 sends the RESTORE command to the hard disk drive 323. This causes the disk microprocessor to proceed at 1181 from the block 1177 to the block 1201, where it accepts the 512 byte block which the processor 311 is transmitting. This is, of course, precisely the 512 byte block which the disk microprocessor sent to the processor 311 at block 1197, and thus at block 1202 the disk microprocessor can use the data in this block to completely restore every facet of the status which was present in hard disk drive before its power was turned off.

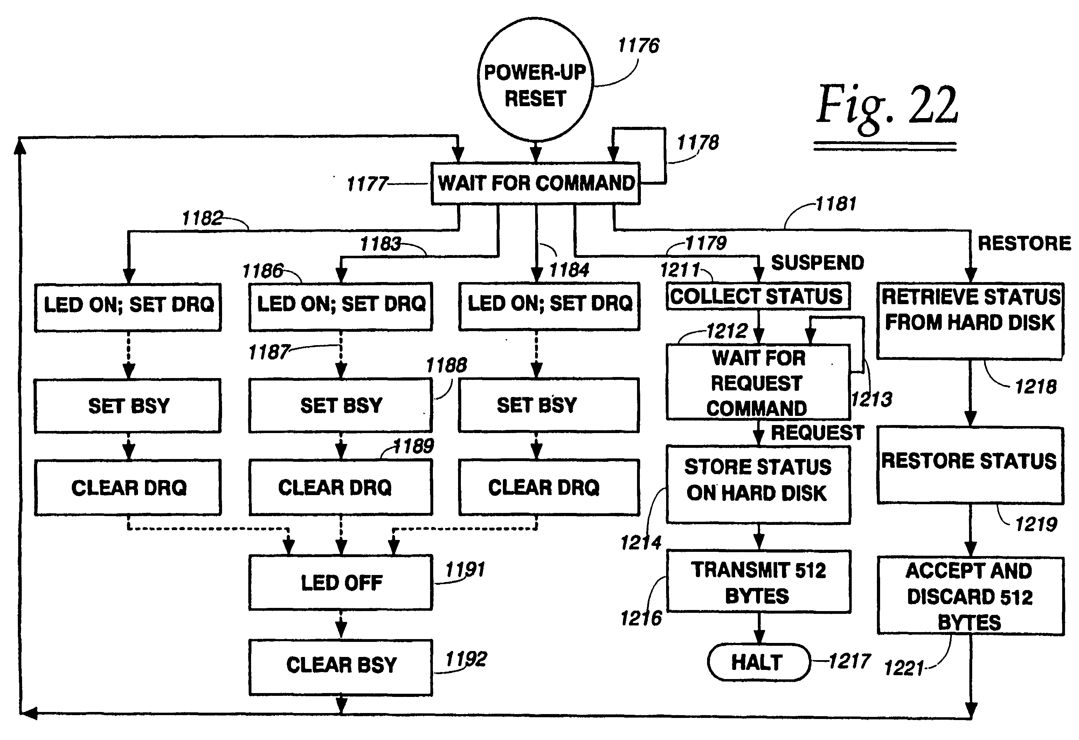

Figure 22 is a flowchart showing an alternative embodiment of the program of Figure 21. Equivalent elements in Figures 21 and 22 are designated with identical reference numerals. Only the differences are described in detail below.

More specifically, in response to the SUSPEND command, the disk microprocessor proceeds at 1179 from block 1177 to block 1211 of Figure 22. In block 1211, the microprocessor collects every facet of its status. Then, in block 1212, the disk microprocessor waits for the REQUEST command from the processor 311, as shown diagrammatically at 1213. When the REQUEST command is received, the disk microprocessor proceeds to block 1214, where it stores the collected status on a reserved portion of the hard disk in its own physical drive section. Then, at block 1216, it transmits 512 bytes to the processor 311. These 512 bytes may be undefined "garbage" data, and are transmitted only for purposes of compatibility (because the processor 311 expects to receive and store 512 bytes). Then, the microprocessor halts at 1217 and waits for its power to be turned off. After power is turned back on, the disk microprocessor receives the RESTORE command from the processor 311, and proceeds at 1181 from block 1177 to block 1218, where it retrieves the status information which it stored on the hard disk in block 1214, and then restores from this stored data at block 1219 every facet of the status which the hard disk drive 323 had before its power was turned off. Then, at block 1221, it accepts the 512 bytes which the processor 311 sends, but it simply discards this data because it has no need for it.

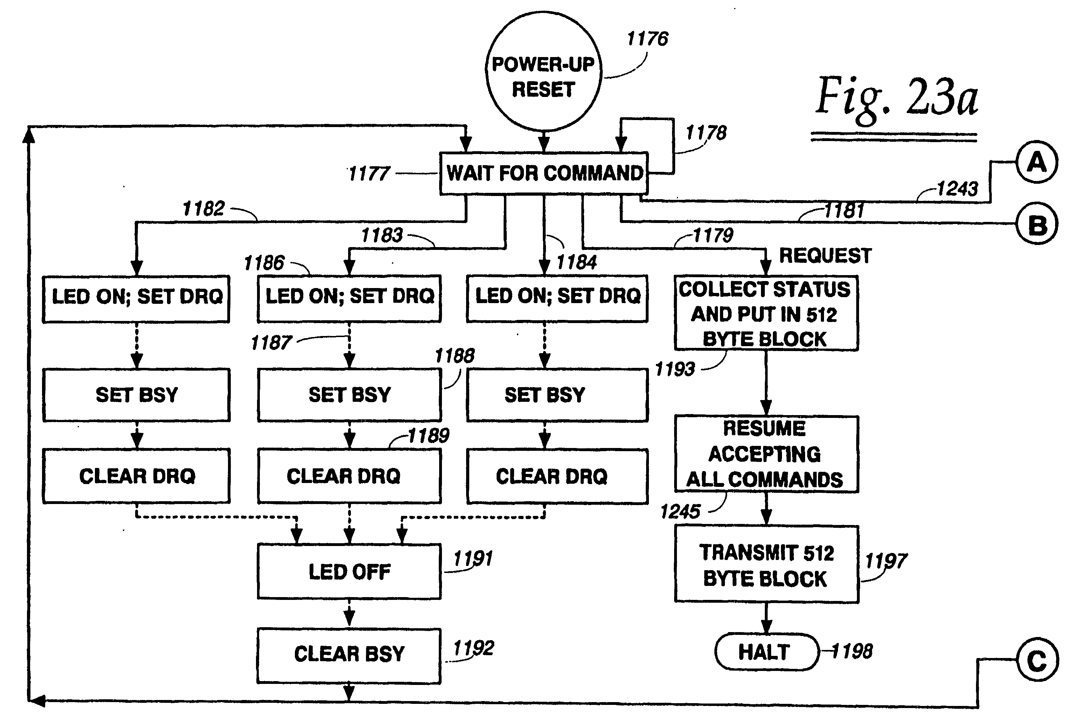

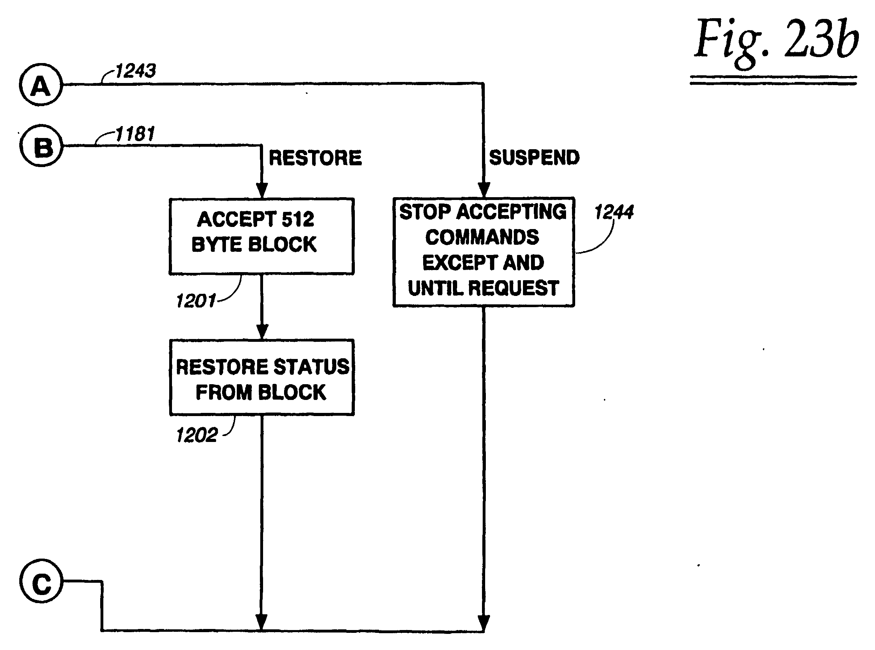

Figure 23 is a flowchart similar to Figure 21 but showing another alternative embodiment of the invention. Elements in Figure 23 which are equivalent to elements in Figure 21 are designated with the same reference numerals. Only the differences are described in detail below.

More specifically, in the embodiment of Figure 21, it is a requirement that the hard disk control its LED line in a specific manner, in particular by promptly deactuating it as soon as the current command has been completed. There are some disk drives which may have difficulty with this approach, but on the other hand it is possible to send these drives a command while they are in the process of executing another command. Thus, in Figure 12, regardless of whether it is determined in block 671 that the hard drive is busy, a SUSPEND command is immediately sent to the disk drive at 672 or 676.

In Figure 23, receipt of the SUSPEND command causes control to proceed at 1243 to block 1244, where the disk drive enters a mode where it ignores further commands other than the REQUEST command. While waiting for the REQUEST command, the drive completes the activity which is already in progress. Then it deactuates its LED line in order to indicate that at some point the activity has been completed, after which the processor sends the REQUEST command. In response to the REQUEST command, the disk drive formulates the 512 byte block at 1193, then resumes accepting all commands at block 1245, and then at block 1197 transmits the 512 byte block to the processor.

In the embodiment disclosed in Figures 1-20, power is supplied to the main memory 326 during suspend in order to maintain the information stored there. In a variation, a portion of the hard disk 323 is reserved, the entire contents of the main memory are written to the reserved portion of the hard disk after the status of all devices had been saved to the main memory, then both the hard disk and main memory are powered down, and then the processor enters the suspend state. Upon resuming, steps with the opposite effect are carried out in reverse order to restore the system. This is slower than the approach taken in the preferred embodiment, but uses less power and thus allows the system to remain in suspend longer on a single battery charge. By using conventional compression techniques on the data from the main memory being stored on the disk, the amount of space required on the disk could be reduced, but the time required to enter and exit from suspend mode would increase as a result of the extra time required for compression and uncompression of the data.

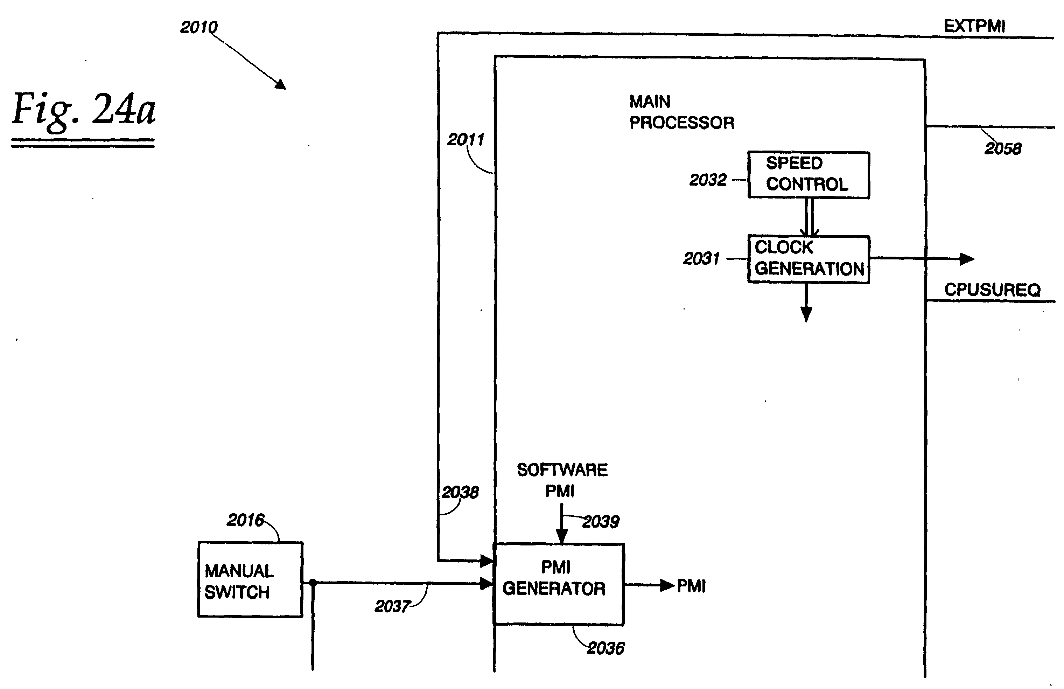

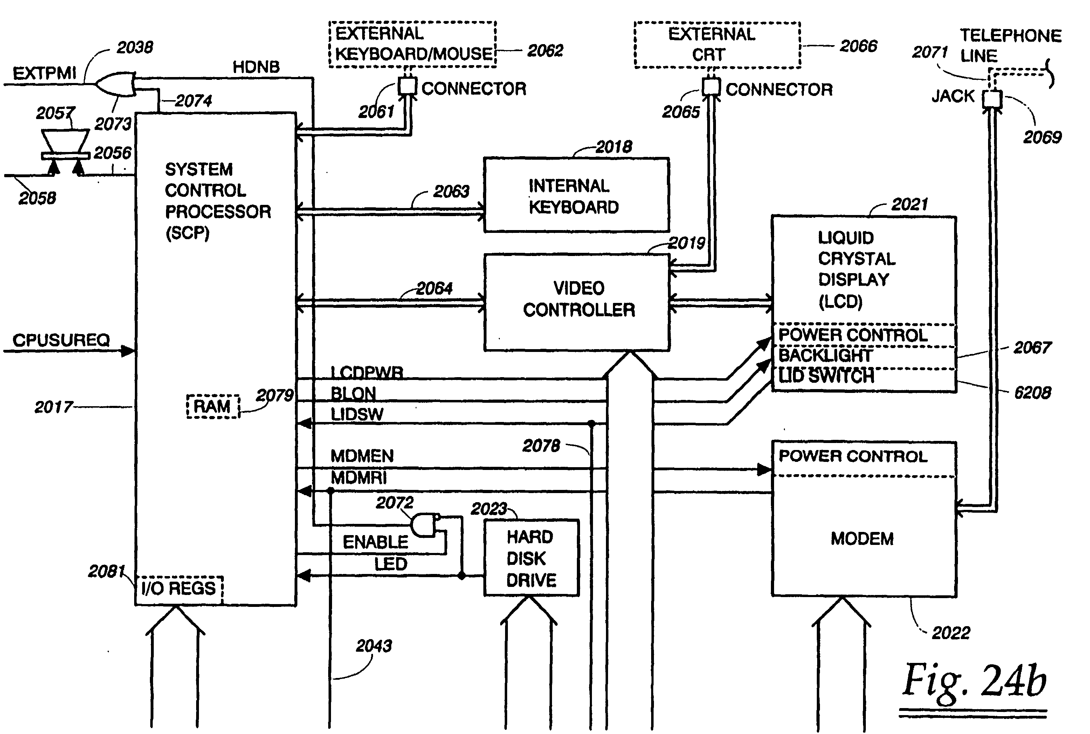

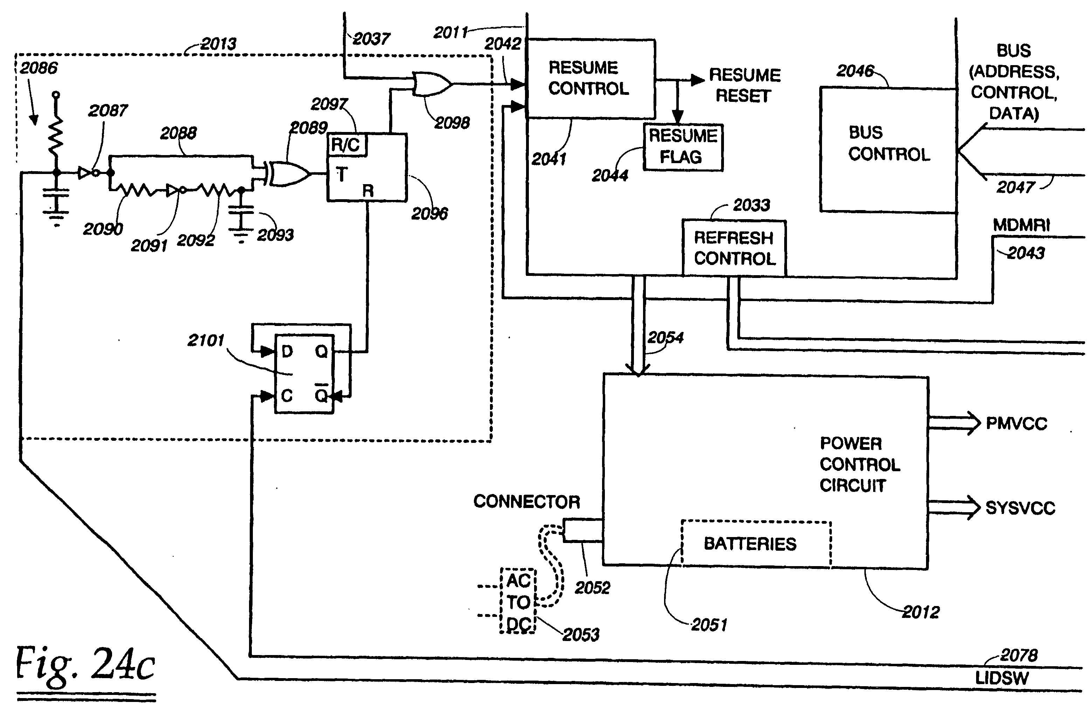

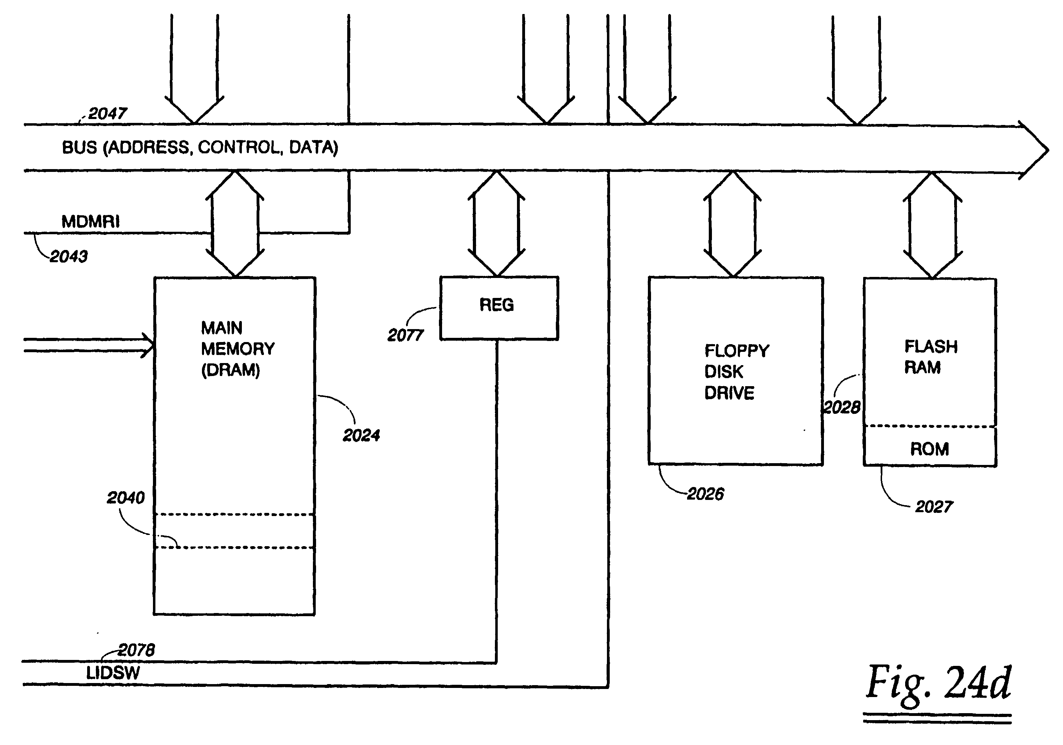

Figure 24 is a block diagram of a system 2010 which is a variation of the system 310 of Figure 1. The computer system 2010 includes a main processor 2011, a power control circuit 2012, a signal processing circuit 2013, a manually operable power control switch 2016, a system control processor (SCP) 2017, an internal keyboard 2018, a video controller 2019, a monochrome liquid crystal display (LCD) 2021, a modem 2022, a hard disk drive 2023, a main memory 2024 implemented with dynamic random access memory (DRAM) chips, a floppy disk drive 2026, a read only memory (ROM) 2027, and a flash RAM 2028. The main processor 2011 is implemented with the Intel 386SL. Components in Figure 24 which correspond functionally to components in Figure 1 are not described again in detail here.

The processor 2011 includes a power management interrupt (PMI) generator 2036, which generates the PMI interrupt in response to several conditions, three of which are shown in Figure 24. The first is the occurrence of a signal on a line 2037 in response to manual actuation of the manual switch 2016, the second is a signal EXT PMI on a line 2038 from an external source, and the third is an interrupt which is internally generated by software running in the processor 2011 and which is indicated diagrammatically at 2039.

The processor 2011 has several conventional modes of operation, one of which is an "unprotected" mode in which the program running in the processor 2011 has access to all operational capabilities of the processor 2011, whereas the other modes are "protected" modes in which the program running in the processor 2011 has different degrees of accessibility to the operational capabilities. The occurrence of a PMI interrupt automatically forces the processor into the unprotected mode of operation, while the restore instruction will restore the processor to the mode of operation which it was in at the time the PMI interrupt occurred. Consequently, an application program which is running in one of the protected modes can be interrupted, the processor can carry out various functions in the unprotected mode without any of the limitations which would be present in one of the protected modes, and then the application program can be resumed from the point at which it was interrupted with its own protected mode back in effect.

A resume control circuit 2041 is responsive to several conditions, two of which are shown in Figure 24. The first is an output signal on line 2042 from the signal processing circuit 2013, which is described in more detail later. The other is a modem ring indicator signal MDMRI on a line 2043 from the modem 2022. When the system is in the suspend mode and a signal occurs on one of the lines 2042 and 2043, the resume control circuit 2041 produces a resume reset which internally resets the main processor 2011 and which also sets a resume flag 2044. The resume flag 2044 remains set in order to provide an indication to the software that the reset was the result of a resume event and not a standard system reset of the type which occurs when power is first applied to the system. The reset causes the processor to begin executing a special software routine in the flash RAM 2028, as described in more detail later.

Turning to the System Control Processor 2017, the SCP in the preferred embodiment is based on an Intel 87C51GB microprocessor, but other commercially available microprocessors could also be used for the SCP.

A register 2077 is coupled to the bus 2047 and produces an output on a line 2078 which is coupled to an input of the signal processing circuit 2013 and which is discussed in more detail later.

The signal processing circuit 2013 includes an R/C divider 2086 tied to the LIDSW output from the lid switch 2068, and an inverter 2087 which has an input connected to the signal LIDSW. The output 2088 of the inverter is connected to one input of a two-input exclusive-OR gate 2089, and through a resistor 2090 to an input of a further inverter 2091. The output of inverter 2091 is coupled through a resistor 2092 to the other input of the gate 2089, which is coupled to ground by a capacitor 2093. The output of the gate 2089 is connected to the trigger input of a monostable multivibrator or "one-shot" 2096, the time period of which is controlled by an R/C network 2097. When the lid switch 2068 closes or opens, the change in the state of its output signal LIDSW is applied through inverter 2087 on line 2088 to one input of the gate 2089, causing the output of gate 2089 to change, and a short period of time later is applied through resistor 2090, inverter 2091 and resistor 2092 to the other input of the gate 2089, causing the output of the gate 2089 to return to its original state. Thus, every time the lid switch 2068 opens or closes, the exclusive OR gate 2089 will produce a pulse equal in length to the propagation delay through the circuit branch containing resistor 2090, inverter 2091, resistor 2092 and capacitor 2093. This pulse will trigger the one-shot 2096, so that it produces an output which is applied to one input of an OR gate 2098, the other input of which is coupled to the output 2037 from the manual switch 2016. The output of the OR gate 2098 is the line 2042, which is connected to the resume control portion 2041 of the main processor 2011.

The signal processing circuit 2013 also includes a D-type flip-flop 2101 having a clock input to which is coupled the line 2078 from the register 2077. The inverted output of the flip-flop is connected to the D input, so that the flip-flop changes state or "toggles" each time the signal on line 2078 changes from a logic low to a logic high. The output of the flip-flop 2101 is connected to a reset input of the one-shot 2096. Consequently, by appropriately controlling the register 2077, the main processor 2011 can set or reset the flip-flop 2101, so that it enables or disables the one-shot 2096 and thus permits or prevents the one-shot 2096 from producing an output in response to a pulse from the gate 2089.

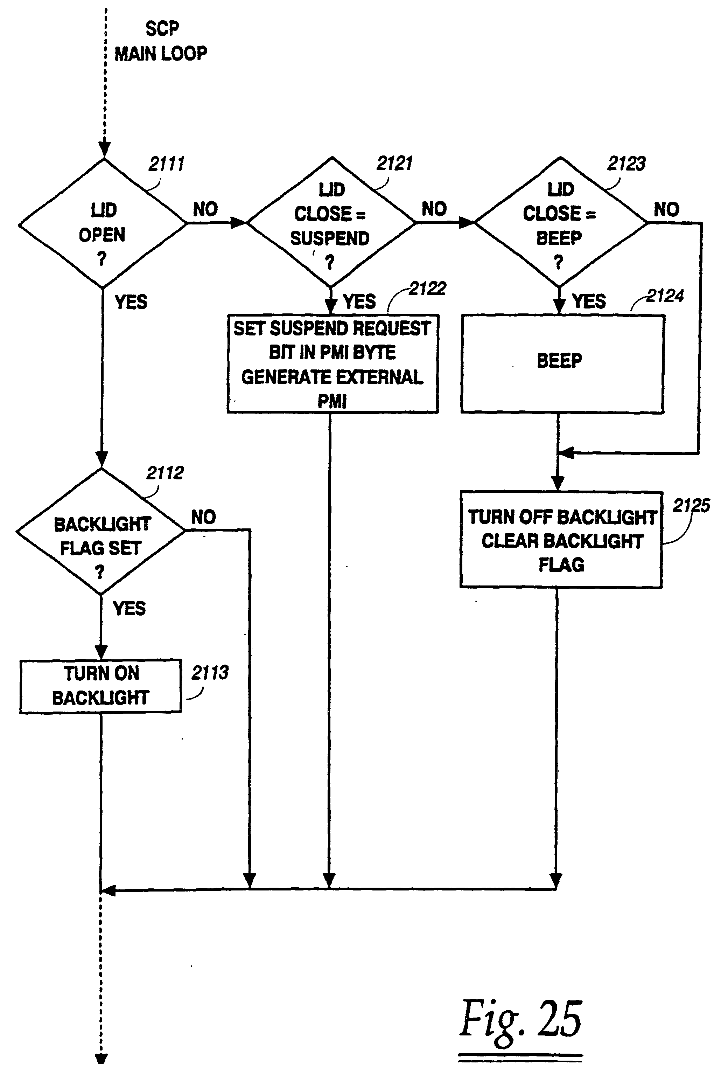

Figure 25 is a flowchart of a portion of a main loop from the operational program executed by the SCP 2017. Only the portion of the loop which is pertinent to an understanding of the present invention is shown and described in detail. In particular, this portion begins at block 2111, where the SCP checks the LIDSW signal (Figure 24) in order to determine the state of the lid switch 2068 and thus whether the lid is open. If the lid is open, then at block 2112 the SCP checks an internal flag to determine whether the backlight is presently supposed to be on, and if so then the SCP turns on the backlight at block 2113 and then continues with the main loop. On the other hand, if it is determined at block 2112 that the backlight is not supposed to be on, then block 2113 is skipped and the main loop continues.

If it was determined at block 2111 that the lid is closed, then control proceeds to block 2121, where a check is made to determine what is to happen when the lid is closed. In particular, the user is allowed to configure the system set-up information to specify that a lid close is to (1) place the system in the suspend mode, (2) turn off the backlight without stopping the system from operating, or (3) produce an audible beep and turn off the backlight without stopping system operation. If it is determined at block 2121 that the user wants the system to enter the suspend mode if the lid is closed, the control proceeds to block 2122, where the SCP sets a suspend request bit in a PMI byte. The PMI byte is a byte (8 bits) which is sent on request to the main processor in order to inform the main processor of the reason why the SCP generated a PMI interrupt. Then, also in block 2122, the SCP produces a signal on output line 2074 (Figure 24) in order to produce an external PMI to the main processor, which is handled in a manner described later.
Alternatively, instead of producing the external PMI interrupt in block 2122, the SCP could set a flag in block 2122 which causes an entirely different portion of the SCP program to actually generate the PMI interrupt upon noting that the flag has been set.

If it is determined in block 2121 that a lid close is not to cause the system to be placed in suspend mode, then control proceeds to block 2123, where a check is made to see if an audible beep is to be produced when the lid is closed. If so, then the beep is produced at block 2124. In either case, control proceeds to block 2125, where the SCP turns off the backlight and clears the backlight flag. From blocks 2122 and 2125, execution of the main loop continues.

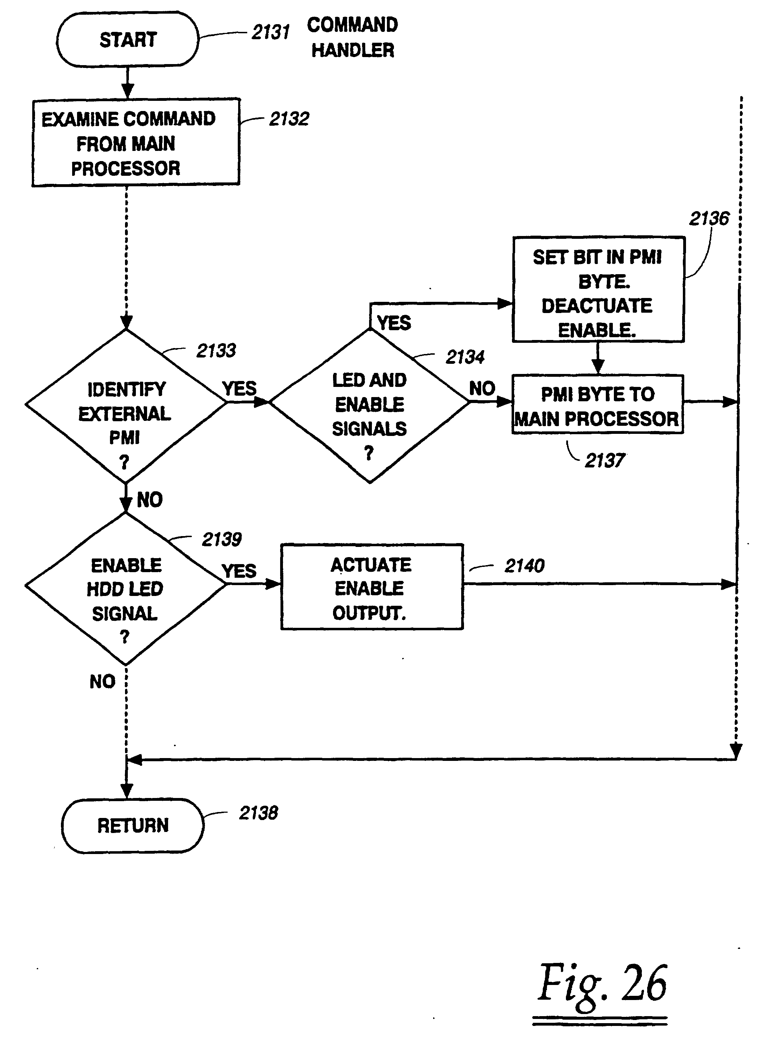

An event which can interrupt the SCP from the main routine shown in Figure 25 occurs when the main processor sends a command to the SCP. The loading of this command into an SCP interface register 2081 by the main processor automatically generates an interrupt to the SCP. The interrupt routine which handles the commands is shown in the flowchart of Figure 26. The command handler of Figure 26 is capable of handling a number of commands, only two of which are pertinent to the present invention and are depicted in Figure 26. In particular, execution begins at block 2131, and at 2132 the SCP examines the command from the main processor. The SCP then attempts to identify the particular command so that it can be handled. In particular, control can eventually proceed to block 2133, where the SCP checks to see if the command is instructing it to identify why the SCP generated an external PMI interrupt to the main processor. If this is the command sent by the main processor, then control proceeds to block 2134, where the SCP checks to see whether its ENABLE output is active and the LED signal from the hard drive 2023 is simultaneous inactive, and if so proceeds to block 2136, where it sets a bit in the PMI byte to identify this condition and then deactuates its ENABLE output. Then, or if it was determined at block 2134 that the signals do not have the specified states, control proceeds to block 2137, where the SCP passes the PMI byte to the main processor 2011 through the registers 2081. Control then proceeds to block 2138, where the SCP exits the interrupt handler of Figure 26 and returns to the point in its main program at which it was interrupted.

If it was determined at block 2133 that the command is not a request to identify the source of an external PMI, then control proceeds to block 2139 where the SCP checks to see if the command is instructing it to enable the hard disk drive LED signal, or in other words to actuate its ENABLE output. If so, the SCP proceeds to block 2140, where it actuates its ENABLE output, and then continues to block 2138, where a return is made to the calling routine.

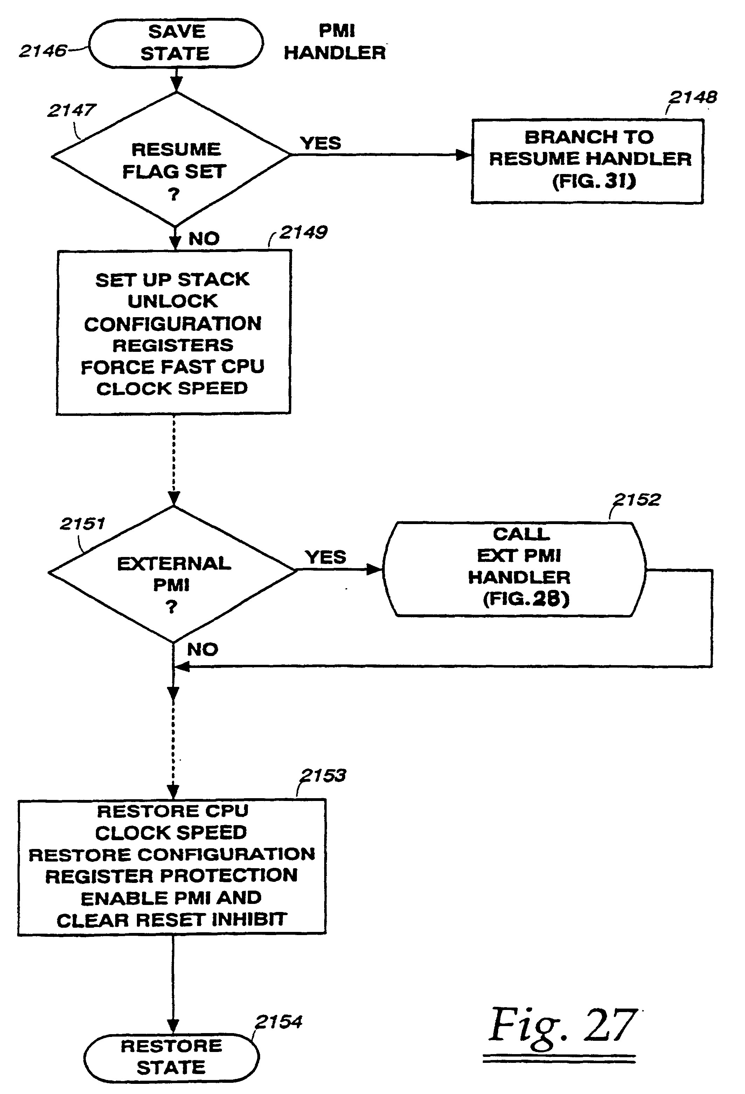

Figure 27 is a flowchart of pertinent portions of the special interrupt handling routine executed by the main processor 2011 when a PMI interrupt occurs. In particular, a PMI from any source causes the hardware of the processor 311 to automatically save its state in the portion 2040 of the main memory 2024, as shown at 2146 in Figure 27. Then, the processor automatically begins execution of the PMI handler routine (which is located at a predetermined point in the portion 2040 of the memory 2024). Regardless of the source of the PMI, the first thing the PMI handler does is to check the resume flag 2044 (Figure 24) in the processor 2011 in order to see whether the processor 2011 is in the process of resuming from a suspend state. If a resume is in progress, then at block 2148 control is transferred to a resume handler, which will be discussed later.

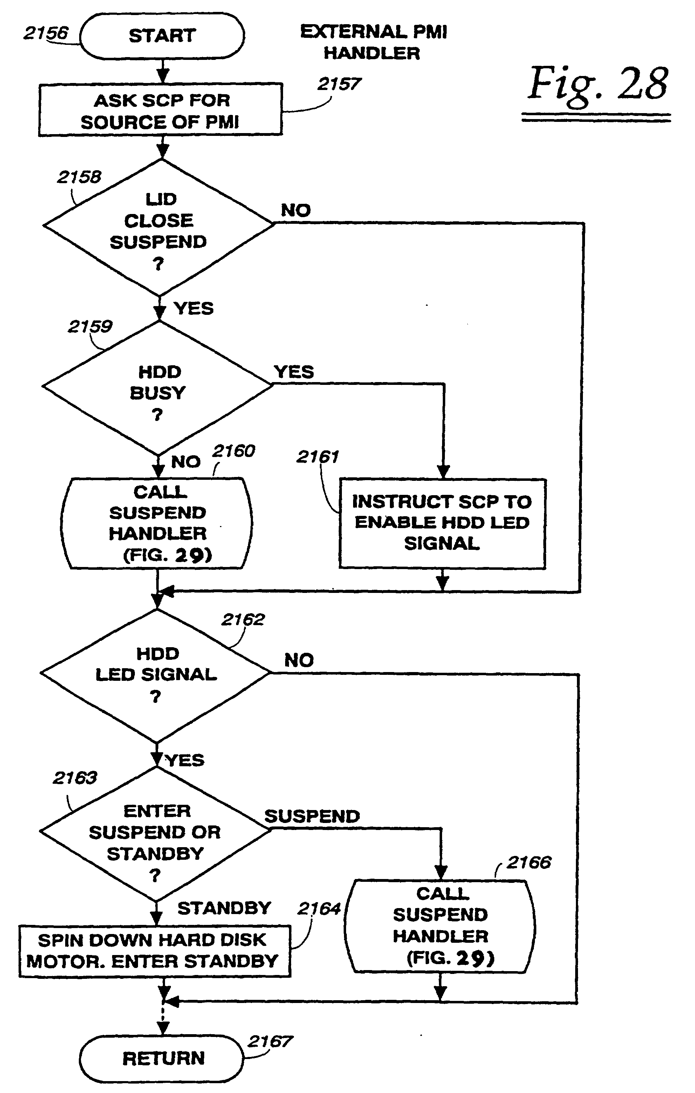

In the case of any other PMI, control proceeds to block 2149, where the processor sets up a special stack for use by the PMI handler, and unlocks configuration registers so that they can be altered, such as the control register 2032 which can be used to change the speed of the clock. Then, the processor changes the register 2032 in order to force the CPU to run at its fastest clock speed, so that the PMI routine will execute as fast as possible. The processor then proceeds to deal with various possible sources of the PMI, one of which is of interest and is shown at blocks 2151 and 2152. In particular, block 2151 checks to see if the PMI was generated as a result of a signal on the line 2038 from the SCP, and if so proceeds to block 2152, where an external PMI handler routine is shown in Figure 28 and is called. The external PMI handler routine will be described later.

After all possible sources of the PMI have been handled, control reaches block 2153, where the main processor restores to register 2032 the clock speed which was in effect when the PMI occurred, based on the information saved at block 2146. Then, the main processor locks the configuration registers, enables PMI interrupts, and clears an internal condition which prevents a reset from occurring during execution of the PMI handler routine. Then, at 2154, the processor executes a restore instruction which causes the hardware to restore to the CPU all of the state information which at block 2146 was saved in memory portion 2040, after which the CPU continues with execution of the program which was interrupted.

Figure 28 is a flowchart of the external PMI handler routine called by block 2152 in Figure 27. In Figure 28, execution begins at block 2156, and at block 2157 the main processor sends a command to the SCP asking it to identify the reason for the external PMI interrupt. The SCP returns the PMI byte (see blocks 2133-2134 and 2136-2137 in Figure 26). At block 158, the main processor checks the PMI byte to see if the SCP has initiated a request for suspend mode in response to closing of the lid. If so, then at block 2159 the main processor checks to see if the hard disk drive is busy. If it is not, then at block 2160 the main processor calls the suspend handler routine, which is described later. If the hard disk drive is busy, however, then implementation of the suspend mode must wait until the hard disk drive finishes whatever it is doing. The main processor therefore proceeds from block 2159 to block 2161, where it sends a command to the SCP which instructs the SCP to actuate its ENABLE output (see blocks 2139-2140 in Figure 26). From blocks 2160 and 2161, execution proceeds to block 2162. Execution can also proceed directly to block 2162 from block 2158 if it is determined at block 158 that the external PMI interrupt was not caused by closing of the lid.

At block 2162, the main processor checks the PMI byte from the SCP to see if the LED signal from the hard disk drive 2023 produced the PMI interrupt through the gates 2072 and 2073. If so, then at block 2163 the main processor checks to see whether it has been waiting for the hard disk drive to finish an operation so that it can enter suspend mode or so that it can enter another mode which is called standby and which is not pertinent to the subject matter of the present invention. If the system is to enter standby mode, then at block 2164 the processor turns off the hard disk drive motor, and enters the standby mode. Otherwise, at block 2166, the processor calls the suspend handler in order to enter the suspend mode. In either case, when the standby or suspend mode is eventually terminated, control proceeds to block 2167, where a return is made to the routine of Figure 27.

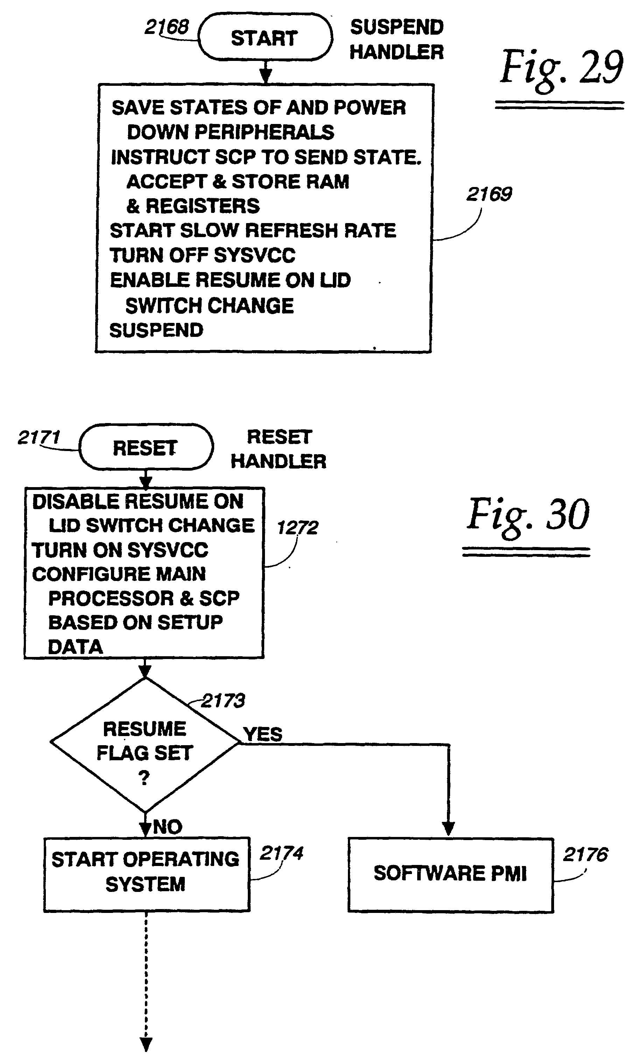

Figure 29 is a flowchart of the suspend handler routine. Execution begins at block 2168, and at block 2169 the main processor saves the states of various peripherals such as the hard disk drive 2023 and video controller 2019. The main processor also turns off power to certain peripherals. Then, the main processor sends a command to the SCP which instructs it to send its state to the main processor, and the main processor accepts and stores the contents of the RAM 2079 and all registers of the SCP. Then, the main processor sets the refresh control circuit 2033 to carry out a refresh of the main memory 2024 at a very slow rate, and instructs the power control circuit 2012 to turn off SYSVCC power, which is the power for most system components. Then, the main processor uses register 2077 to toggle the flip-flop 2101, which in turn enables the one-shot 2096 so that a signal from lid switch 2068 due to opening or closing of the lid will initiate a resume. The main processor then executes a special instruction which stops its own clock and which places it in the suspend mode, where power consumption is very low.

As previously mentioned, and with reference to Figure 24, the main processor 2011 exits the suspend mode when the resume control circuit 2041 receives a signal on line 2042 or 2043 and produces a resume reset, the resume reset setting the resume flag 2044. Any system reset, including the resume reset, causes the main processor 2011 to execute a special reset handler routine which is stored at a predetermined location in the flash RAM 2028 and which is shown in Figure 30. Execution of this routine begins at block 2171, and at block 2172 the main processor uses the register 2077 to toggle the flip flop 2101 and thus disable the one-shot 2096 so that, if the lid is opened or closed during normal operation, a further reset does not occur. The main processor then causes the power control circuit 2012 to turn on SYSVCC power, and then configures itself and the SCP for normal operation based on set-up data specified by the user in a conventional manner. Then, at block 2173, the processor checks the resume flag 2044 in order to see whether it is set. If it is not set, then the reset was a regular reset rather than a resume reset, and at block 2174 the processor starts the resident operating system. On the other hand, if the resume flag 2044 is set to indicate that a resume reset occurred, then at block 2176 the processor uses software to produce a PMI interrupt in order to force entry to the PMI handler routine of Figure 27. In Figure 27, the resume flag is again checked at 2147 and will be found to be set, so that control proceeds to block 2148 where a branch is made to the resume handler routine.

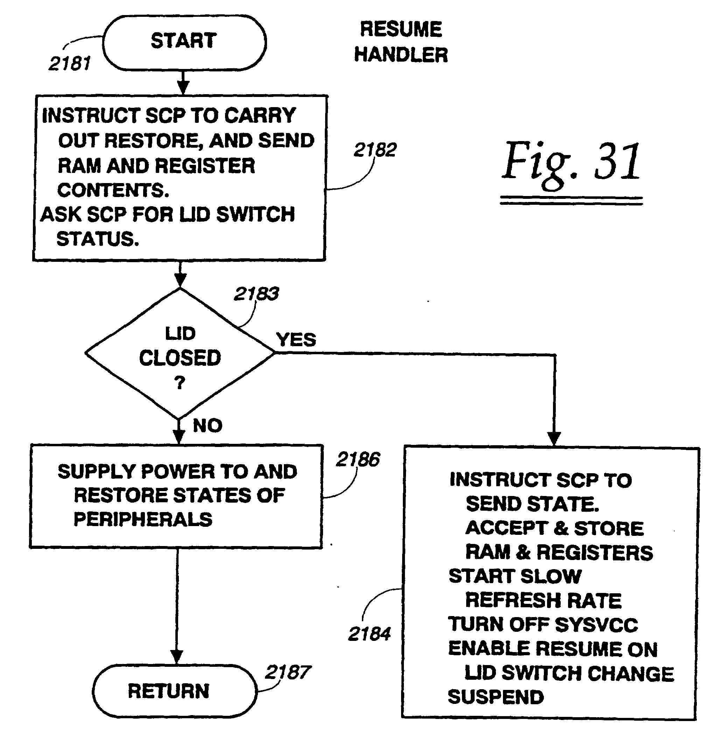

The resume handler routine is shown in Figure 31. Execution of the resume handler routine begins at block 2181, and at block 2182 the main processor sends a command to the SCP indicating that the state of the SCP is to be restored, and then sends to the SCP the contents of the SCP RAM and registers which were previously stored at block 2169 of Figure 29. Then, the main processor instructs the SCP to check the state of the lid switch 2068 and advise the main processor 2011 of the state of the switch. Based on the information from the SCP, the main processor determines at block 2183 whether the lid is closed. If it is found that the lid is closed, then the system is to be returned to suspend mode, and so at block 2184 the system carries out steps similar to those shown at block 2169 in Figure 29 in order to return the system to suspend mode.

On the other hand, if the lid is open, then the main processor 2011 proceeds from block 2183 to block 2186 and continues with the process of resuming from suspend mode, in particular by supplying power to and restoring the state of the various peripheral devices of the system. Then, at block 2187, the processor executes a return, which effectively returns control to the point at which the suspend handler was called when the system was originally suspended, for example one of the blocks 2160 or 2166 in Figure 28. Control then proceeds from that point, and will ultimately return to blocks 2153 and 2154 of Figure 27, where the state of the processor will be restored so that the interrupted application program resumes operation from the point at which it was interrupted and as if it had not been interrupted.

The operation of the system 2010 in a typical situation will now be briefly described. Assume that the system is up and running and is executing an application program, and that the user has specified that closing of the lid is to place the system in suspend mode. If, while using the system, the user closes the lid, the main loop of the SCP program (Figure 25) will determine at block 111 that the lid is now closed, will determine at block 121 that system operation is to be suspended, and at block 122 will initiate an external PMI interrupt to serve as a request to the main processor that the suspend mode be entered. This interrupt will cause the application program to be interrupted and the PMI handler routine of Figure 27 to be entered, and control will proceed through block 2151 of Figure 27 to block 2152, where the external PMI handler routine of Figure 28 is called.

In Figure 28, it will be determined at block 158 that the PMI was generated because the lid closed. Control will therefore proceed to block 2159, where for purposes of this discussion it is assumed that the processor finds that the hard disk drive is busy and proceeds to block 2161, where it sends to the SCP a command instructing the SCP to actuate its ENABLE output. The SCP services this command at blocks 2139 and 2140 of Figure 26, and actuating the ENABLE output has the effect of enabling one input of AND gate 2072. Meanwhile, the main processor exits the interrupt handler via blocks 2162, 2167, 2153 and 2154, and continues with execution of the interrupted application program.

When the hard disk drive 2023 finishes what it is doing, it deactuates its LED output, which causes the AND gate 2072 to produce an output signal indicating that the hard drive is not busy (HDNB), which passes through the OR gate 2073 and causes the PMI generator 36 to generate a further PMI interrupt, which causes another entry to the routine of Figure 27 and a call at block 2152 to the routine of Figure 28. In Figure 28, it will be determined at block 2158 that the lid did not just close, and so blocks 2159-2161 will be skipped. At block 2162, the main processor will recognize from the PMI byte that the SCP generated the PMI because the hard disk drive is no longer busy, and thus the suspend mode (which was not entered at blocks 2159-2160) can now be entered. Therefore, the main processor will proceed through block 2163 to block 2166, where the suspend handler of Figure 29 is called.

The suspend handler of Figure 29 has already been described, and concludes by placing the main processor 2011 in a low power mode in which its clock is turned off and program execution is halted. The processor remains in this mode until an event occurs which is intended to cause it to resume operation. In particular, if the lid is opened, the lid switch 2068 will, through the signal processing circuit 2013, cause the resume control circuit 2041 to produce a resume reset, which in turn causes the processor 2011 to begin executing the reset handler routine of Figure 30.
The processor will proceed through blocks 2172 and 2173 to block 2176, where it generates a software PMI to effect reentry to the PMI handler routine of Figure 27. It will be determined at block 2147 that the resume flag 2044 (Figure 24) is set, and so at block 2148 the processor will branch to the resume handler of Figure 31. In the resume handler of Figure 31, execution will proceed through blocks 2182, 2183 and 2186, and the return at 2187 will return control to block 2166 in Figure 28, where execution will proceed to block 2167 for a return to block 2152 in Figure 27, after which an exit from the PMI handler routine is made through blocks 2153 and 2154. Execution of the interrupted application program thus continues from the point at which it was interrupted.

In the foregoing example, the system exited suspend mode in response to a resume reset produced by opening the lid. Events other than opening the lid can also produce a resume reset. For example, if the system is in the suspend mode and the modem 2022 receives an incoming telephone call, the modem ring indicator signal MDMRI on line 2043 will cause the resume control circuit 2041 to produce a resume reset. This resume reset will be handled in precisely the same manner as described in the foregoing example, except that when block 2183 in Figure 31 is reached, the system will find that the lid is still closed. Therefore, control will proceed to block 2184, where the main processor 2011 will return to the suspend mode in order to wait for another resume reset caused by subsequent opening of the lid.

Also, there are events other than closing of the lid which can place the system into the suspend mode. For example, manual actuation of the switch 2016 can place the system in suspend mode, while the lid remains in an open position. If the lid is then closed while the system is in suspend mode, the signal from the lid switch 2068 will cause the signal processing circuit 2013 to produce a pulse on line 2042, which in turn will cause the resume control circuit 41 to produce a resume reset. In general, this resume reset will be handled in the manner described in the preceding paragraph for the modem ring. At block 2183, it will be determined that the lid is now closed, and therefore the resume sequence will be terminated and at block 2184 the system will return to the suspend mode in order to wait for a further resume reset caused by subsequent raising of the lid.

Although certain preferred embodiments of the invention have been disclosed and described in detail for illustrative purposes, it will be recognized that there are variations and modifications of these embodiments, including the rearrangement of parts and data formats, which lie within the scope of the appended claims.

## Claims

1. A computer system (2010) comprising a CPU (2011) and a control circuit for causing said computer system to enter from a normal power state into a reduced power state in response to at least one predetermined event, at the same time causing said CPU to save the status of said computer system, **characterized in that** said CPU (2011), in addition to a normal mode of operation, has a protected mode of operation, said normal and protected modes of operation being defined solely by said CPU and selected by an application program running on said computer system (2010) during a condition when said computer system is operating in said normal power state, and that said control circuit is operable to cause said CPU to save the status of said computer system and to enter a reduced power state from said normal power state when said CPU is operating in the protected mode in response to said at least one predetermined event independent of said application program.

2. The computer system as recited in claim 1, further **characterized in that** said control circuit forces said CPU (2011) into a normal mode of operation when said at least one predetermined event occurs when said CPU (2011) is operating in a protected mode of operation.

3. The computer system as recited in claim 2, further **characterized in that** said control circuit causes said CPU (2011) to resume normal power state from said reduced power state in response to a predetermined resume signal.

4. The computer system as recited in claim 3, further **characterized by** said control circuit being configured to return said CPU (2011) to said protected mode of operation upon resuming a normal power state after being in a reduced power state.

5. The computer system as recited in claim 2, further **characterized in that** said control circuit (2011) is configured to store the state of any application programs running on said CPU (2011) running in said protected mode of operation before entering said reduced power state.

6. The computer system as recited in claim 5 further **characterized in that** said control circuit is configured to return said CPU (2011) to said protected mode of operation in response to a predetermined event and to the same state in the application program prior to the CPU (2011) entering said reduced power state.

7. The computer system as recited in claim 1, further **characterized in that** at least one of said one or more predetermined events is user configurable.

8. The computer system as recited in claim 1, further **characterized in that** said one or more predetermined events include at least one hardware signal.

9. The computer system as recited in claim 8, further **characterized in that** it includes a switch (2016,2068) having a first condition and a second condition and in the first condition causing the computer system to enter a reduced power state.

10. The computer system as recited in claim 3, further **characterized in that** said predetermined resume signal is a hardware signal.

11. The computer system as recited in claim 10, further **characterized in that** said computer system includes a switch (2016, 2068) having a first condition and a second condition and in the second condition generates said predetermined resume signal.

12. The computer system as recited in claim 1, further **characterized in that** one of said predetermined events includes a software signal (2039).

13. The computer system as recited in claim 1, further **characterized in that** said control circuit is configured to vary the clock speed of the CPU (2011) under predetermined conditions.

14. The computer system as recited in claim 1, further **characterized in that** it includes a hard drive (2023) and said control circuit is configured to delay entry into a reduced power state until said hard drive (2023) has completed its current task.

15. The computer system as recited in claim 14, further **characterized in that** said control circuit is configured to cause power to be removed from said hard drive (2023) in a reduced power state.

## Patentansprüche

1. Computersystem (2010) mit einer CPU (2011) und einer Steuerschaltung, um das Computersystem dazu zu veranlassen, in Reaktion auf mindestens ein vorbestimmtes Ereignis von einem Zustand mit normaler Leistung in einen Zustand mit verminderter Leistung einzutreten, wobei gleichzeitig dafür gesorgt wird, dass die CPU den Status des Computersystems sichert, **dadurch gekennzeichnet, dass** die CPU (2011) zusätzlich zu einer normalen Betriebsart eine geschützte Betriebsart hat, wobei die normale und die geschützte Betriebsart ausschließlich durch die CPU definiert und durch ein Anwendungsprogramm ausgewählt werden, das unter einer Bedingung, bei der das Computersystem in einem Zustand mit normaler Leistung arbeitet, auf dem Computersystem (2010) läuft, und dass die Steuerschaltung betätigt werden kann, um die CPU dazu zu veranlassen, den Status des Computersystems zu sichern und von dem Zustand mit normaler Leistung in einen Zustand mit verminderter Leistung einzutreten, wenn die CPU in dem geschützten Modus arbeitet, in Reaktion auf das mindestens eine vorbestimmte Ereignis unabhängig von dem Anwendungsprogramm.

2. Computersystem nach Anspruch 1, ferner **dadurch gekennzeichnet, dass** die Steuerschaltung die CPU (2011) in eine normale Betriebsart zwingt, wenn das mindestens eine vorbestimmte Ereignis stattfindet, wenn die CPU (2011) gerade in einer geschützten Betriebsart arbeitet.

3. Computersystem nach Anspruch 2, ferner **dadurch gekennzeichnet, dass** die Steuerschaltung die CPU (2011) dazu veranlasst, in Reaktion auf ein vorbestimmtes Wiederaufnahmesignal den Zustand mit normaler Leistung ausgehend von dem Zustand mit verminderter Leistung wiederaufzunehmen.

4. Computersystem nach Anspruch 3, ferner **dadurch gekennzeichnet, dass** die Steuerschaltung so konfiguriert ist, dass sie nach Wiederaufnahme eines Zustands mit normaler Leistung im Anschluss an einen Zustand mit verminderter Leistung die CPU (2011) wieder in die geschützte Betriebsart bringt.

5. Computersystem nach Anspruch 2, ferner **dadurch gekennzeichnet, dass** die Steuerschaltung (2011) so konfiguriert ist, dass sie vor Eintritt in den Zustand mit verminderter Leistung den Zustand von Anwendungsprogrammen, die auf der in der geschützten Betriebsart laufenden CPU (2011) laufen, speichert.

6. Computersystem nach Anspruch 5, ferner **dadurch gekennzeichnet, dass** die Steuerschaltung so konfiguriert ist, dass sie die CPU (2011) in Reaktion auf ein vorbestimmtes Ereignis wieder in die geschützte Betriebsart bringt und in denselben Zustand in dem Anwendungsprogramm, bevor die CPU (2011) in den Zustand mit verminderter Leistung eintritt.

7. Computersystem nach Anspruch 1, ferner **dadurch gekennzeichnet, dass** mindestens eines von dem einen oder mehreren vorbestimmten Ereignissen anwenderkonfigurierbar ist.

8. Computersystem nach Anspruch 1, ferner **dadurch gekennzeichnet, dass** das eine bzw. die mehreren vorbestimmten Ereignisse mindestens ein Hardwaresignal umfassen.

9. Computersystem nach Anspruch 8, ferner **dadurch gekennzeichnet, dass** es einen Schalter (2016, 2068) mit einem ersten Zustand und einem zweiten Zustand umfasst, wobei das Computersystem in dem ersten Zustand dazu veranlasst wird, in einen Zustand mit verminderter Leistung einzutreten.

10. Computersystem nach Anspruch 3, ferner **dadurch gekennzeichnet, dass** das vorbestimmte Wiederaufnahmesignal ein Hardwaresignal ist.

11. Computersystem nach Anspruch 10, ferner **dadurch gekennzeichnet, dass** das Computersystem einen Schalter (2016, 2068) mit einem ersten Zustand und einem zweiten Zustand umfasst, wobei in dem zweiten Zustand das vorbestimmte Wiederaufnahmesignal erzeugt wird.

12. Computersystem nach Anspruch 1, ferner **dadurch gekennzeichnet, dass** eines der vorbestimmten Ereignisse ein Softwaresignal (2039) umfasst.

13. Computersystem nach Anspruch 1, ferner **dadurch gekennzeichnet, dass** die Steuerschaltung so konfiguriert ist, dass sie die Taktfrequenz der CPU (2011) unter vorbestimmten Bedingungen verändert.

14. Computersystem nach Anspruch 1, ferner **dadurch gekennzeichnet, dass** es ein Festplattenlaufwerk (2023) umfasst und dass die Steuerschaltung so konfiguriert ist, dass sie den Eintritt in einen Zustand mit verminderter Leistung verzögert, bis das Festplattenlaufwerk (2023) seine aktuelle Aufgabe abgeschlossen hat.

15. Computersystem nach Anspruch 14, ferner **dadurch gekennzeichnet, dass** die Steuerschaltung so konfiguriert ist, dass sie veranlasst, dass in einem Zustand mit verminderter Leistung von dem Festplattenlaufwerk (2023) Energie abgezogen wird.

## Revendications

1. Système informatique (2010) comprenant une unité centrale (2011) et un circuit de commande pour faire passer ledit système informatique d'un état de mise sous tension normale à un état de mise sous tension réduite en réponse à au moins un événement prédéterminé, amenant simultanément ladite unité centrale à sauvegarder l'état dudit système informatique, **caractérisé en ce que** ladite unité centrale (2011), en plus d'un mode de fonctionnement normal, a un mode de fonctionnement protégé, lesdits modes de fonctionnement normal et protégé étant définis exclusivement par ladite unité centrale et sélectionnés par un programme d'application exécuté dans ledit système informatique (2010) pendant que ledit système informatique fonctionne dans ledit état de mise sous tension normale, et **en ce que** ledit circuit de commande sert à amener ladite unité centrale à sauvegarder l'état dudit système informatique et à passer à un état de mise sous tension réduite par rapport à l'état de mise sous tension normale lorsque ladite unité centrale fonctionne dans le mode protégé en réponse audit au moins un événement prédéterminé indépendant dudit programme d'application.

2. Système informatique selon la revendication 1, **caractérisé en outre en ce que** ledit circuit de commande fait passer ladite unité centrale (2010) en mode de fonctionnement normal lorsque ledit au moins un événement prédéterminé survient cependant que ladite unité centrale (2011) fonctionne dans un mode de fonctionnement protégé.

3. Système informatique selon la revendication 2, **caractérisé en outre en ce que** ledit circuit de commande amène ladite unité centrale (2011) à revenir dans l'état de mise sous tension normale à partir dudit état de mise sous tension réduite en réponse à un signal de reprise prédéterminé.

4. Système informatique selon la revendication 3, **caractérisé en outre en ce que** ledit circuit de commande est configuré pour faire revenir ladite unité centrale (2011) dans ledit mode de fonctionnement protégé en retrouvant un état de mise sous tension normale après avoir été dans un état de mise sous tension réduite.

5. Système informatique selon la revendication 2, **caractérisé en outre en ce que** ledit circuit de commande (2011) est configuré pour enregistrer l'état de n'importe quels programmes d'applications en cours d'exécution dans ladite unité centrale (2011) fonctionnant dans ledit mode de fonctionnement protégé avant l'arrivée dans ledit état de mise sous tension réduite.

6. Système informatique selon la revendication 5, **caractérisé en outre en ce que** ledit circuit de commande est configuré pour faire revenir ladite unité centrale (2011) dans ledit mode de fonctionnement protégé en réponse à un événement prédéterminé et au même état du programme d'application que celui dans lequel était l'unité centrale (2011) avant de passer audit état de mise sous tension réduite.

7. Système informatique selon la revendication 1, **caractérisé en outre en ce qu'**au moins un desdits un ou plusieurs événements prédéterminés peut être configuré par l'utilisateur.

8. Système informatique selon la revendication 1, **caractérisé en outre en ce que** lesdits un ou plusieurs événements prédéterminés comportent au moins un signal concernant le matériel.

9. Système informatique selon la revendication 8, **caractérisé en outre en ce qu'**il comprend un commutateur (2016, 2068) ayant un premier état et un deuxième état et provoquant, dans le premier état, le passage du système informatique à un état de mise sous tension réduite.

10. Système informatique selon la revendication 3, **caractérisé en outre en ce que** ledit signal prédéterminé de reprise est un signal concernant le matériel.

11. Système informatique selon la revendication 10, **caractérisé en outre en ce que** ledit système informatique comprend un commutateur (2016, 2068) ayant un premier état et un deuxième état et, dans le deuxième état, génère ledit signal prédéterminé de reprise.

12. Système informatique selon la revendication 1, **caractérisé en outre en ce que** un desdits événements prédéterminés comporte un signal (2039) concernant le logiciel.

13. Système informatique selon la revendication 1, **caractérisé en outre en ce que** ledit circuit de commande est configuré pour modifier dans des conditions prédéterminées la fréquence d'horloge de l'unité centrale (2011).

14. Système informatique selon la revendication 1, **caractérisé en outre en ce qu'**il comprend une unité de disque dur (2023) et ledit circuit de commande est configuré pour retarder l'arrivée dans un état de mise sous tension réduite jusqu'à ce que ladite unité de disque dur (2023) ait terminé sa tâche en cours.

15. Système informatique selon la revendication 14, **caractérisé en outre en ce que** ledit circuit de commande est configuré pour provoquer la suppression de l'alimentation électrique de ladite unité de disque dur (2023) dans un état de mise sous tension réduite.
